# EUROPEAN PATENT APPLICATION

(11) **EP 4 808 125 A1**
(43) Date of publication of application: **16.09.2026**
(21) Application number: 24888951.1
(22) Date of filing: 14.10.2024
(51) Int. Cl.: H04N 19/593, H04N 19/11, H04N 19/105, H04N 19/176, H04N 19/119, H04N 19/70

(54) **IMAGE DECODING METHOD AND APPARATUS USING INTRA PREDICTION, AND IMAGE ENCODING METHOD AND APPARATUS USING INTRA PREDICTION**

(30) Priority: 09.11.2023 KR 20230154784; 03.04.2024 KR 20240045508
(71) Applicant: Samsung Electronics Co., Ltd., Suwon-si, Gyeonggi-do 16677 (KR)
(72) Inventor: PARK, Jeeyoon, Suwon-si, Gyeonggi-do 16677 (KR); PARK, Minsoo, Suwon-si, Gyeonggi-do 16677 (KR); PARK, Minwoo, Suwon-si, Gyeonggi-do 16677 (KR); CHOI, Kwangpyo, Suwon-si, Gyeonggi-do 16677 (KR)
(74) Representative: Appleyard Lees IP LLP
(86) International application number: PCT/KR2024/015454
(87) International publication number: WO 2025/100757

(57) **Abstract**

Disclosed is an image decoding method according to an embodiment, the method comprising the steps of: identifying a first sample set and a second sample set reconstructed prior to the current block; according to each of a plurality of directional modes, performing intra prediction using any one of the first sample set and the second sample set as a reference sample set to acquire a plurality of prediction sample sets corresponding to the other one of the first sample set and the second sample set; determining a directional mode for the current block from among the plurality of directional modes on the basis of cost values corresponding to the result of comparing each of the plurality of prediction sample sets with the other one of the first sample set and the second sample set; and reconstructing the current block by performing intra prediction on the current block according to the determined directional mode.

## Description

### Technical Field

The present disclosure relates to the field of image encoding and decoding, and more particularly, to an apparatus for encoding and decoding images by using intra prediction.

### Background Art

In image encoding and decoding, an image is split into blocks, and each of the blocks may be predictively encoded and predictively decoded through inter prediction or intra prediction.

Inter prediction may be a technique for compressing an image by removing temporal redundancy between images. In inter prediction, blocks of a current image may be predicted by using a reference image. A reference block most similar to a current block may be searched within a certain search range within the reference image. The current block may be predicted based on the reference block, and a predicted block generated as a result of the prediction may be subtracted from the current block so as to generate a residual block.

In standards such as H.264 Advanced Video Coding (AVC) and High Efficiency Video Coding (HEVC), in order to predict a motion vector of the current block, previously-encoded blocks adjacent to the current block or motion vectors of blocks included in a previously-encoded image may be used as a motion vector predictor of the current block. A motion vector difference, which is a difference between the motion vector of the current block and the motion vector predictor, may be signaled toward a decoder through a certain method.

Intra prediction may be a technology of compressing an image by removing spatial redundancy within the image. In intra prediction, a predicted block may be generated based on peripheral pixels of the current block, according to an intra prediction mode. In addition, the predicted block may be subtracted from the current block so as to generate a residual block. The intra prediction mode used for generating the predicted block may be signaled toward a decoder through a certain method.

The residual block generated through inter prediction or intra prediction may be transferred and quantized and then transmitted to the decoder. The decoder may dequantize and inversely transform the residual block, and combine the predicted block of the current block with the residual block to reconstruct the current block. The decoder may, in certain cases, filter the reconstructed current block to remove artifacts within the reconstructed current block.

### Disclosure of Invention

### Solution to Problem

An image decoding method according to an embodiment may include identifying a first sample set and a second sample set reconstructed before a current block.

The image decoding method according to an embodiment may include performing intra prediction by using any one of the first sample set and the second sample set as a reference sample set according to each of a plurality of directional modes to obtain a plurality of prediction sample sets corresponding to the other sample set.

The image decoding method according to an embodiment may include determining a directional mode for the current block among the plurality of directional modes based on cost values corresponding to comparison results between each of the plurality of prediction sample sets and the other sample set.

The image decoding method according to an embodiment may include reconstructing the current block by performing intra prediction on the current block according to the determined directional mode.

An image encoding method according to an embodiment may include identifying a first sample set and a second sample set encoded before a current block.

The image encoding method according to an embodiment may include performing intra prediction by using any one of the first sample set and the second sample set as a reference sample set according to each of a plurality of directional modes to obtain a plurality of prediction sample sets corresponding to the other sample set.

The image encoding method according to an embodiment may include determining a directional mode for the current block among the plurality of directional modes based on cost values corresponding to comparison results between each of the plurality of prediction sample sets and the other sample set.

The image encoding method according to an embodiment may include encoding the current block by performing intra prediction on the current block according to the determined directional mode.

A computer-readable recording medium according to an embodiment may record a bitstream including an encoding result of a current block.

In an embodiment, the encoding result of the current block may be generated by identifying a first sample set and a second sample set encoded before the current block.

In an embodiment, the encoding result of the current block may be generated by performing intra prediction by using any one of the first sample set and the second sample set as a reference sample set according to each of a plurality of directional modes to obtain a plurality of prediction sample sets corresponding to the other sample set.

In an embodiment, the encoding result of the current block may be generated by determining a directional mode for the current block among the plurality of directional modes based on cost values corresponding to comparison results between each of the plurality of prediction sample sets and the other sample set.

In an embodiment, the encoding result of the current block may be generated by performing intra prediction on the current block according to the determined directional mode.

An image decoding apparatus according to an embodiment may include at least one memory storing at least one instruction; and at least one processor.

In an embodiment, the at least one processor may be configured to identify a first sample set and a second sample set reconstructed before the current block.

In an embodiment, the at least one processor may be configured to perform intra prediction by using any one of the first sample set and the second sample set as a reference sample set according to each of a plurality of directional modes to obtain a plurality of prediction sample sets corresponding to the other sample set.

In an embodiment, the at least one processor may be configured to determine a directional mode for the current block among the plurality of directional modes based on cost values corresponding to comparison results between each of the plurality of prediction sample sets and the other sample set.

In an embodiment, the at least one processor may be configured to reconstruct the current block by performing intra prediction on the current block according to the determined directional mode.

An image encoding apparatus according to an embodiment may include at least one memory storing at least one instruction; and at least one processor.

In an embodiment, the at least one processor may be configured to identify a first sample set and a second sample set encoded before the current block.

In an embodiment, the at least one processor may be configured to perform intra prediction by using any one of the first sample set and the second sample set as a reference sample set according to each of a plurality of directional modes to obtain a plurality of prediction sample sets corresponding to the other sample set.

In an embodiment, the at least one processor may be configured to determine a directional mode for the current block among the plurality of directional modes based on cost values corresponding to comparison results between each of the plurality of prediction sample sets and the other sample set.

In an embodiment, the at least one processor may be configured to encode the current block by performing intra prediction on the current block according to the determined directional mode.

### Brief Description of Drawings

FIG. 1 is a block diagram of an image decoding apparatus according to an embodiment.
FIG. 2 is a block diagram of an image encoding apparatus according to an embodiment.
FIG. 3 shows a process of determining at least one coding unit by splitting a current coding unit, according to an embodiment.
FIG. 4 shows a process of determining at least one coding unit by splitting a non-square current coding unit, according to an embodiment.
FIG. 5 shows a process of splitting a coding unit based on at least one of block shape information and split shape mode information, according to an embodiment.
FIG. 6 shows a method for determining a certain coding unit among odd-numbered coding units, according to an embodiment.
FIG. 7 shows an order in which a plurality of coding units are processed, when a plurality of coding units are determined by splitting a current coding unit, according to an embodiment.
FIG. 8 shows a process of determining that the current coding unit is split into odd-numbered coding units, when the coding units cannot be processed in a certain order, according to an embodiment.
FIG. 9 shows a process of determining at least one coding unit by splitting a first coding unit, according to an embodiment.
FIG. 10 shows that shapes into which the first coding unit may be split are limited when a non-square second coding unit determined by splitting the first coding unit satisfies a certain condition, according to an embodiment.
FIG. 11 shows a process of splitting a square coding unit, when split shape mode information cannot indicate a split into a coding unit in the form of four squares, according to an embodiment.
FIG. 12 shows that a processing order among a plurality of coding units may vary depending on the splitting process of the coding units, according to an embodiment.
FIG. 13 shows a process of, when a coding unit is recursively split so that a plurality of coding units are determined, determining depths of the coding units as shapes and sizes of the coding units change, according to an embodiment.
FIG. 14 shows part indices for distinguishing between a depth and a coding unit which may be determined according to shapes and sizes of coding units, according to an embodiment.
FIG. 15 shows that a plurality of coding units are determined according to a plurality of certain data units included in a picture, according to an embodiment.
FIG. 16 shows coding units that may be determined for each picture, when a combination of shapes into which a coding unit may be split varies for each picture, according to an embodiment.
FIG. 17 shows various shapes of coding units that may be determined based on split shape mode information represented as a binary code, according to an embodiment.
FIG. 18 shows other shapes of coding units that may be determined based on split shape mode information represented as a binary code, according to an embodiment.
FIG. 19 is a diagram illustrating a block diagram of an image encoding and decoding system that performs loop filtering, according to an embodiment.
FIG. 20 is a block diagram illustrating a configuration of an image decoding apparatus according to an embodiment.
FIG. 21 is a diagram for describing an intra sub-partition mode according to an embodiment.
FIG. 22 is a diagram for describing a multiple reference line mode according to an embodiment.
FIG. 23 is a diagram illustrating types of intra prediction modes according to an embodiment.
FIG. 24 is a diagram illustrating sample sets required for deriving an intra prediction mode, according to an embodiment.
FIG. 25A is a diagram for describing a method of calculating a cost value corresponding a directional mode of a first group, according to an embodiment.
FIG. 25B is a diagram for describing a method of calculating a cost value corresponding a directional mode of the first group, according to an embodiment.
FIG. 26A is a diagram for describing a method of calculating a cost value corresponding a directional mode of a second group, according to an embodiment.
FIG. 26B is a diagram for describing a method of calculating a cost value corresponding a directional mode of the second group, according to an embodiment.
FIG. 27A is a diagram for describing a method of calculating a cost value corresponding a directional mode of a third group, according to an embodiment.
FIG. 27B is a diagram for describing a method of calculating a cost value corresponding a directional mode of the third group, according to an embodiment.
FIG. 28 is a diagram for describing a method of calculating a cost value corresponding a horizontal mode, according to an embodiment.
FIG. 29 is a diagram for describing a method of calculating a cost value corresponding a vertical mode, according to an embodiment.
FIG. 30 is a diagram for describing a method of, when some samples required for deriving the intra prediction mode are unavailable, determining sample values of the unavailable samples, according to an embodiment.
FIG. 31 is a diagram illustrating sample sets required for deriving the intra prediction mode, when the multiple reference line mode is applied to the current block, according to an embodiment.
FIG. 32 is a diagram illustrating sample sets required for deriving the intra prediction mode, according to an embodiment, when a right block of the current block is reconstructed before the current block.
FIG. 33 is a diagram illustrating sample sets required for deriving the intra prediction mode, according to an embodiment, when left and right blocks of the current block are reconstructed before the current block.
FIG. 34A is a diagram for describing a process of, when the current block corresponds to sub-blocks into which an upper block is split, deriving intra prediction modes of each of the sub-blocks into which the upper block is split, according to an embodiment.
FIG. 34B is a diagram for describing a process of, when the current block corresponds to sub-blocks into which an upper block is split, deriving intra prediction modes of each of the sub-blocks into which the upper block is split, according to an embodiment.
FIG. 35 is a diagram for describing a method of reconstructing the current block through intra prediction using reference samples, according to an embodiment.
FIG. 36 is a diagram illustrating a syntax structure related to the intra prediction mode of a luma block, according to an embodiment.
FIG. 37 is a diagram illustrating a syntax structure related to the intra prediction mode of a luma block, according to an embodiment.
FIG. 38 is a diagram illustrating a syntax structure related to the intra prediction mode of a luma block, according to an embodiment.
FIG. 39 is a diagram illustrating a syntax structure related to the intra prediction mode of a luma block, according to an embodiment.
FIG. 40 is a diagram illustrating a syntax structure related to the intra prediction mode of a luma block, according to an embodiment.
FIG. 41 is a diagram illustrating a syntax structure related to the intra prediction mode of a chroma block, according to an embodiment.
FIG. 42 is a diagram illustrating a syntax structure related to the intra prediction mode of a chroma block, according to an embodiment.
FIG. 43 is a flowchart of an image decoding method according to an embodiment.
FIG. 44 is a block diagram illustrating a configuration of an image encoding apparatus according to an embodiment.
FIG. 45 is a flowchart of an image encoding method according to an embodiment.

### Best Mode for Carrying out the Invention

An image decoding method according to an embodiment may include identifying a first sample set and a second sample set reconstructed before a current block.

The image decoding method according to an embodiment may include performing intra prediction by using any one of the first sample set and the second sample set as a reference sample set according to each of a plurality of directional modes to obtain a plurality of prediction sample sets corresponding to the other sample set.

The image decoding method according to an embodiment may include determining a directional mode for the current block among the plurality of directional modes based on cost values corresponding to comparison results between each of the plurality of prediction sample sets and the other sample set.

The image decoding method according to an embodiment may include reconstructing the current block by performing intra prediction on the current block according to the determined directional mode.

### Mode for the Invention

The present disclosure may have various modifications and various embodiments, and embodiments are illustrated in the drawings and described in detail through the detailed description. However, this is not intended to be limiting to the embodiments of the present disclosure, and the present disclosure may include all modifications, equivalents, or substitutes falling within the spirit and technical scope of various embodiments.

In describing the embodiments, if it is determined that a detailed description of a related known technology may unnecessarily obscure the gist of the present disclosure, the detailed description may be omitted. Additionally, numbers used in the course of describing the embodiments (e.g., first, second, etc.) may correspond to identification symbols for distinguishing one component from another.

In this disclosure, the expression "at least one of a, b or c" may refer to "a", "b", "c", "a and b", "a and c", "b and c", "all of a, b and c", or variations thereof.

In the present disclosure, when a component is referred to as being "connected" to another component, the component may be directly connected or connected to the other component, but unless there is a specific description to the contrary, the component may also be connected or connected via another component in between.

In the present disclosure, components expressed as "unit", "module", etc. may be two or more components combined into one component, or one component may be split into two or more detailed components. In addition, each component described below may additionally perform some or all of the functions performed by other components in addition to its own main function, and some of the main functions performed by each component may be performed by other components.

In the present disclosure, "image" may refer to a picture, a still image, a frame, a moving image composed of a plurality of consecutive still images, or a video.

In the present disclosure, "sample" may mean data to be processed as data assigned to a sampling location of an image. For example, a pixel within a frame in the spatial domain may correspond to a sample. A unit including a plurality of samples can be defined as a block.

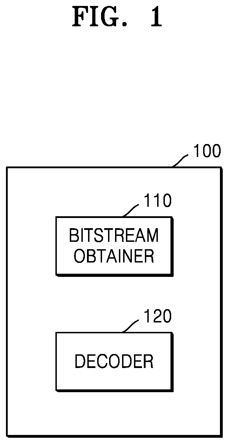

Hereinbelow, disclosed with reference to FIGS. 1 to 19 are an image encoding method and an apparatus thereof and an image decoding method and an apparatus thereof based on tree-structure coding units and transformation units.

FIG. 1 shows a block diagram of an image decoding apparatus 100 according to an embodiment.

The image decoding apparatus 100 may include a bitstream obtainer 110 and a decoder 120. The bitstream obtainer 110 and the decoder 120 may include at least one processor. In addition, the bitstream obtainer 110 and the decoder 120 may include memory storing instructions to be performed by the at least one processor.

The bitstream obtainer 110 may receive a bitstream. The bitstream may include information about an image encoded by an image encoding apparatus 200 described below. In addition, the bitstream may be transmitted from the image encoding apparatus 200. The image encoding apparatus 200 and the image decoding apparatus 100 may be connected via wire or wirelessly, and the bitstream obtainer 110 may receive a bitstream via wire or wirelessly. The bitstream obtainer 110 may receive a bitstream from storage media such as optical media, hard disk, or the like. The decoder 120 may reconstruct an image based on information obtained from the received bitstream. The decoder 120 may obtain, from the bitstream, a syntax element for reconstructing the image. The decoder 120 may reconstruct the image based on the syntax element.

To describe operation of the image decoding apparatus 100 in detail, the bitstream obtainer 110 may receive a bitstream.

The image decoding apparatus 100 may perform an operation of obtaining, from the bitstream, a bin string corresponding to a split shape mode of a coding unit. In addition, the image decoding apparatus 100 may perform an operation of determining a split rule of a coding unit. In addition, the image decoding apparatus 100 may perform an operation of splitting a coding unit into a plurality of coding units based on at least one of the bin string corresponding to the split shape mode and the split rule. In order to determine the split rule, the image decoding apparatus 100 may determine a first allowable range of a size of the coding unit according to a ratio of the width and height of the coding unit. In order to determine the split rule, the image decoding apparatus 100 may determine a second allowable range of a size of the coding unit according to the split shape mode of the coding unit.

Hereinbelow, splitting of the coding unit according to an embodiment of the present disclosure is described in detail.

First, one picture may be split into one or more slices or one or more tiles. One slice or one tile may be a sequence of one or more maximum coding units (coding tree units (CTUs)). Depending on the embodiment, one slice may include one or more tiles, and one slice may include one or more CTUs. A slice including a single tile or a plurality of tiles may be determined within the picture.

As a contrast to the CTU, there is a maximum coding block (coding tree block (CTB)). The CTB indicates a NxN block including NxN samples. Each color component may be split into one or more CTBs.

When a picture has three sample arrays (sample arrays for Y, Cr, and Cb components), the CTU is a unit that includes a CTB of luma samples and two CTBs of corresponding chroma samples, and syntax structures used to encode the luma samples and the chroma samples. When the picture is a monochrome picture, the CTU is a unit that includes a CTB of monochrome samples and syntax structures used to encode the monochrome samples. When the picture is a picture encoded as a color plane that is separated for each color component, the CTU is a unit that includes syntax structures used to encode the picture and samples of the picture.

One CTB may be split into MxN coding blocks including MxN samples (M and N are integers).

When the picture has sample arrays for Y, Cr, and Cb components, a coding unit (CU) is a unit that includes a coding block of luma samples, two coding blocks of the corresponding chroma samples, and syntax structures used to encode the luma samples and the chroma samples. When the picture is a monochrome picture, the CU is a unit that includes a coding block of monochrome samples and syntax structures used to encode the monochrome samples. When the picture is a picture encoded as a color plane that is separated for each color component, the CU is a unit that includes syntax structures used to encode the picture and samples of the picture.

As described above, the CTB and the CTU are distinct concepts, and the coding block and the CU are distinct concepts. That is, the CU (or CTU) indicates a data structure that includes a coding block (or CTB) including the corresponding sample and a syntax structure corresponding thereto. However, one of ordinary skill in the art can understand that the CU (or CTU) or the coding block (or CTB) indicates a block of a certain size including a certain number of samples. Therefore, in the specification below, the CTB and the CTU, or the coding block or the CU are described without distinction, unless there are special circumstances.

An image may be split into CTUs. A size of the CTU may be determined based on information obtained from a bitstream. A shape of the CTU may be a square of the same size. However, the disclosure is not limited thereto.

For example, information about a maximum size of a luma coding block may be obtained from the bitstream. For example, the maximum size of the luma coding block indicated by the information about the maximum size of the luma coding block may be one of 4x4, 8x8, 16x16, 32x32, 64x64, 128x128, and 256x256.

For example, information about a difference between the maximum size of the luma coding block that can be split into two and the size of the luma block may be obtained from the bitstream. The information about the size difference between the luma blocks may indicate a size difference between the luma CTU and the maximum luma coding blocks that can be split into two. Accordingly, when the information about the maximum size of the luma coding block that can be split into two and the information about the size difference between the luma blocks, which are obtained from the bitstream, are combined with each other, a size of the luma CTU may be determined. When the size of the luma CTU is used, a size of a chroma CTU may be determined. For example, if the Y:Cb:Cr ratio is 4:2:0 according to the color format, the size of the chroma block may be half the size of the luma block, and similarly, the size of the chroma CTU may be half the size of the luma CTU.

According to an embodiment, information about the maximum size of the luma coding block capable of binary splitting is obtained from the bitstream, and thus the maximum size of the luma coding block capable of binary splitting may be variably determined. Unlike the above, the maximum size of the luma coding block capable of ternary splitting may be fixed. For example, the maximum size of the luma coding block capable of ternary splitting in the picture I may be 32x32, and the maximum size of the luma coding block capable of ternary splitting in the P picture or B picture may be 64x64.

In addition, the CTU may be hierarchically split into CUs based on the split shape mode information obtained from the bitstream. As the split shape mode information, information indicating whether quad splitting is performed, information indicating whether multi-splitting is performed, split direction information, and split type information may be obtained from the bitstream.

For example, the information indicating whether quad splitting is performed may indicate whether a current CU is to be quad split (QUAD_SPLIT) or not to be quad split.

When the current CU is not quad split, the information indicating whether multi-splitting is performed may indicate whether the current CU will not be split any further (NO_SPLIT) or will be binary/ternary split.

When the current CU is binary split or ternary split, the split direction information indicates whether the current CU is split in one of the horizontal direction or the vertical direction.

When the current CU is split in the horizontal or vertical direction, the split type information indicates that the current CU is split into binary split or ternary split.

According to the split direction information and the split type information, the split mode of the current CU may be determined. A split mode when the current CU is binary split in the horizontal direction may be determined as binary horizontal split (SPLIT_BT_HOR), a split mode when the current CU is ternary split in the horizontal direction may be determined as ternary horizontal split (SPLIT_TT_HOR), a split mode when the current CU is binary split in the vertical direction may be determined as binary vertical split (SPLIT_BT_VER), and a split mode when the CU is ternary split in the vertical direction may be determined as ternary vertical split (SPLIT_TT_VER).

The image decoding apparatus 100 may obtain split shape mode information from the bitstream from a single bin string. Shapes of bitstreams received by the image decoding apparatus 100 may include fixed length binary code, unary code, truncated unary code, predetermined binary code, and the like. The bin string indicates information as a sequence of binary digits. The bin string may consist of at least one bit. The image decoding apparatus 100 may obtain split shape mode information corresponding to the bin string based on the split rule. The image decoding apparatus 100, based on one bin string, may determine whether to quad-split the CU, whether or not to split it, or a split direction and a split type.

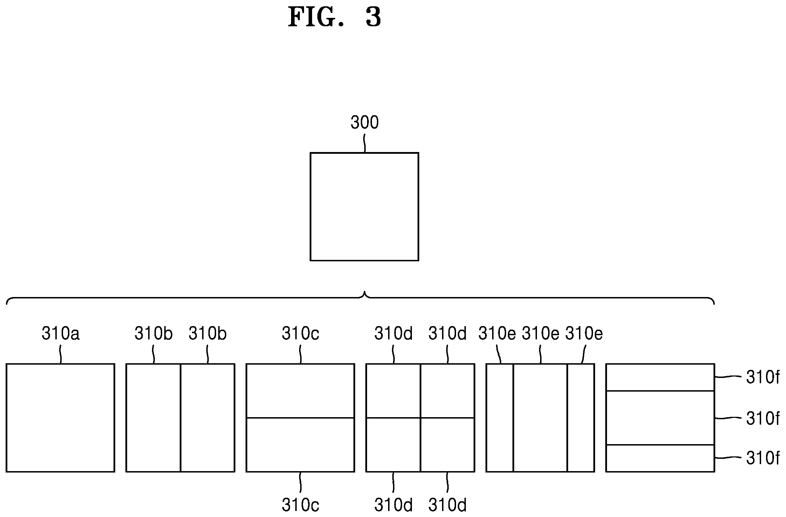

The CU may be less than or equal to the CTU. For example, because the CTU is also a CU having the maximum size, and thus the CTU is one of the CUs. When the split shape mode information for the CTU indicates that it is not split, the CU determined from the CTU have the same size as the CTU. When the split shape mode information for the CTU indicates that it is split, the CTU may be split into CUs. In addition, when the split shape mode information for the CU indicates split, the CUs may be split into CUs of smaller sizes. However, the splitting of the image is not limited thereto, and the CTU and the CU may not be distinguished. The splitting of the CU is described in greater detail with reference to FIGS. 3 to 16.

In addition, one or more predicted blocks for prediction may be determined from a CU. The predicted block may be equal to or less than the CU. In addition, one or more transform blocks for transformation may be determined from the CU. The transform block may be equal to or less than the CU.

Shapes and sizes of the transform block and the predicted block may be unrelated.

In another embodiment, prediction may be performed by using a CU as a predicted block. In addition, transformation may be performed by using a CU as a transform block.

The splitting of the CU is described in greater detail with reference to FIGS. 3 to 16. A current block and a peripheral block of the present disclosure may indicate one of a CTU, a CU, a predicted block, and a transform block. In addition, the current block or the current CU is a block in which decoding or encoding is currently performed, or a block in which splitting is currently performed. The peripheral block may be a block that was reconstructed before the current block. The peripheral block may be spatially or temporally adjacent to the current block. The peripheral block may be located in one of the lower left side, left side, upper left side, upper side, upper right side, right side, and lower right side of the current block.

FIG. 3 shows a process in which the image decoding apparatus 100 splits the current CUs and determines at least one CU, according to an embodiment.

The block shape may include 4Nx4N, 4Nx2N, 2Nx4N, 4NxN, Nx4N, 32NxN, Nx32N, 16NxN, Nx16N, 8NxN, or Nx8N. Here, N may be a positive integer. The block shape information is information indicating at least one a shape, direction, width and height ratio, or size of the CU.

The shape of the CU may include square and non-square. When the lengths of the width and height of the CU are the same (i.e., when the block shape of the CU is 4Nx4N), the image decoding apparatus 100 may determine the block shape information of the CU as square. The image decoding apparatus 100 may determine the shape of the CU as non-square.

When the lengths of the width and height of the CU are different, (i.e., when the block shape of the CU is 4Nx2N, 2Nx4N, 4NxN, Nx4N, 32NxN, Nx32N, 16NxN, Nx16N, 8NxN, or Nx8N), the image decoding apparatus 100 may determine the block shape information of the CU as non-square. When the shape of the CU is non-square, the image decoding apparatus 100 may determine the ratio of the width and height in the block shape information of the CU as at least one of 1:2, 2:1, 1:4, 4:1, 1:8, 8:1, 1:16, 16:1, 1:32, and 32:1. In addition, based on the length of the width of the CU and the length of the height of the CU, the image decoding apparatus 100 may determine whether the CU is in the horizontal direction or the vertical direction. In addition, based on at least one of the length of the width of the CU, the length of the height of the CU, or the area of the CU, the image decoding apparatus 100 may determine the size of the CU.

According to an embodiment, the image decoding apparatus 100 may determine a shape of the CU by using the block shape information, and determine to which shape the CU is split, by using the split shape mode information. That is, depending on which block shape is indicated by the block shape information used by the image decoding apparatus 100, a split method of the CU indicated by the split shape mode information may be determined.

The image decoding apparatus 100 may obtain the split shape mode information from a bitstream. However, the disclosure is not limited thereto, and the image decoding apparatus 100 and the image encoding apparatus 200 may determine a pre-arranged split shape mode information based on the block shape information. The image decoding apparatus 100 may determine the pre-arranged split shape mode information for the CTU or the minimum CU. For example, the image decoding apparatus 100 may determine the split shape mode information as quad split for the CTU. In addition, the image decoding apparatus 100 may determine the split shape mode information as "not splitting" for the minimum CU. Specifically, the image decoding apparatus 100 may determine the size of the CTU as 256x256. The image decoding apparatus 100 may determine the pre-arranged split shape mode information as quad split. The quad split is a split shape mode that bisects both the width and height of the CU. The image decoding apparatus 100 may obtain the CU of a 128x128 size from the CTU of a 256x256 size based on the split shape mode information. In addition, the image decoding apparatus 100 may determine the size of the minimum CU as 4x4. The image decoding apparatus 100 may obtain the split shape mode information indicating "not splitting" for the minimum CU.

According to an embodiment, the image decoding apparatus 100 may use block shape information indicating that the current CU is a square. For example, depending on the split shape mode information, the image decoding apparatus 100 may determine whether to not split the square CU, whether to split it vertically, whether to split it horizontally, whether to split it into four CUs, and the like. Referring to FIG. 3, when block shape information of a current CU 300 does not indicate a square shape, the decoder 120 may not split a CU 310a having the same size as the current CU 300 according to split shape mode information indicating not splitting, or may determine split CUs 310b, 31c, 310d, 310e, 310f, etc. based on split shape mode information indicating a certain splitting method.

Referring to FIG. 3, the image decoding apparatus 100 may determine two CUs 310b obtained by splitting the current CU 300 in the vertical direction, based on split shape mode information indicating that it is vertically split, according to an embodiment. The image decoding apparatus 100 may determine two CUs 310c obtained by splitting the current CU 300 in the horizontal direction based on split shape mode information indicating that it is horizontally split. The image decoding apparatus 100 may determine four CUs 310d obtained by splitting the current CU 300 in the vertical direction and horizontal direction based on split shape mode information indicating that it is split vertically and horizontally. The image decoding apparatus 100 may determine three CUs 310e obtained by splitting the current CU 300 in the vertical direction, based on split shape mode information indicating that it is ternary split, according to an embodiment. The image decoding apparatus 100 may determine three CUs 310f obtained by splitting the current CU 300 in the horizontal direction based on split shape mode information indicating that it is ternary split. However, the splitting shape into which a square CU may be split shall not be construed to be limited to the shapes described above, and various shapes that may be indicated by split shape mode information may be included. Certain splitting shapes to which a square CU may be split are described below in detail through various embodiments.

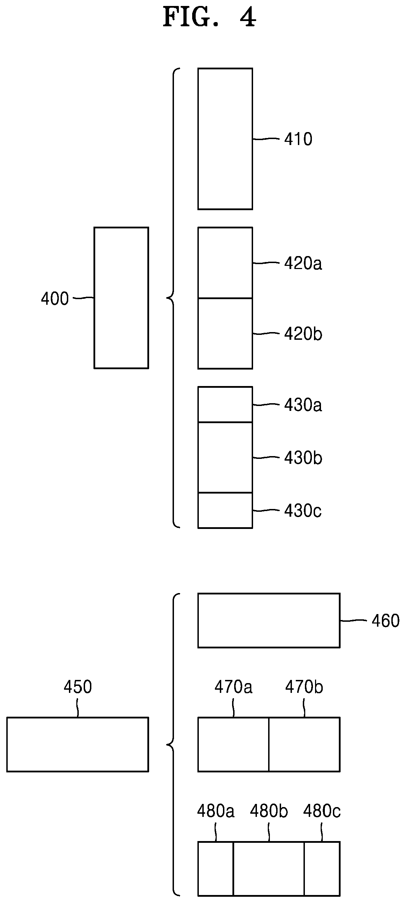

FIG. 4 shows a process in which the image decoding apparatus 100 determines at least one CU by splitting a non-square current CU, according to an embodiment.

According to an embodiment, the image decoding apparatus 100 may use block shape information indicating that the current CU is a non-square. The image decoding apparatus 100 may determine, according to the split shape mode information, whether to not split the non-square current CU or to split it by using a certain method. Referring to FIG. 4, when the block shape information of the current CU 400 or 450 indicates a non-square shape, the image decoding apparatus 100, according to the split shape mode information indicating that it is not split, may determine a CU 410 or 460 having the same size as the current CU 400 or 450, or determine CUs 420a, 420b, 430a, 430b, 430c, 470a, 470b, 480a, 480b, and 480c by performing splitting based on the split shape mode information indicating the certain splitting method. Certain splitting methods to which a non-square CU may be split are described below in detail through various embodiments.

According to an embodiment, the image decoding apparatus 100 may determine a shape in which a CU is split, by using split shape mode information, in which case the split shape mode information may indicate the number of at least one CU generated by splitting the CU. Referring to FIG. 4, when the split shape mode information indicates that the current CU 400 or 450 is split into two CUs, the image decoding apparatus 100 may determine two CUs 420a and 420b, or 470a and 470b included in the current CU by splitting the current CU 400 or 450 based on the split shape mode information.

According to an embodiment, when the image decoding apparatus 100 splits the non-square current CU 400 or 450 based on the split shape mode information, the image decoding apparatus 100 may split the current CU by considering a location of a long side of the non-square current CU 400 or 450. For example, the image decoding apparatus 100 may determine, by considering the shape of the current CU 400 or 450, a plurality of CUs by splitting the current CU 400 or 450 in a direction that splits the long side of the current CU 400 or 450.

According to an embodiment, when the split shape mode information indicates that a CU is split (ternary split) into odd-numbered blocks, the image decoding apparatus 100 may determine odd-numbered CUs included in the current CU 400 or 450. For example, when the split shape mode information indicates that the current CU 400 or 450 is split into three CUs, the image decoding apparatus 100 may split the current CU 400 or 450 into three CUs 430a, 430b, 430c, 480a, 480b, and 480c.

According to an embodiment, a ratio of a width and height of the current CU 400 or 450 may be 4:1 or 1:4. When the width and height ratio is 4:1, the length of the width is greater than the length of the height, and thus block shape information may be a horizontal direction. When the width and height ratio is 1:4, the length of the width is less than the length of the height, and thus block shape information may be a vertical direction. The image decoding apparatus 100 may determine to split the current CU into odd-numbered blocks, based on the split shape mode information. In addition, the image decoding apparatus 100 may determine a splitting direction of the current CU 400 or 450 based on the block shape information of the current CU 400 or 450. For example, when the current CU 400 is a vertical direction, the image decoding apparatus 100 may determine the CUs 430a, 430b, and 430c by splitting the current CU 400 in the horizontal direction. In addition, when the current CU 450 is a horizontal direction, the image decoding apparatus 100 may determine the CUs 480a, 480b, and 480c by splitting the current CU 450 in the vertical direction.

According to an embodiment, the image decoding apparatus 100 may determine odd-numbered CUs included in the current CU 400 or 450, and the sizes of the determined CUs may not all be the same. For example, the size of a certain CU 430b or 480b among the determined odd-numbered CUs 430a, 430b, 430c, 480a, 480b, and 480c may differ in size from other CUs 430a, 430c, 480a, and 480c. That is, CUs that may be determined by splitting the current CU 400 or 450 may have a plurality of types of sizes, and in some cases, the odd-numbered CUs 430a, 430b, 430c, 480a, 480b, and 480c may each have different sizes.

According to an embodiment, when the split shape mode information indicates that the CU is split into odd-numbered blocks, the image decoding apparatus 100 may determine odd-numbered CUs included in the current CU 400 or 450, and further, the image decoding apparatus 100 may place a certain restriction on at least one CU among the odd-numbered CUs generated by splitting. Referring to FIG. 4, the image decoding apparatus 100 may perform a decoding process on the CUs 430b and 480b located in the center among the three CUs 430a, 430b, 430c, 480a, 480b, and 480c generated by splitting the current CU 400 or 450, differently from the other CUs 430a, 430c, 480a, and 480c. For example, the image decoding apparatus 100 may restrict the CUs 430b and 480b located in the center from being split any further, unlike the other CUs 430a, 430c, 480a, and 480c, or may restrict the CUs 430b and 480b to be split only a certain number of times.

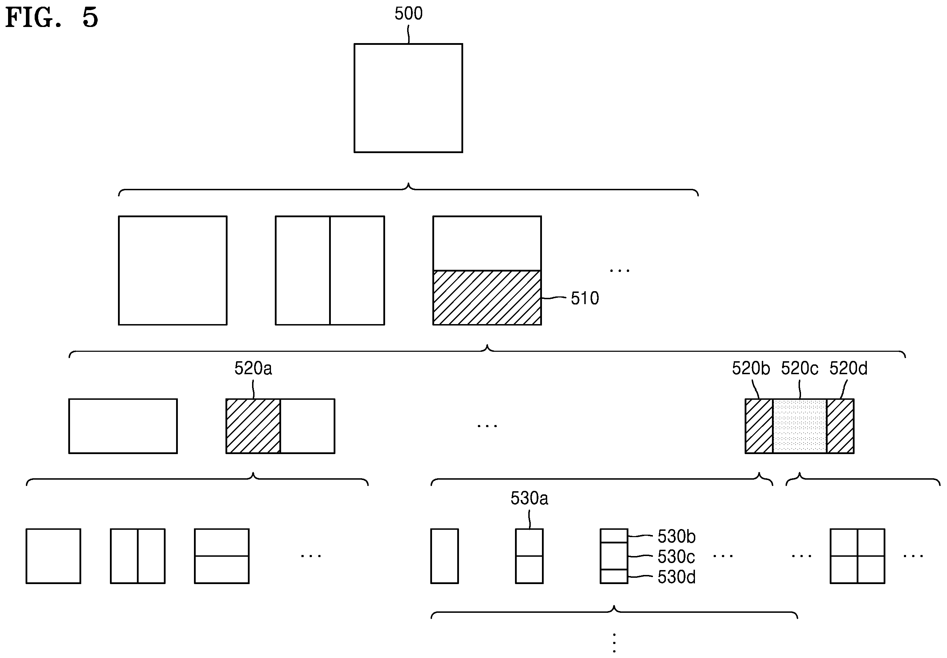

FIG. 5 shows a process in which the image decoding apparatus 100 splits a CU based on at least one of block shape information and split shape mode information, according to an embodiment.

According to an embodiment, the image decoding apparatus 100 may determine whether or not to split a first CU 500 having a square shape into CUs, based on at least one of the block shape information and the split shape mode information. According to an embodiment, when the split shape mode information indicates that the first CU 500 is split in the horizontal direction, the image decoding apparatus 100 may determine a second CU 510 by splitting the first CU 500 in the horizontal direction. The first CU, the second CU, and the third CU used according to an embodiment are terms used to understand the relationship before and after splitting between CUs. For example, when the first CU is split, the second CU may be determined, and when the second CU is split, the third CU may be determined. Hereinbelow, the relationship between the used first CU, second CU, and third CU may be construed to follow the feature described above.

According to an embodiment, the image decoding apparatus 100 may determine whether or not to split the determined second CU 510 into CUs based on the split shape mode information. Referring to FIG. 5, based on the split shape mode information, the image decoding apparatus 100 may split the non-square second CU 510 determined by splitting the first CU 500 into at least one third CU 520a, 520b, 520c, 520d, etc., or may not split the second CU 510. The image decoding apparatus 100 may obtain split shape mode information, the image decoding apparatus 100 may obtain a plurality of second CUs (e.g., 510) in various shapes by splitting the first CU 500 based on the obtained split shape mode information, and the second CU 510 may be split according to a method in which the first CU 500 is split, based on the split shape mode information. According to an embodiment, when the first CU 500 is split into the second CU 510 based on the split shape mode information for the first CU 500, the second CU 510 may also be split into the third CUs 520a, 520b, 520c, 520d, etc. based on the split shape mode information for the second CU 510. That is, the CU may be recursively split based on split shape mode information related to each CU. Accordingly, a square CU may be determined from a non-square CU, and such square CU may be recursively split so that a non-square CU may be determined.

Referring to FIG. 5, among odd-numbered three CUs 520b, 520c, and 520d determined by splitting the non-square second CU 510, a certain CU (e.g., a CU located in the center or a square CU) may be recursively split. According to an embodiment, the non-square third CU 520b, which is one of the odd-numbered third CUs 520b, 520c, and 520d, may be split in the horizontal direction and may be split into a plurality of fourth CUs. A non-square fourth CU 530b or 530d, which is one of the plurality of fourth CUs 530a, 530b, 530c, and 530d, may be further split into a plurality of CUs. For example, the non-square fourth CU 530b or 530d may be further split into odd-numbered CUs. A method that may be used for recursive splitting of CUs is described below in detail through various embodiments.

According to an embodiment, the image decoding apparatus 100 may split each of the third CUs 520a, 520b, 520c, 520d, etc. into CUs based on split shape mode information. In addition, the image decoding apparatus 100 may determine not to split the second CU 510, based on the split shape mode information. The image decoding apparatus 100 may split the non-square second CU 510 into odd-numbered third CUs 520b, 520c, and 520d according to an embodiment. The image decoding apparatus 100 may pose a certain restriction on a certain third CU among the odd-numbered third CUs 520b, 520c, and 520d. For example, the image decoding apparatus 100 may restrict the CU 520c located in the center among the odd-numbered third CUs 520b, 520c, and 520d to not be split any further or to be split a settable number of times.

Referring to FIG. 5, the image decoding apparatus 100 may restrict the CU 520c located in the center among the odd-numbered third CUs 520b, 520c, and 520d included in the non-square second CU 510 not to be split any further, to be split into a certain split shape (for example, to be split only into four CUs or to be split in a shape corresponding to a shape into which the second CU 510 is split), or to be split only a certain number of times (for example, to be split only n times, n>0). The above restrictions on the CU 520c located in the center are simply embodiments, and should not be construed to be limited to the above embodiments, but should be construed to include various restrictions that allow the CU 520c located in the center to be decoded differently from the other CUs 520b and 520d.

According to an embodiment, the image decoding apparatus 100 may obtain split shape mode information used to split the current CU, in a certain location within the current CU.

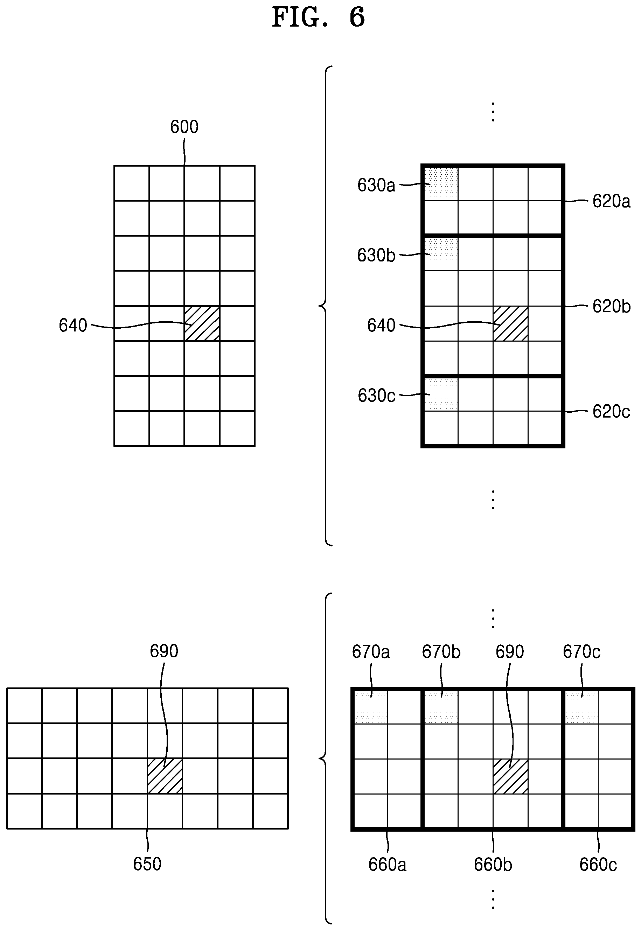

FIG. 6 illustrates a method for determining, by the image decoding apparatus 100, a certain CU among odd-numbered CUs.

Referring to FIG. 6, split shape mode information of the current CUs 600 and 650 may be obtained from a sample at a certain location (for example, samples 640 and 690 located in the center) among a plurality of samples included in the current CUs 600 and 650. However, a certain location within the current CU 600 at which at least one of such split shape mode information may be obtained should not be construed to be limited to the center location shown in FIG. 6, and it should be construed that the certain location may include various locations (for example, an uppermost end, a lowermost end, a left side, a right side, an upper left end, a lower left end, an upper right end, or a lower right end, etc.) that may be included in the current CU 600. The image decoding apparatus 100 may obtain split shape mode information obtained from a certain location and split or not split the current CU into CUs of various shapes and sizes.

According to an embodiment, when the current CU is split into a certain number of CUs, the image decoding apparatus 100 may select one of the CUs. A method for selecting one of a plurality of CUs may vary, and descriptions of such methods are described below in detail through various embodiments.

According to an embodiment, the image decoding apparatus 100 may split the current CU into a plurality of CUs, and determine a CU at a certain location.

According to an embodiment, in order to determine a CU located in the center among odd-numbered CUs, the image decoding apparatus 100 may use information indicating a location of each of the odd-numbered CUs. Referring to FIG. 6, the image decoding apparatus 100 may split the current CU 600 or the current CU 650 and determine odd-numbered CUs 620a, 620b, and 620c or odd-numbered CUs 660a, 660b, and 660c. The image decoding apparatus 100 may determine the center CU 620b or the center CU 660b by using information about the locations of the odd-numbered CUs 620a, 620b, and 620c or the odd-numbered CUs 660a, 660b, and 660c. For example, the image decoding apparatus 100 may determine the CUs 620a, 620b, and 620c based on information about a location of a certain sample included in the CUs 620a, 620b, and 620c, thereby determining the CU 620b located in the center. Specifically, the image decoding apparatus 100 may determine the locations of the CUs 620a, 620b, and 620c based on information indicating locations of samples 630a, 630b, and 630c at the upper left side of the CUs 620a, 620b, and 620c, thereby determining the CU 620b located in the center.

According to an embodiment, the information indicating the locations of the upper left samples 630a, 630b, and 630c respectively included in the CUs 620a, 620b, and 620c may include information about a location or coordinates of the CUs 620a, 620b, and 620c within a picture. According to an embodiment, the information about the locations of the upper left samples 630a, 630b, and 630c respectively included in the CUs 620a, 620b, and 620c may include information indicating widths or heights of the CUs 620a, 620b, and 620c included in the current CU 600, and such widths or heights may correspond to information indicating a difference in coordinates between the CUs 620a, 620b, and 620c within the picture. That is, the image decoding apparatus 100 may determine the CU 620b located in the center by directly using the information about the locations or coordinates of the CUs 620a, 620b, and 620c within the picture, or by using the information about the width or height of a CU corresponding to a value of difference between coordinates.

According to an embodiment, information indicating a location of the upper left sample 630a of the upper CU 620a may indicate (xa, ya) coordinates, information indicating a location of the upper left sample 530b of the center CU 620b may indicate (xb, yb) coordinates, and information indicating a location of the upper left sample 630c of the lower CU 620c may indicate (xc, yc) coordinates. The image decoding apparatus 100 may determine the center CU 620b by using the coordinates of the upper left samples 630a, 630b, and 630c respectively included in the CUs 620a, 620b, and 620c. For example, when the coordinates of the upper left samples 630a, 630b, and 630c are aligned in an ascending or descending order, the CU 620b including (xb, yb), which is coordinates of the sample 630b located in the center, may be determined as the CU located in the center among the CUs 620a, 620b, and 620c determined by splitting the current CU 600. However, the coordinates indicating the locations of the upper left samples 630a, 630b, and 630c may indicate coordinates indicating an absolute location within the picture. Further, with respect to the location of the upper left sample 630a of the upper CU 620a, (dxb, dyb) coordinates, which is information indicating a relative location of the upper left sample 630b of the center CU 620b, and coordinates (dxc, dyc), which is information indicating a relative location of the upper left sample 630c of the lower CU 620c may be used. In addition, a method of determining a CU of a certain location by using, as information indicating a location of a sample included in the CU, coordinates of the sample should not construed to be limited to the method described above, and the method should be construed as various arithmetic methods that may use the coordinates of the sample.

According to an embodiment, the image decoding apparatus 100 may split the current CU 600 into the plurality of CUs 620a, 620b, and 620c, and select a CU among the CUs 620a, 620b, and 620c according to a certain criterion. For example, the image decoding apparatus 100 may select the CU 620b having a different size among the CUs 620a, 620b, and 620c.

According to an embodiment, the image decoding apparatus 100 may determine a width or height of the respective CUs 620a, 620b, and 620c by using the (xa, ya) coordinates which is information indicating the location of the upper left sample 630a of the upper CU 620a, the (xb, yb) coordinates which is information indicating the location of the upper left sample 630c of the lower CU 620c, and the (xc, yc) coordinates which is information indicating the location of the upper left sample 630c of the lower CU 620c. The image decoding apparatus 100 may determine the sizes of the respective CUs 620a, 620b, and 620c by using (xa, ya), (xb, yb), and (xc, yc), which are coordinates indicating the locations of the CUs 620a, 620b, and 620c. According to an embodiment, the image decoding apparatus 100 may determine the width of the upper CU 620a as the width of the current CU 600. The image decoding apparatus 100 may determine the height of the upper CU 620a as yb-ya. According to an embodiment, the image decoding apparatus 100 may determine the width of the center CU 620b as the width of the current CU 600. The image decoding apparatus 100 may determine the height of the lower CU 620b as yc-yb. According to an embodiment, the image decoding apparatus 100 may determine the width or height of the lower CU by using the width or height of the current CU and the widths and heights of the upper CU 620a and the center CU 620b. The image decoding apparatus 100 may determine a CU having a size that is different from the sizes of the other CUs, based on the widths and heights of the determined CUs 620a, 620b, and 620c. Referring to FIG. 6, the image decoding apparatus 100 may determine, as a CU at a certain location, the center CU 620b having a size different from the sizes of the upper CU 620a and the lower CU 620c. However, since a process in which the image decoding apparatus 100 described above determines a CU having a size different from the sizes of the other CUs is merely an embodiment for determining a CU at a certain location by using the size of a CU determined based on sample coordinates, various processes may be used to determine a CU at a certain location by comparing the sizes of CUs determined according to certain sample coordinates.

The image decoding apparatus 100 may determine the widths or heights of the respective CUs 660a, 660b, and 660c by using (xd, yd) coordinates which is information indicating the location of an upper left sample 670a of the left CU 660a, (xe, ye) coordinates, which is information indicating the location of an upper left sample 670b of the center CU 660b, and (xf, yf) coordinates, which is information indicating the location of an upper left sample 670c of the right CU 660c. The image decoding apparatus 100 may determine the sizes of the respective CUs 660a, 660b, and 660c by using (xd, yd), (xe, ye), and (xf, yf), which are coordinates respectively indicating the locations of the CUs 660a, 660b, and 660c.

According to an embodiment, the image decoding apparatus 100 may determine the width of the left CU 660a as xe-xd. The image decoding apparatus 100 may determine the height of the left CU 660a as the height of the current CU 650. According to an embodiment, the image decoding apparatus 100 may determine the width of the center CU 660b as xf-xe. The image decoding apparatus 100 may determine the height of the center CU 660b as the height of the current CU 600. According to an embodiment, the image decoding apparatus 100 may determine the width or height of the right CU 660c by using the width or height of the current CU 650 and the widths and heights of the left CU 660a and the center CU 660b. The image decoding apparatus 100 may determine a CU having a size that is different from the sizes of the other CUs, based on the widths and heights of the determined CUs 660a, 660b, and 660c. Referring to FIG. 6, the image decoding apparatus 100 may determine, as a CU at a certain location, the center CU 660b having a size different from the sizes of the left CU 660a and the right CU 660c. However, because a process in which the image decoding apparatus 100 described above determines a CU having a size different from the sizes of the other CUs is merely an embodiment for determining a CU at a certain location by using the size of a CU determined based on sample coordinates, various processes may be used to determine a CU at a certain location by comparing the sizes of CUs determined according to certain sample coordinates.

However, the location of a sample considered to determine the location of a CU should not be construed to be limited to the upper left end described above, but it may be construed that information about the location of any sample included in the CU may be used.

According to an embodiment, the image decoding apparatus 100 may, by considering a shape of the current CU, select a CU at a certain location among odd-numbered CUs determined by splitting the current CU. For example, when the current CU has a non-square shape of which the width is greater than the height, the image decoding apparatus 100 may determine a CU at a certain location according to the horizontal direction. That is, the image decoding apparatus 100 may determine one of CUs differing in location in the horizontal direction, and place a restriction on the corresponding CU. When the current CU has a non-square shape of which the height is greater than the width, the image decoding apparatus 100 may determine a CU at a certain location according to the vertical direction. That is, the image decoding apparatus 100 may determine one of CUs differing in location in the vertical direction, and place a restriction on the corresponding CU.

According to an embodiment, in order to determine a CU located at a certain location among even-numbered CUs, the image decoding apparatus 100 may use information indicating a location of each of the even-numbered CUs. The image decoding apparatus 100 may determine even-numbered CUs by splitting (binary splitting) the current CU, and determine a CU at a certain location by using information about the locations of the even-numbered CUs. The specific process therefor may be a process corresponding to the above-described process of determining a CU at a certain location (for example, at the center location) among the odd-numbered CUs, and thus is omitted.

According to an embodiment, when a non-square current CU is split into a plurality of CUs, in order to determine a CU at a certain location among the plurality of CUs, certain information for the CU at the certain location may be used in the splitting process. For example, in order to determine a CU located in the center among the plurality of CUs into which the current CU is split, at least one of block shape information and split shape mode information stored in a sample included in the center CU may be used in the splitting process.

Referring to FIG. 6, the image decoding apparatus 100 may split the current CU 600 into a plurality of CUs 620a, 620b, and 620c based on the split shape mode information, and determine the CU 620b located in the center among the plurality of CUS 620a, 620b, and 620c. Further, the image decoding apparatus 100 may determine the CU 620b located in the center by considering a location at which the split shape mode information is obtained. That is, the split shape mode information of the current CU 600 may be obtained from a sample 640 located in the center of the current CU 600, and when the current CU 600 is split into the plurality of CUs 620a, 620b, and 620c based on the split shape mode information, the CU 620b including the sample 640 may be determined as the CU located in the center. However, information used for determining the CU located in the center should not be construed to be limited to split shape mode information, and various types of information may be used in the process of determining the CU located in the center.

According to an embodiment, certain information for identifying a CU at a certain location may be obtained from a certain sample included in the CU. Referring to FIG. 6 , in order to determine a CU at a certain location (for example, a CU located in the center among a plurality of CUs obtained by splitting) among the plurality of CUs 620a, 620b, and 620c determined by splitting the current CU 600, the image decoding apparatus 100 may use split shape mode information obtained from a sample at a certain location (for example, a sample located in the center of the current CU 600) within the current CU 600. That is, the image decoding apparatus 100 may determine the sample at the certain location by considering a block shape of the current CU 600, and the image decoding apparatus 100 may determine the CU 620b including a sample from which certain information (for example, split shape mode information) may be obtained among the plurality of CUs 620a, 620b, and 620c determined by splitting the current CU 600, so as to place a certain restriction. Referring to FIG. 6, according to an embodiment, the image decoding apparatus 100 may determine the sample 640 located in the center of the current CU 600 as a sample from which the certain information may be obtained, and the image decoding apparatus 100 may place a certain restriction on the CU 620b including this sample 640 during the decoding process. However, the location of the sample from which the certain information may be obtained should not be construed to be limited to the location described above, and may be construed to be samples at any location included in the CU 620b to be determined in order to place a restriction.

According to an embodiment, the location of the sample from which the certain information may be obtained may be determined according to a shape of the current CU 600. According to an embodiment, the block shape information may determine whether the shape of the current CU is a square or a non-square, and determine, according to the shape, the location of the sample from which the certain information may be obtained. For example, by using at least one of information about the width of the current CU and information about the height of the current CU, the image decoding apparatus 100 may determine, as a sample from the certain information may be obtained, a sample located on the boundary for splitting at least one of the width and the height of the current CU in half. In another example, when block shape information related to the current CU indicates a non-square, the image decoding apparatus 100 may determine, as a sample from which the certain information may be obtained, one of samples adjacent to a boundary for splitting a long side of the current CU in half.

According to an embodiment, when the current CU is split into a plurality of CUs, the image decoding apparatus 100 may use split shape mode information to determine a CU at a certain location among the plurality of CUs. According to an embodiment, the image decoding apparatus 100 may obtain the split shape mode information from a sample at a certain location included in the CU, and the image decoding apparatus 100 may split a plurality of CUs generated by splitting the current CU by using the split shape mode information obtained from a sample at a certain location included in each of the plurality of CUs. That is, the CU may be recursively split by using the split shape mode information obtained from the sample at the certain location included in each CU. A recursive splitting process of a CU is described above with reference to FIG. 5, and thus detailed descriptions thereof are omitted.

According to an embodiment, the image decoding apparatus 100 may determine at least one CU by splitting the current CU, and determine an order in which this at least one CU is decoded, according to a certain block (for example, the current CU).

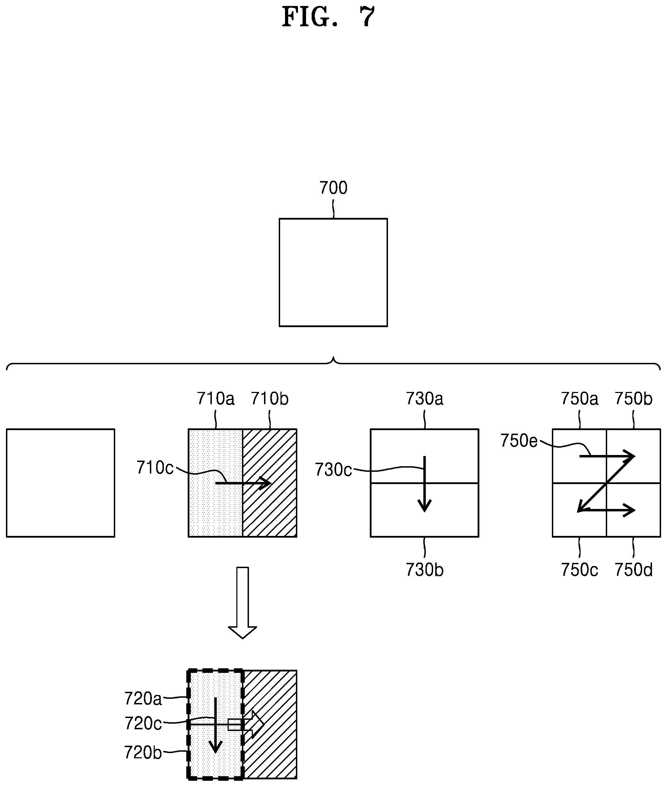

FIG. 7 shows an order in which a plurality of CUs are processed, when the image decoding apparatus 100 determines the plurality of CUs by splitting the current CU.

According to an embodiment, the image decoding apparatus 100 may determine second CUs 710a and 710b by vertically splitting a first CU 700 according to split shape mode information, determine second CUs 730a and 730b by horizontally splitting the first CU 700, or determine second CUs 750a, 750b, 7 50c, and 750d by vertically and horizontally splitting the first CU 700.

Referring to FIG. 7, the image decoding apparatus 100 may determine an order such that the second CUs 710a and 710b determined by vertically splitting the first CU 700 are processed in a horizontal direction 710c. The image decoding apparatus 100 may determine, as a vertical direction 730c, a processing order of the second CUs 730a and 730b determined by horizontally splitting the first CU 700. The image decoding apparatus 100 may determine the second CUs 750a, 750b, 750c, and 750d determined by vertically and horizontally splitting the first CU 700, according to a certain order (for example, a raster scan order or a z scan order 750e, etc.) in which CUs located in the next row are processed after CUs located in one row are processed.

According to an embodiment, the image decoding apparatus 100 may recursively split CUs. Referring to FIG. 7, the image decoding apparatus 100 may determine the plurality of CUs 710a, 710b, 730a, 730b, 750a, 750b, 750c, and 7 50d by splitting the first CU 700, and recursively split each of the determined plurality of CUs 710a, 710b, 730a, 730b, 750a, 750b, 750c, and 750d. A method of splitting the plurality of CUs 710a, 710b, 730a, 730b, 750a, 750b, 750c, and 750d may be a method corresponding to a method of splitting the first CU 700. Accordingly, the plurality of CUs 710a, 710b, 730a, 730b, 750a, 750b, 750c, and 750d may be split into a plurality of CUs independently of each other. Referring to FIG. 7, the image decoding apparatus 100 may determine the second CUs 710a and 710b by vertically splitting the first CU 700, and further, determine to split or not split each of the second CUs 710a and 710b independently of each other.

According to an embodiment, the image decoding apparatus 100 may horizontally split the left second CU 710a into third CUs 720a and 720b, and may not split the right second CU 710b.

According to an embodiment, a processing order of CUs may be determined based on a splitting process of the CUs. In other words, a processing order of CUs after splitting may be determined based on a processing order of CUs immediately before splitting. The image decoding apparatus 100 may determine, independently of the right second CU 710b, an order in which the third CUs 720a and 720b determined by splitting the left second CU 710a are processed. Because the left second CU 710a is horizontally split to determine the third CUs 720a and 720b, the third CUs 720a and 720b may be processed in a vertical direction 720c. In addition, because the order in which the left second CU 710a and the right second CU 710b are processed corresponds to the horizontal direction 710c, the right CU 710b may be processed after the third CUs 720a and 720b included in the left second CU 710a are processed in the vertical direction 720c. The description above is for describing a process in which a processing order of each CU is determined according to a CU before splitting, and thus should not be construed to be limited to the embodiment described above, and should be construed as being used in various ways by which CUs split and determined in various shapes may be independently processed according to a certain order.

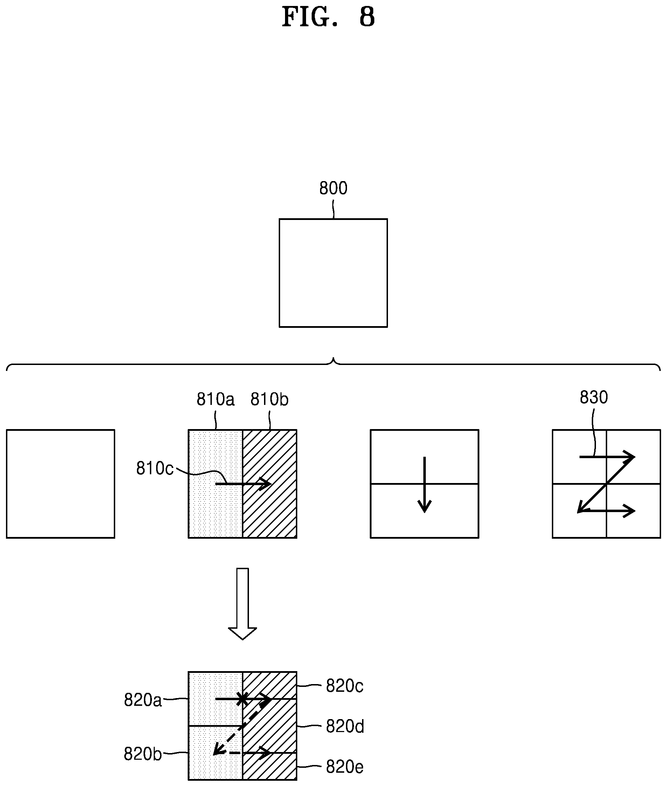

FIG. 8 shows a process in which the image decoding apparatus 100, when a CU cannot be processed in a certain order, determines that the current CU is split into odd-numbered CUs.

According to an embodiment, the image decoding apparatus 100 may determine that the current CU is split into odd-numbered CUs, based on the obtained split shape mode information. Referring to FIG. 8, a first CU 800 having a square shape may be split into second CUs 810a and 810b having a non-square shape, and the second CUs 810a and 810b may each be split into third CUs 820a, 820b, 820c, 820d, and 820e independently of each other. According to an embodiment, the image decoding apparatus 100 may determine the plurality of third CUs 820a and 820b by horizontally splitting the left CU 810a among the second CUs, and may split the right CU 810b into odd-numbered third CUs 820c, 820d, and 820e.

According to an embodiment, the image decoding apparatus 100 may determine whether the third CUs 820a, 820b, 820c, 820d, and 820e may be processed in a certain order, and determine whether a CU split into odd-numbered CUs is present. Referring to FIG. 8, the image decoding apparatus 100 may recursively split the first CU 800 and determine the third CUs 820a, 820b, 820c, 820d, and 820e. The image decoding apparatus 100 may, based on at least one of block shape information and split shape mode information, determine whether the first CU 800, the second CUs 810a and 810b, or the third CUs 820a, 820b, 820c, 820d, and 820e are split into odd-numbered CUs among shapes into which they are split. For example, the CU located to the right side among the second CUs 810a and 810b may be split into odd-numbered third CUs 820c, 820d, and 820e. An order in which a plurality of CUs included in the first CU 800 may be a certain order (for example, z-scan order 830), and the image decoding apparatus 100 may determine whether the third CUs 820c, 820d, and 820e determined by splitting the right second CU 810b into odd-numbered CUs satisfy a condition in which they may be processed in the certain order.

According to an embodiment, the image decoding apparatus 100 may determine whether the third CUs 820a, 820b, 820c, 820d, and 820e included in the first CU 800 satisfy a condition in which they may be processed according to the certain order, and this condition is related to whether at least one of the width and height of the second CUs 810a and 810b is split in half according to the boundaries of the third CUs 820a, 820b, 820c, 820d, and 820e. For example, the third CUs 820a and 820b determined by splitting the height of the square left second CU 810a in half may satisfy the condition. Because the boundaries of the third CUs 820c, 820d, and 820e determined by splitting the right second CU 810b into three CUs cannot split the width or height of the right second CU 810b in half, it may be determined that the third CUs 820c, 820d, and 820e do not satisfy the condition. When the condition is not satisfied, the image decoding apparatus 100 may determine that there is a disconnection in the scan order, and determine, based on a result of the determination, that the right second CU 810b is split into odd-numbered CUs. According to an embodiment, when it is split into odd-numbered CUs, the image decoding apparatus 100 may place a certain restriction on a CU at a certain location among the CU after splitting, and the details of such restriction or certain location are described above through various embodiments, and thus detailed descriptions thereof are omitted.

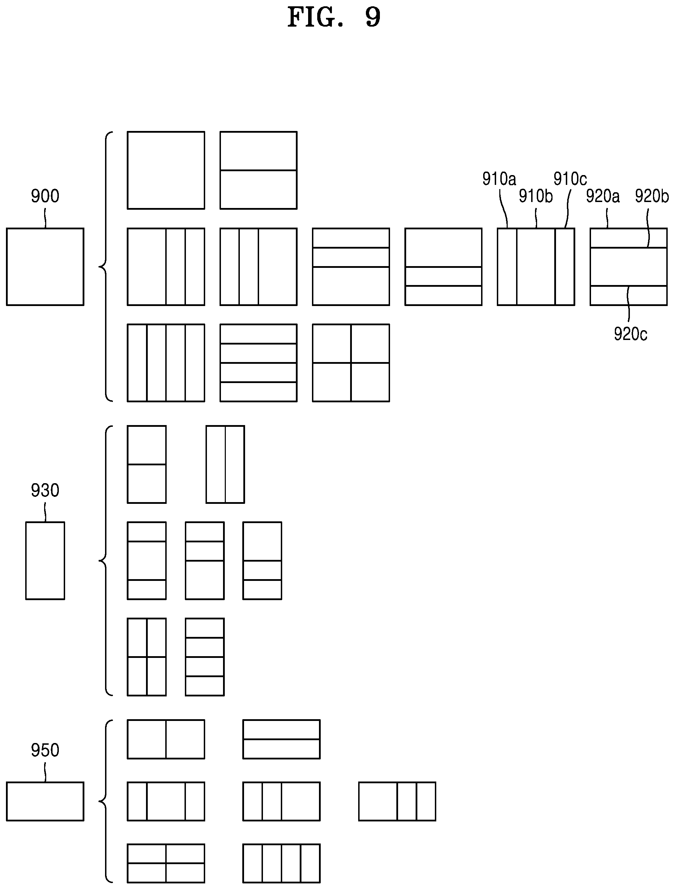

FIG. 9 shows a process in which the image decoding apparatus 100 splits a first CU 900 and determines at least one CU.

According to an embodiment, the image decoding apparatus 100 may split the first CU 900 based on split shape mode information obtained through the bitstream obtainer 110. The square first CU 900 may be split into CUs having a four-square shape, or may be split into a plurality of non-square CUs. For example, referring to FIG. 9, when the first CU 900 is a square and the split shape mode information indicates that it is split into non-square CUs, the image decoding apparatus 100 may split the first CU 900 into a plurality of non-square CUs. Specifically, when the split shape mode information indicates that the odd-numbered CUs are determined by horizontally or vertically splitting the first CU 900, the image decoding apparatus 100 may split the square first CU 900 into the second CUs 910a, 910b, and 910c, which are odd-numbered CUs determined by vertical splitting or into the second CUs 920a, 920b, and 920c determined by horizontal splitting.

According to an embodiment, the image decoding apparatus 100 may determine whether the second CUs 910a, 910b, 910c, 920a, 920b, and 920c included in the first CU 900 satisfy a condition in which they may be processed in a certain order, and this condition is related to whether at least one of the width and height of the first CU 900 is split in half according to the boundaries of the second CUs 910a, 910b, 910c, 920a, 920b, and 920c. Referring to FIG. 9, because the boundaries of the second CUs 910a, 910b, and 910c determined by vertically splitting the square first CU 900 cannot split the width of the first CU 900 in half, it may be determined that the first CU 900 does not satisfy a condition in which it may be processed in a certain order. In addition, because the boundaries of the second CUs 920a, 920b, and 920c determined by horizontally splitting the square first CU 900 cannot split the height of the first CU 900 in half, it may be determined that the first CU 900 does not satisfy the condition in which it may be processed in the certain order. When the condition is not satisfied, the image decoding apparatus 100 may determine that there is a disconnection in the scan order, and determine, based on a result of the determination, that the first CU 900 is split into odd-numbered CUs. According to an embodiment, when it is split into odd-numbered CUs, the image decoding apparatus 100 may place a certain restriction on a CU at a certain location among the CU after splitting, and the details of such restriction or certain location are described above through various embodiments, and thus detailed descriptions thereof are omitted.

According to an embodiment, the image decoding apparatus 100 may determine CUs of various shapes by splitting the first CU.

Referring to FIG. 9, the image decoding apparatus 100 may split the square first CU 900 and the non-square first CU 930 or 950 into CUs of various shapes.

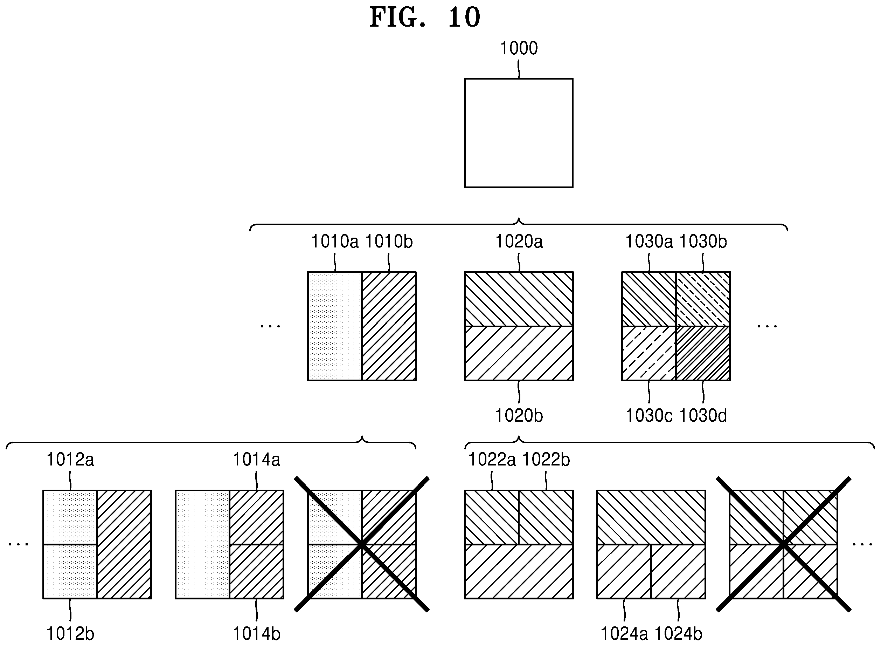

FIG. 10 shows that, according to an embodiment, the image decoding apparatus 100 restricts a shape into which the second CU may be split, when the non-square second CU determined by splitting a first CU 1000 satisfies a certain condition.

According to an embodiment, the image decoding apparatus 100 may determine to split the square first CU 1000 into non-square second CUs 1010a, 1010b, 1020a, and 1020b, based on split shape mode information obtained through the bitstream obtainer 110. The second CUs 1010a, 1010b, 1020a, and 1020b may be split independently of each other. Accordingly, the image decoding apparatus 100 may determine to split or not split it into a plurality of CUs, based on split shape mode information related to each of the second CUs 1010a, 1010b, 1020a, and 1020b. According to an embodiment, the image decoding apparatus 100 may determine third CUs 1012a and 1012b by horizontally splitting the non-square left second CU 1010a determined by vertically splitting the first CU 1000. However, when the left second CU 1010a is horizontally split, the image decoding apparatus 100 may restrict the right second CU 1010b not to be split in the horizontal direction, which is the same direction in which the left second CU 1010a is split. If the right second CU 1010b is split in the same direction and the third CUs 1014a and 1014b are determined, the left second CU 1010a and the right second CU 1010b may be split independently of each other to determine the third CUS 1012a, 1012b, 1014a, and 1014b. However, this is the same result as when the first CU 1000 is split into four square second CUs 1030a, 1030b, 1030c, and 1030d based on the split shape mode information, which may be inefficient in terms of image decoding.

According to an embodiment, the image decoding apparatus 100 may determine the third CUs 1022a, 1022b, 1024a, and 1024b by vertically splitting the non-square second CU 1020a or 1020b determined by horizontally splitting the first CU 1000. However, when one of the second CUs (for example, the upper second CU 1020a) is vertically split, the image decoding apparatus 100 may restrict the other second CU (for example, the lower CU 1020b) not to be split in the vertical direction, which is the same direction in which the upper second CU 1020a is split.

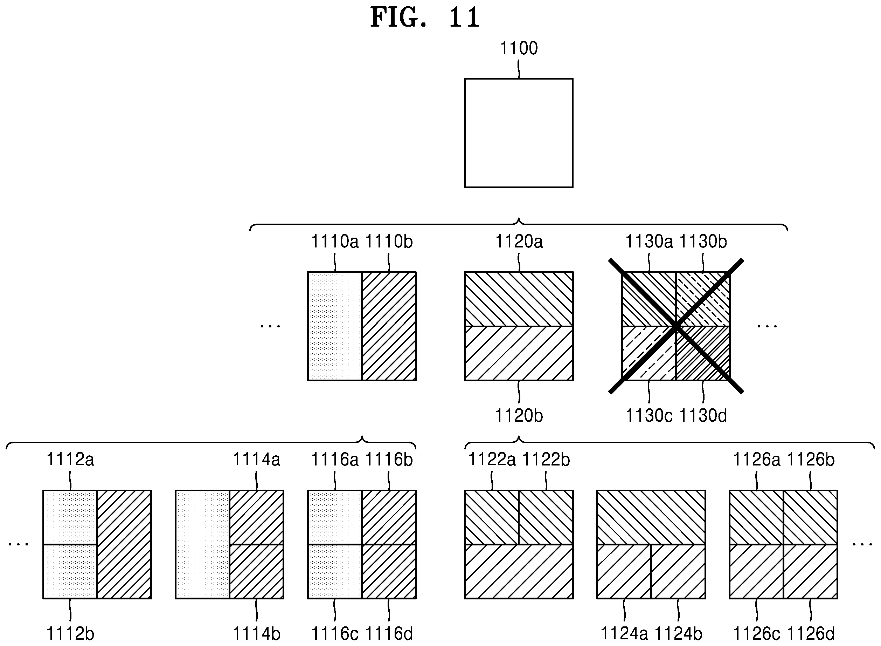

FIG. 11 shows a process in which the image decoding apparatus 100 splits a square CU, according to an embodiment, when split shape mode information cannot indicate a split into four square CUs.

According to an embodiment, the image decoding apparatus 100 may determine the second CUs 1110a, 1110b, 1120a, and 1120b by splitting the first CU 1100 based on the split shape mode information. The split shape mode information may include information about various shapes into which a CU may be split, but in some cases, the information about the various shapes may not include information for a split into four square CUs. According to such split shape mode information, the image decoding apparatus 100 cannot split the square first CU 1100 into four square second CUs 1130a, 1130b, 1130c, and 1130d. The image decoding apparatus 100 may determine the non-square second CUs 1110a, 1110b, 1120a, 1120b, etc. based on the split shape mode information.

According to an embodiment, the image decoding apparatus 100 may split the non-square second CUs 1110a, 1110b, 1120a, 1120b, etc. independently of each other. Each of the second CUs 1110a, 1110b, 1120a, 1120b, etc. may be split in a certain order through a recursive method, and this may be a splitting method corresponding to a method in which the first CU 1110 is split based on the split shape mode information.

For example, the image decoding apparatus 100 may determine the square third CUs 1112a and 1112b by horizontally splitting the left second CU 1110a, and determine the square third CUs 1114a and 1114b by horizontally splitting the right second CU 1110b. Further, the image decoding apparatus 100 may determine the square third CUs 1116a, 1116b, 1116c, and 1116d by horizontally splitting both the left second CU 1110a and the right second CU 1110b. In this case, a CU may be determined in the same shape as when the first CU 1100 is split into four square second CUs 1130a, 1130b, 1130c, and 1130d.

In another example, the image decoding apparatus 100 may determine the square third CUs 1122a and 1122b by vertically splitting the upper second CU 1120a, and determine the square third CUs 1124a and 1124b by vertically splitting the lower second CU 1120b. Further, the image decoding apparatus 100 may determine the square third CUs 1126a, 1126b, 1126a, and 1126b by vertically splitting both the upper second CU 1120a and the lower second CU 1120b. In this case, a CU may be determined in the same shape as when the first CU 1100 is split into the four square second CUs 1130a, 1130b, 1130c, and 1130d.

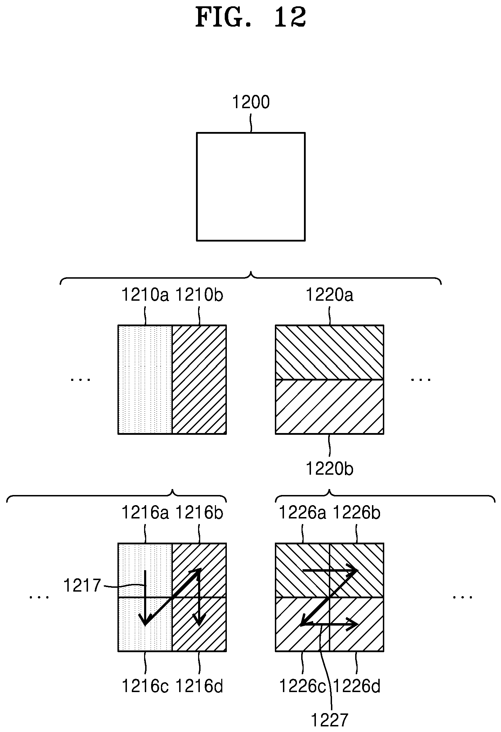

FIG. 12 shows that a processing order among a plurality of CUs may vary depending on the splitting process of the CUs, according to an embodiment.

According to an embodiment, the image decoding apparatus 100 may split a first CU 1200 based on split shape mode information. When the block shape is a square and the split shape mode information indicates that the first CU 1200 is split in at least one direction among the horizontal direction and the vertical direction, the image decoding apparatus 100 may determine second CUs (for example, 1210a, 1210b, 1220a, 1220b, etc.) by splitting the first CU 1200. Referring to FIG. 12, the non-square second CUs 1210a, 1210b, 1220a, and 1220b determined by splitting the first CU 1200 either horizontally or vertically may be independently split based on split shape mode information for each. For example, the image decoding apparatus 100 may determine third CUs 1216a, 1216b, 1216c, and 1216d by horizontally splitting each of the second CUs 1210a and 1210b generated by vertically splitting the first CU 1200, and determine third CUs 1226a, 1226b, 1226c, and 1226d by vertically splitting each of the second CUs 1220a and 1220b generated by horizontally splitting the first CU 1200. Such splitting process of the second CUs 1210a, 1210b, 1220a, and 1220b is described above with reference to FIG. 11, and thus detailed descriptions thereof are omitted.

According to an embodiment, the image decoding apparatus 100 may process a CU according to a certain order. Characteristics of processing of a CU according to a certain order is described above with reference to FIG. 7, and thus detailed descriptions thereof are omitted. Referring to FIG. 12, the image decoding apparatus 100 may determine four square third CUs 1216a, 1216b, 1216c, 1216d, 1226a, 1226b, 1226c, and 1226d by splitting the square first CU 1200. According to an embodiment, the image decoding apparatus 100 may determine a processing order of the third CUs 1216a, 1216b, 1216c, 1216d, 1226a, 1226b, 1226c, and 1226d according to a shape in which the first CU 1200 is split.

According to an embodiment, the image decoding apparatus 100 may determine the third CUs 1216a, 1216b, 1216c, and 1216d by horizontally splitting each of the second CUs 1210a and 1210b generated by a vertical split, and the image decoding apparatus 100 may first vertically process the third CUs 1216a and 1216c included in the left second CU 1210a, and then process the third CUs 1216a, 1216b, 1216c, and 1216d according to an order 1217 of vertically processing the third CUs 1216b and 1216d included in the right second CU 1210b.

According to an embodiment, the image decoding apparatus 100 may determine the third CUs 1226a, 1226b, 1226c, and 1226d by vertically splitting each of the second CUs 1220a and 1220b generated by a horizontal split, and the image decoding apparatus 100 may first horizontally process the third CUs 1226a and 1226b included in the upper second CU 1220a, and then process the third CUs 1226a, 1226b, 1226c, and 1226d according to an order 1227 of horizontally processing the third CUs 1226c and 1226d included in the lower second CU 1220b.

Referring to FIG. 12, the second CUs 1210a, 1210b, 1220a, and 1220b may each be split to determine the square third CUs 1216a, 1216b, 1216c, 1216d, 1226a, 1226b, 1226c, and 1226d. Although the second CUs 1210a and 1210b determined by a vertical split and the second CUs 1220a and 1220b determined by a horizontal split are split into different shapes, according to the third CUs 1216a, 1216b, 1216c, 1216d, 1226a, 1226b, 1226c, and 1226d determined thereafter, they are ultimately results of splitting the first CU 1200 into CUs of the same shape. Accordingly, even when CUs of the same shape as a result are determined by recursively splitting a CU through different processes based on split shape mode information, the image decoding apparatus 100 may process, in different orders, the plurality of CUs determined to have the same shape.

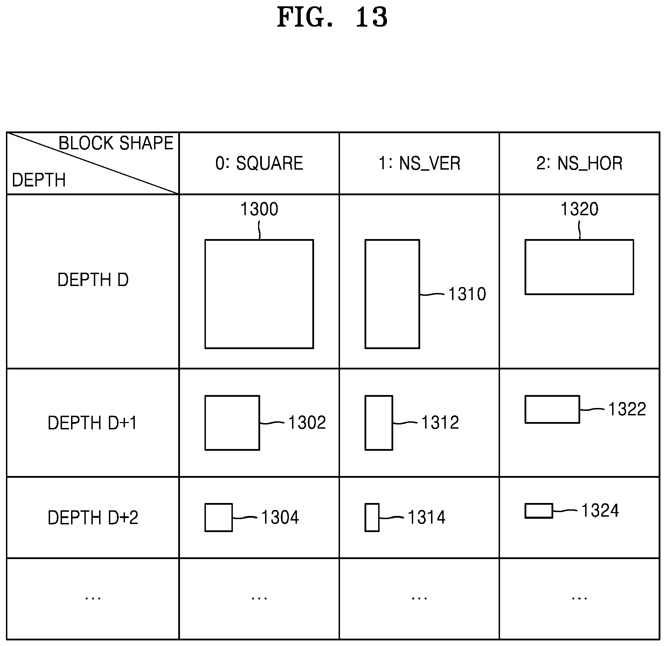

FIG. 13 shows a process of, when a CU is recursively split so that a plurality of CUs are determined, determining depths of the CUs as shapes and sizes of the CUs change, according to an embodiment.

According to an embodiment, the image decoding apparatus 100 may determine a depth of a CU according to a certain criterion. For example, the certain criterion may be a length of a long side of the CU. When the length of a long side of the current CU is split into 2n (n>0) times the length of the long side of the CU before splitting, the image decoding apparatus 100 may determine that a depth of the current CU is increased by n compared to a depth of the CU before splitting. Hereinafter, a CU with an increased depth is expressed as a CU of a lower depth.

Referring to FIG. 13, according to an embodiment, the image decoding apparatus 100 may determine a second CU 1302 and a third CU 1304, etc. of a lower depth by splitting a square first CU 1300 based on block shape information (for example, the block shape information may indicate '0:SQUARE') indicating a square shape. When a size of the square first CU 1300 is 2Nx2N, the second CU 1302 determined by splitting the width and height of the first CU 1300 by 1/2 may have a size of NxN. Further, the third CU 1304 determined by splitting the width and height of the second CU 1302 into 1/2 sizes may have a size of N/2xN/2. In this case, the width and height of the third CU 1304 corresponds to 1/4 times the first CU 1300. When the depth of the first CU 1300 is D, a depth of the second CU 1302, which is 1/2 times the width and height of the first CU 1300, may be D+1, and a depth of the third CU 1304, which is 1/4 times the width and height of the first CU 1300, may be D+2.

According to an embodiment, based on block shape information indicating a non-square shape (for example, the block shape information may indicate '1:NS_VER' indicating a non-square of which the height is greater than the width, or '2:NS_HOR' indicating a non-square of which the width is greater than the height), the image decoding apparatus 100 may determine the second CU 1312 or 1322, the third CU 1314 or 1324, etc. of a lower depth by splitting the non-square first CU 1310 or 1320.

The image decoding apparatus 100 may determine the second CU (for example, 1302, 1312, 1322, etc.) by splitting at least one of the width and height of the first CU 1310 of an Nx2N size. That is, the image decoding apparatus 100 may determine the second CU 1302 of an NxN size or the second CU 1322 of an NxN/2 size by horizontally splitting the first CU 1310, and may determine the second CU 1312 of an N/2xN size by horizontally and vertically splitting the first CU 1310.

According to an embodiment, the image decoding apparatus 100 may determine the second CU (for example, 1302, 1312, 1322, etc.) by splitting at least one of the width and height of the first CU 1320 of an 2NxN size. That is, the image decoding apparatus 100 may determine the second CU 1302 of an NxN size or the second CU 1312 of an N/2xN size by vertically splitting the first CU 1320, and may determine the second CU 1322 of an NxN/2 size by horizontally and vertically splitting the first CU 1320.

According to an embodiment, the image decoding apparatus 100 may determine the third CU (for example, 1304, 1314, 1324, etc.) by splitting at least one of the width and height of the second CU 1302 of an NxN size. That is, the image decoding apparatus 100 may determine the third CU 1304 of an N/2xN/2 size, the third CU 1314 of an N/4xN/2 size, or the third CU 1324 of an N/2xN/4 size by vertically and horizontally splitting the second CU 1302.

According to an embodiment, the image decoding apparatus 100 may determine the third CU (for example, 1304, 1314, 1324, etc.) by splitting at least one of the width and height of the second CU 1312 of an N/2xN size. That is, the image decoding apparatus 100 may determine the third CU 1304 of an N/2xN/2 size or the third CU 1324 of an N/2xN/4 size by horizontally splitting the second CU 1312, or may determine the third CU 1314 of an N/4xN/2 size by vertically and horizontally splitting the second CU 1312.

According to an embodiment, the image decoding apparatus 100 may determine the third CU (for example, 1304, 1314, 1324, etc.) by splitting at least one of the width and height of the second CU 1322 of an NxN/2 size. That is, the image decoding apparatus 100 may determine the third CU 1304 of an N/2xN/2 size or the third CU 13134 of an N/4xN/2 size by vertically splitting the second CU 1322, or may determine the third CU 1324 of an N/2xN/4 size by vertically and horizontally splitting the second CU 1322.

According to an embodiment, the image decoding apparatus 100 may horizontally or vertically split a square CU (for example, 1300, 1302, and 1304). For example, the first CU 1300 of a 2Nx2N size may be vertically split to determine the first CU 1310 of an Nx2N size, or may be horizontally split to determine the first CU 1320 of a 2NxN size. According to an embodiment, when a depth is determined based on the length of the longest side of a CU, a depth of the CU determined by horizontally or vertically splitting the first CU 1300 may be the same as a depth of the first CU 1300.

According to an embodiment, the width and height of the third CU 1314 or 1324 may correspond to 1/4 times those of the first CU 1310 or 1320. When the depth of the first CU 1310 or 1320 is D, the depth of the second CU 1312 or 1322, which is 1/2 times the width and height of the first CU 1310 or 1320, may be D+1, and the depth of the third CU 1314 or 1324, which is 1/4 times the width and height of the first CU 1310 or 1320, may be D+2.

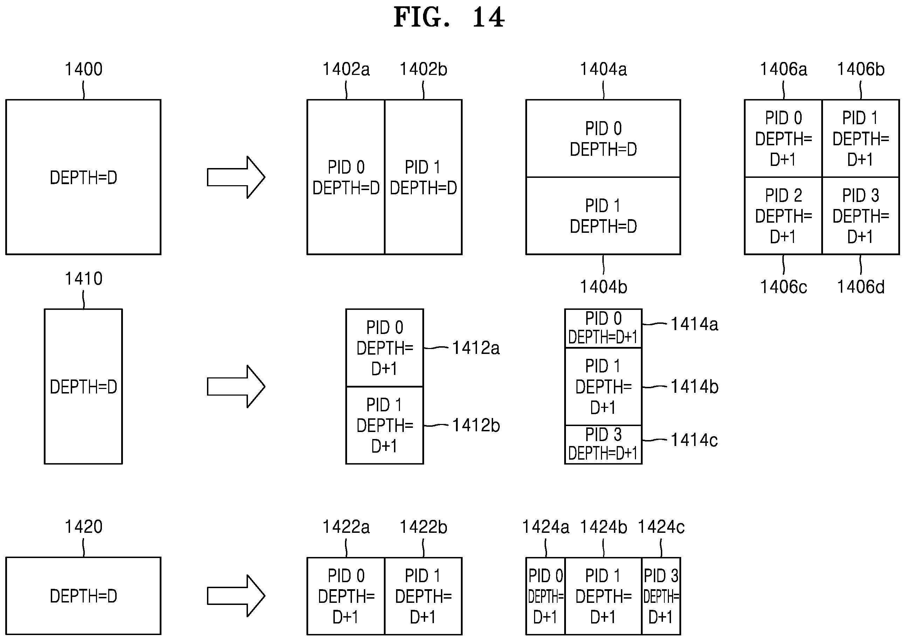

FIG. 14 shows part indices (hereinafter, PID) for distinguishing between a depth and a CU which may be determined according to shapes and sizes of CUs, according to an embodiment.

According to an embodiment, the image decoding apparatus 100 may determine second CUs of various shapes by splitting a square first CU 1400. Referring to FIG. 14, the image decoding apparatus 100 may determine second CUs 1402a, 1402b, 1404a, 1404b, 1406a, 1406b, 1406c, and 1406d by splitting the first CU 1400 in at least one direction among the vertical direction and the horizontal direction according to split shape mode information. That is, the image decoding apparatus 100 may determine the second CUs 1402a, 1402b, 1404a, 1404b, 1406a, 1406b, 1406c, and 1406d based on the split shape mode information for the first CU 1400.

According to an embodiment, the depths of the second CUs 1402a, 1402b, 1404a, 1404b, 1406a, 1406b, 1406c, and 1406d determined according to the split shape mode information for the square first CU 1400 may be determined based on the length of a long side. For example, because the length of one side of the square first CU 1400 is equal to the length of a long side of the non-square second CUs 1402a, 1402b, 1404a, and 1404b, it can be seen that the depths of the first CU 1400 and the non-square second CUs 1402a, 1402b, 1404a, and 1404b may be D. On the other hand, when the image decoding apparatus 100 splits the first CU 1400 into second CUs 1406a, 1406b, 1406c, and 1406d having the shape of four squares, based on the split shape mode information, the length of one side of the square second CUs 1406a, 1406b, 1406c, and 1406d is 1/2 times the length of one side of the first CU 1400, and thus the depths of the second CUs 1406a, 1406b, 1406c, and 1406d may be a depth of D+1, which is a depth lower than D, the depth of the first CU 1400.

According to an embodiment, the image decoding apparatus 100 may horizontally split a first CU of which the height is greater than the width, according to split shape mode information, so as to split it into a plurality of second CUs 1412a, 1412b, 1414a, 1414b, and 1414c. According to an embodiment, the image decoding apparatus 100 may vertically split a first CU 1420 of which the width is greater than the height, according to split shape mode information, so as to split it into a plurality of second CUs 1422a, 1422b, 1424a, 1424b, and 1424c.

According to an embodiment, the depths of the second CUs 1412a, 1412b, 1414a, 1414b, 1414c, 1422a, 1422b, 1424a, 1424b, and 1424c determined according to split shape mode information for the non-square CU 1410 or 1420 may be determined based on the length of a long side. For example, because the length of one side of the square second CUs 1412a and 1412b is 1/2 times the length of one side of the non-square first CU 1410 of which the height is greater than the width, the depth of the square second CUs 1412a and 1412b is D+1, which is one depth lower than the depth D of the non-square first CU 1410.

Further, the image decoding apparatus 100 may split the non-square first CU 1410 into odd-numbered second CUs 1414a, 1414b, and 1414c based on the split shape mode information. The odd-numbered second CUs 1414a, 1414b, and 1414c may include the non-square second CUs 1414a and 1414c and the square second CU 1414b. In this case, because the length of a long side of the non-square second CUs 1414a and 1414c and the length of one side of the square second CU 1414b are 1/2 times the length of one side of the first CU 1410, the depth of the second CUs 1414a, 1414b, and 1414c may be a depth of D+1, which is one depth lower than D, the depth of the first CU 1410. The image decoding apparatus 100 may determine the depths of CUs related to the non-square first CU 1420 of which the width is greater than the height, in a manner corresponding to the above method for determining the depths of CUs related to the first CU 1410.

According to an embodiment, when determining a PID for distinguishing CUs after splitting, when odd-numbered CUs after splitting are not of the same size, the image decoding apparatus 100 may determine the PID based on a size ratio between the CUs. Referring to FIG. 14, the CU 1414b located in the center among the odd-numbered CUs 1414a, 1414b, and 1414c after splitting may have the same width as the other CUs 1414a and 1414c, but may have a height that is twice those of the other CUs 1414a and 1414c. That is, in this case, the CU 1414b located in the center may include two of the other CUs 1414a and 1414c. Accordingly, when a PID of the CU 1414b located in the center according to a scan order is 1, the CU 1414c located in the next order may be 3, which is an increase of 2. That is, discontinuity in the values of PID may be present. According to an embodiment, the image decoding apparatus 100 may determine whether or not the odd-numbered CUs after splitting are of the same size, based on whether there is discontinuity in PID for distinguishing between such CUs after splitting.

According to an embodiment, the image decoding apparatus 100 may determine whether a plurality of CUs determined by splitting the current CU are split into a specific splitting shape, based on a value of PID for distinguishing the plurality of CUs. Referring to FIG. 14, the image decoding apparatus 100 may determine the even-numbered CUs 1412a and 1412b or the odd-numbered CUs 1414a, 1414b, and 1414c by splitting the rectangular first CU 1410 of which the height is greater than the width. In order to distinguish each of a plurality of CUs, the image decoding apparatus 100 may use PIDs of the respective CUs. According to an embodiment, the PID may be obtained from a sample at a certain location (for example, an upper left sample) of each CU.

According to an embodiment, the image decoding apparatus 100 may determine a CU at a certain location among CUs that are split and determined by using a PID for distinguishing CUs. According to an embodiment, when split shape mode information for the rectangular first CU 1410 of which the height is greater than the width indicates that it is split into third CUs, the image decoding apparatus 100 may split the first CU into the third CUs 1414a, 1414b, and 1414c. The image decoding apparatus 100 may assign a PID for each of the three CUs 1414a, 1414b, and 1414c. To determine the center CU among the odd-numbered CUs after splitting, the image decoding apparatus 100 may compare a PID for each CU. The image decoding apparatus 100 may determine the CU 1414b having a PID corresponding to the middle value among PIDs of the CUs based on the PIDs as a CU at a center location among CUs determined by splitting the first CU 1410. According to an embodiment, when determining a PID for distinguishing CUs after splitting, when the CUs after splitting are not of the same size, the image decoding apparatus 100 may determine the PID based on a size ratio between the CUs. Referring to FIG. 14, the CU 1414b generated by splitting the first CU 1410 may have the same width as those of the other CUs 1414a and 1414c, but may have a height that is twice the heights of the other CUs 1414a and 1414c. In this case, when the PID of the CU 1414b located in the center is 1, the CU 1414c located in the next order may be 3, which is an increase of 2. In cases like this where the index increases uniformly and then the increase amount changes, the image decoding apparatus 100 may determine that it is split into a plurality of CUs including CUs having different sizes from other CUs. According to an embodiment, when the split shape mode information indicates that it is split into odd-numbered CUs, the image decoding apparatus 100 may split the current CU such that a CU at a certain location (for example, a center CU) among the odd-numbered CUs differs in size from the other CUs. In this case, the image decoding apparatus 100 may determine the center CU having a different size by using a PID for a CU. However, the index and the size or location of a CU at a certain location to be determined are specified to describe an embodiment, and thus should not be construed to be limited thereto, and it should be construed that various indices and locations and sizes of CUs may be used.

According to an embodiment, the image decoding apparatus 100 may use a certain data unit from which recursive split of a CU begins.

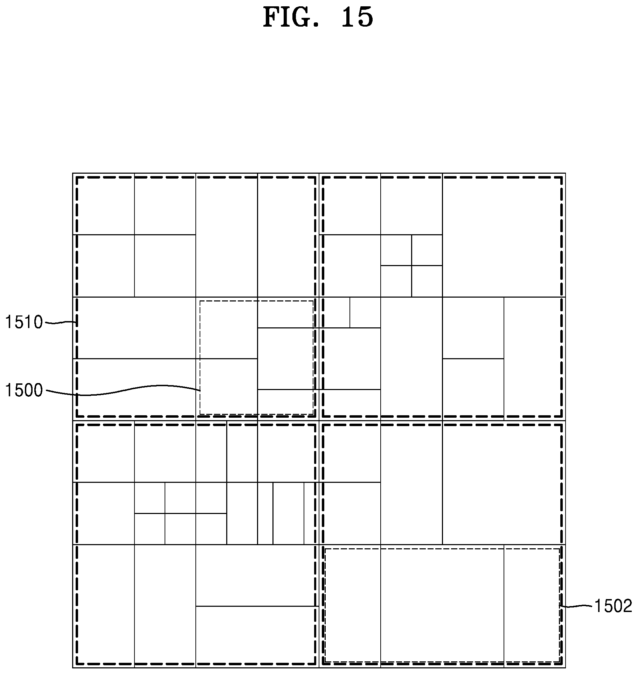

FIG. 15 shows that a plurality of CUs are determined according to a plurality of certain data units included in a picture, according to an embodiment.

According to an embodiment, the certain data unit may be defined as a data unit from which a CU begins to be recursively split by using split shape mode information. That is, it may correspond to the highest depth CU used in a process of determining a plurality of CUs that split the current picture. Hereinafter, for convenience of explanation, such certain data unit is referred to as a reference data unit.

According to an embodiment, the reference data unit may indicate a certain size and shape. According to an embodiment, the reference data unit may include MxN samples. Here, M and N may be equal to each other, and may be integers expressed as powers of 2. That is, the reference data unit may indicate a square or non-square shape, and may later be split into an integer number of CUs.

According to an embodiment, the image decoding apparatus 100 may split the current picture into a plurality of reference data units. According to an embodiment, the image decoding apparatus 100 may split a plurality of reference data units for splitting the current picture, by using split shape mode information for each reference data unit. A process of splitting such reference data unit may correspond to a splitting process using a quad-tree structure.

According to an embodiment, the image decoding apparatus 100 may predetermine a minimum size that a reference data unit included in the current picture may have. Accordingly, the image decoding apparatus 100 may determine reference data units of various sizes having a size greater than or equal to the minimum size, and determine at least one CU by using split shape mode information based on the determined reference data units.

Referring to FIG. 15, the image decoding apparatus 100 may use a square reference CU 1500, or may use a non-square reference CU 1502. According to an embodiment, a shape and size of the reference CU may be determined according to various data units (for example, a sequence, a picture, a slice, a slice segment, a tile, a tile group, a maximum CU, etc.) that may include at least one reference CU.

According to an embodiment, the bitstream obtainer 110 of the image decoding apparatus 100 may obtain, from a bitstream for each of the various data units, at least one of information about a shape of the reference CU and information about a size of the reference CU. A process of determining at least one CU included in the square reference CU 1500 is described above through a process of splitting the current CU 300 of FIG. 3, and a process of determining at least one CU included in a non-square reference CU 1502 is described above through a process of splitting the current CU 400 or 450 of FIG. 4. Thus, detailed descriptions thereof are omitted.

According to an embodiment, in order to determine the size and shape of the reference CU according to some data units predetermined based on a certain condition, the image decoding apparatus 100 may use a PID for identifying the size and shape of the reference CU. That is, the bitstream obtainer 110 may obtain, from the bitstream, only a PID for identifying the size and shape of the reference CU for each slice, slice segment, tile, tile group, maximum CU, etc. as a data unit that satisfies a certain condition (for example, a data unit having a size less than or equal to a slice) among the various data units (for example, sequence, picture, slice, slice segment, tile, tile group, maximum CU, etc.). The image decoding apparatus 100 may determine, by using a PID, the size and shape of the reference data unit for each data unit satisfying the certain condition. When the information about the shape of the reference CU and the information about the size of the reference CU are obtained from the bitstream and used for each data unit of a relatively small size, the use efficiency of the bitstream may not be good. Thus, only the PID may be obtained and used instead of directly obtaining the information about the shape of the reference CU and the information about the size of the reference CU. In this case, at least one of the size and shape of the reference CU corresponding to a PID indicating the size and shape of the reference CU may be predetermined. That is, the image decoding apparatus 100 may select at least one of the predetermined size and shape of the reference CU according to a PID, thereby determining at least one of the size and shape of the reference CU included in a data unit that serves as a basis for obtaining a PID.

According to an embodiment, the image decoding apparatus 100 may use at least one reference CU included in one CTU. That is, the CTU for splitting an image may include at least one reference CU, and a CU may be determined through a recursive splitting process of each reference CU. According to an embodiment, at least one of the width and height of the CTU may correspond to an integer multiple of at least one of the width and height of the reference CU. According to an embodiment, the size of the reference CU may be a size of the CTU split n times according to a quad tree structure. That is, the image decoding apparatus 100 may determine a reference CU by splitting the CTU n times according to a quad tree structure, and split the reference CU based on at least one of the block shape information and the split shape mode information, according to various embodiments.

According to an embodiment, the image decoding apparatus 100 may obtain, from the bitstream, and use the block shape information indicating the shape of the current CU or the split shape mode information indicating a method of splitting the current CU. The split shape mode information may be included in a bitstream related to various data units. For example, the image decoding apparatus 100 may use split shape mode information included in a sequence parameter set, a picture parameter set, a video parameter set, a slice header, a slice segment header, a tile header, and a tile group header. Further, the image decoding apparatus 100 may obtain and use block shape information from a bitstream for each CTU and reference CU, or may obtain and use a syntax element corresponding to the split shape mode information from the bitstream.

Hereinafter, a method of determining a split rule according to an embodiment of the present disclosure is described in detail.

The image decoding apparatus 100 may determine a split rule of an image. The split rule may be predetermined between the image decoding apparatus 100 and the image encoding apparatus 200. The image decoding apparatus 100 may determine the split rule of the image based on information obtained from a bitstream. The image decoding apparatus 100 may determine the split rule based on information obtained from at least one of a sequence parameter set, a picture parameter set, a video parameter set, a slice header, a slice segment header, a tile header, and a tile group header. The image decoding apparatus 100 may differently determine the split rule according to a frame, a slice, a tile, a temporal layer, a CTU, or a CU.

The image decoding apparatus 100 may determine the split rule based on a block shape of a CU. The block shape may include a size, shape, width-and-height ratio, and a direction of the CU. The image encoding apparatus 200 and the image decoding apparatus 100 may predetermine to determine the split rule based on the block shape of the CU. However, the disclosure is not limited thereto. The image decoding apparatus 100 may determine the split rule based on information obtained from a bitstream received from the image encoding apparatus 200.

The shape of the CU may include square and non-square. When the lengths of the width and height of the CU are equal, the image decoding apparatus 100 may determine the shape of the CU as square. In addition, when the lengths of the width and height of the CU are not equal, the image decoding apparatus 100 may determine the shape of the CU is non-square.

The size of the CU may include various sizes of 4x4, 8x4, 4x8, 8x8, 16x4, 16x8, ..., and 256x256. The size of the CU may be classified according to the length of a long side of the CU and the length or area of a short side of the CU. The image decoding apparatus 100 may apply the same split rule to CUs classified into the same group. For example, the image decoding apparatus 100 may classify CUs having the same long side length into the same size. In addition, the image decoding apparatus 100 may apply the same split rule to CUs having the same long side length.

A width-to-height ratio of the CU may include 1:2, 2:1, 1:4, 4:1, 1:8, 8:1, 1:16, 16:1, 32:1, or 1:32, etc. In addition, a direction of the CU may include the horizontal direction and the vertical direction. The horizontal direction may indicate a case in which the length of the width of the CU is greater than the length of the height of the CU. The vertical direction may indicate a case in which the length of the width of the CU is less than the length of the height of the CU.

The image decoding apparatus 100 may adaptively determine the split rule based on the size of the CU. The image decoding apparatus 100 may differently determine an allowable split shape mode based on the size of the CU. For example, the image decoding apparatus 100 may determine whether a split is allowed based on the size of the CU. The image decoding apparatus 100 may determine a splitting direction according to the size of the CU. The image decoding apparatus 100 may determine an allowable split type according to the size of the CU.

Determining the split rule based on the size of the CU may be a split rule predetermined based on the image encoding apparatus 200 and the image decoding apparatus 100. In addition, the image decoding apparatus 100 may determine the split rule based on information obtained from the bitstream.

The image decoding apparatus 100 may adaptively determine the split rule based on the location of the CU. The image decoding apparatus 100 may adaptively determine the split rule based on the location that the CU occupies in the image.

In addition, the image decoding apparatus 100 may determine the split rule so that CUs generated through different splitting paths do not have the same block shape. However, the disclosure is not limited thereto, and CUs generated through different splitting paths may have the same block shape. The CUs generated through different splitting paths may have different decoding processing orders. A decoding processing order is described in conjunction with FIG. 12, and thus detailed descriptions thereof are omitted.

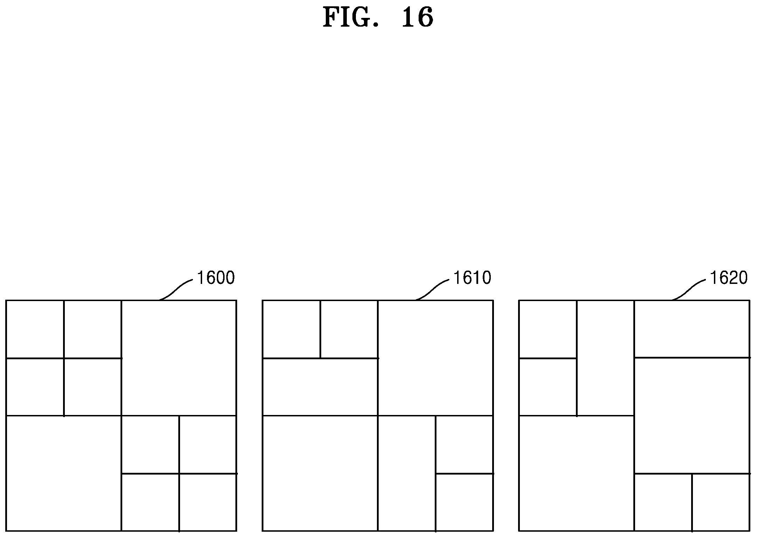

FIG. 16 shows CUs that may be determined for each picture, when a combination of shapes into which a CU may be split varies for each picture, according to an embodiment.

Referring to FIG. 16, the image decoding apparatus 100 may differently determine a combination of split shapes into which a CU may be split for each picture. For example, the image decoding apparatus 100 may decode an image by using, among at least one picture included in the image, a picture 1600 that may be split into four CUs, a picture 1610 that may be split into two or four CUs, and a picture 1620 that may be split into two, three, or four CUs. To split the picture 1600 into a plurality of CUs, the image decoding apparatus 100 may use only split shape information indicating that it is split into four square CUs. To split the picture 1610, the image decoding apparatus 100 may use only split shape information indicating that it is split into two or four CUs. To split the picture 1620, the image decoding apparatus 100 may use only split shape information indicating that it is split into two, three, or four CUs. The combination of the split shapes described above are only embodiments for describing an operation of the image decoding apparatus 100, and thus the combination of the split shapes described above should not be construed to be limited to the embodiment described above, but should be construed that various combinations of split shapes may be used for each predetermined data unit.

According to an embodiment, the image decoding apparatus 100 may obtain a bitstream including a PID indicating a combination of split shape information, for each predetermined data unit (for example, sequence, picture, slice, slice segment, tile, or tile group, etc.). For example, the bitstream obtainer 110 may obtain a PID indicating a combination of split shape information from a sequence parameter set, a picture parameter set, a slice header, a tile header, or a tile group header. The image decoding apparatus 100 of the image decoding apparatus 100 may determine, by using the obtained PID, a combination of split shapes into which a CU may be split for each predetermined data unit, and accordingly, may use different combinations of split shapes for each predetermined data unit.

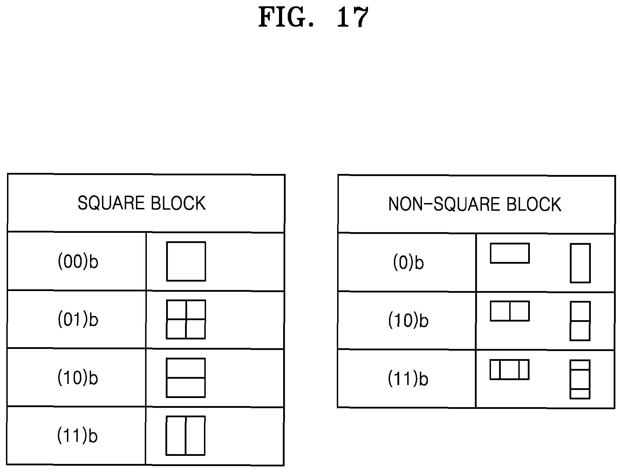

FIG. 17 shows various shapes of a CU that may be determined based on split shape mode information that may be expressed in binary code, according to an embodiment.

According to an embodiment, the image decoding apparatus 100 may split a CU into various shapes by using block shape information and split shape mode information obtained through the bitstream obtainer 110. Shapes into which a CU may be split may correspond to various shapes including the shapes described through the embodiments described above.

Referring to FIG. 17, the image decoding apparatus 100 may split a square CU in at least one direction among the horizontal direction and the vertical direction based on split shape mode information, and split a non-square CU horizontally or vertically.

According to an embodiment, when the image decoding apparatus 100 may horizontally and vertically split a square CU into four square CUs, there may be four types of split shapes that may be indicated by the split shape mode information for the non-square CU. According to an embodiment, the split shape mode information may be expressed as a two-digit binary code, and a binary code may be assigned for each split shapes. For example, when a CU is not split, the split shape mode information may be expressed as (00)b, when a CU is horizontally and vertically split, the split shape mode information may be expressed as (01)b, when a CU is horizontally split, the split shape mode information may be expressed as (10)b, and when a CU is vertically split, the split shape mode information may be expressed as (11)b.

According to an embodiment, when a non-square CU is horizontally or vertically split, the image decoding apparatus 100 may determine types of split shapes that may be indicated by the split shape mode information according to the number of CUs after splitting. Referring to FIG. 17, the image decoding apparatus 100 may split a non-square CU into up to three CUs, according to an embodiment. The image decoding apparatus 100 may split the CU into two CUs, in which case split shape mode information may be expressed as (10)b. The image decoding apparatus 100 may split the CU into three CUs, in which case the split shape mode information may be expressed as (11)b. The image decoding apparatus 100 may determine not to split a CU, in which case the split shape mode information may be expressed as (0)b. That is, the image decoding apparatus 100 may use variable length coding (VLC) instead of fixed length coding (FLC) so as to use a binary code indicating split shape mode information.

According to an embodiment, referring to FIG. 17, the binary code of the split shape mode information indicating that a CU is not split may be expressed as (0)b. If the binary code of the split shape mode information indicating that a CU is not split is set to (00)b, despite the absence of split shape mode information set to (01)b, all binary codes of two-bit split shape mode information must be used. However, as shown in FIG. 17, when three types of split shapes for a non-square CU are used, the image decoding apparatus 100 may determine to not split a CU even when a 1-bit binary code (0)b is used as the split shape mode information, and thus may efficiently use a bitstream. However, the split shapes of the non-square CU indicated by the split shape mode information should not be construed to be limited to only the three shapes shown in FIG. 17, and should be construed to be various shapes including the embodiments described above.

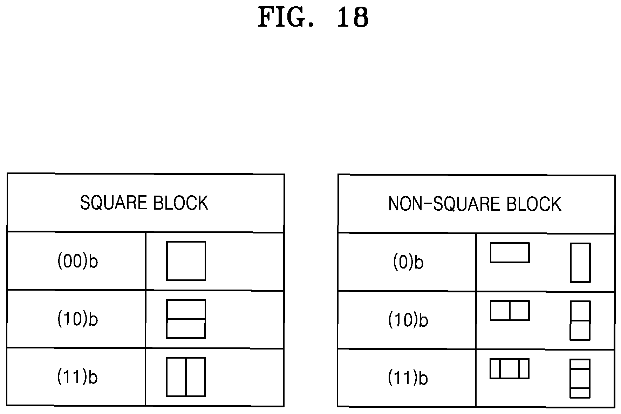

FIG. 18 shows other shapes of CUs that may be determined based on split shape mode information that may be expressed in binary code, according to an embodiment.

Referring to FIG. 18, based on the split shape mode information, the image decoding apparatus 100 may horizontally or vertically split a square CU, and may horizontally or vertically split a non-square CU. That is, the split shape mode information may indicate that a square CU is split in one direction. In this case, a binary code of the split shape mode information indicating that the square CU is not split may be expressed as (0)b. If the binary code of the split shape mode information indicating that a CU is not split is set to (00)b, despite the absence of split shape mode information set to (01)b, all binary codes of two-bit split shape mode information must be used. However, as shown in FIG. 18, when three types of split shapes for a square CU are used, the image decoding apparatus 100 may determine to not split a CU even when a 1-bit binary code (0)b is used as the split shape mode information, and thus may efficiently use a bitstream. However, the split shapes of the square CU indicated by the split shape mode information should not be construed to be limited to only the three shapes shown in FIG. 18, and should be construed to be various shapes including the embodiments described above.

According to an embodiment, the block shape information or the split shape mode information may be expressed by using binary code, and such information may be immediately generated as a bitstream. In addition, the block shape information or the split shape mode information that may be expressed in binary code may not be generated directly as a bitstream but may be used as binary code input in context adaptive binary arithmetic coding (CABAC).

According to an embodiment, a process in which the image decoding apparatus 100 obtains syntax for block shape information or split shape mode information through CABAC is described. Through the bitstream obtainer 110, a bitstream including binary code for the syntax may be obtained. The image decoding apparatus 100 may detect a syntax element indicating block shape information or split shape mode information by de-binarizing a bin string included in the obtained bitstream. According to an embodiment, the image decoding apparatus 100 may obtain a set of binary bin strings corresponding a syntax element to be decoded, and decode each bin by using probability information, and the image decoding apparatus 100 may repeat until a bin string composed of such decoded bins becomes equal to one of the previously obtained bin strings. The image decoding apparatus 100 may determine a syntax element by performing de-binarization of a bin string.

According to an embodiment, the image decoding apparatus 100 may determine a syntax for a bin string by performing a decoding process of adaptive binary arithmetic coding, and the image decoding apparatus 100 may update a probability model for bins obtained through the bitstream obtainer 110. Referring to FIG. 17, the bitstream obtainer 110 of the image decoding apparatus 100 may obtain a bitstream indicating a binary code indicating split shape mode information according to an embodiment. By using the obtained binary code having a 1-bit or 2-bit size, the image decoding apparatus 100 may determine a syntax for the split shape mode information. To determine the syntax for the split shape mode information, the image decoding apparatus 100 may update a probability for each bit of the two-bit binary code. That is, depending on whether the value of the first bin is 0 or 1 among the two-bit binary code, the image decoding apparatus 100 may update a probability of having a value of 0 or 1 when the next bin is decoded.

According to an embodiment, in a process of determining the syntax, the image decoding apparatus 100 may update a probability for bins used in the process of decoding bins of the bin string for the syntax, and the image decoding apparatus 100 may determine that they have the same probability without updating the probability in certain bits among the bin string.

Referring to FIG. 17, in the process of determining syntax by using a bin string indicating split shape mode information for a non-square CU, when the non-square CU is not split, the image decoding apparatus 100 may determine syntax for the split shape mode information by using one bin having a value of 0. That is, when the block shape information indicates that the current CU has a non-square shape, a first bin of the bin string for the split shape mode information may be 0 when the non-square CU is not split, and 1 when the non-square CU is split into two or three CUs. Accordingly, a probability that the first bin of the bin string of the split shape mode information for the non-square CU may be 1/3, and the probability that it is 1 may be 2/3. As described above, because the split shape mode information indicating that the non-square CU is not split may express only a 1-bit bin string having a value of 0, the image decoding apparatus 100 may determine syntax for the split shape mode information by determining whether a second bin of the split shape mode information is 0 or 1 only when the first bin of the split shape mode information is 1. According to an embodiment, when the first bin for the split shape mode information is 1, the image decoding apparatus 100 may decode the bin by considering that when the first bin of the split shape mode information is 1, the probability that the second bin is 0 or 1 is the same probability.

According to an embodiment, in the process of determining bins of the bin string for the split shape mode information, the image decoding apparatus 100 may use various probabilities for the respective bins. According to an embodiment, the image decoding apparatus 100 may differently determine the probability of bins for the split shape mode information according to a direction of a non-square block. According to an embodiment, the image decoding apparatus 100 may differently determine the probability of bins for the split shape mode information according to the area or long-side length of the current CU. According to an embodiment, the image decoding apparatus 100 may differently determine the probability of bins for the split shape mode information according to at least one of the shape and long-side length of the current CU.

According to an embodiment, for CUs having a certain size or more, the image decoding apparatus 100 may determine that the probability of the bins for the split shape mode information is the same. For example, with respect to CUs of a size greater than or equal to 64 samples based on the length of a long side of a CU, it may be determined that the probability of bins for the split shape mode information is the same.

According to an embodiment, the image decoding apparatus 100 may determine an initial probability for bins included in the bin string of the split shape mode information based on a slice type (for example, I slice, P slice, or B slice).

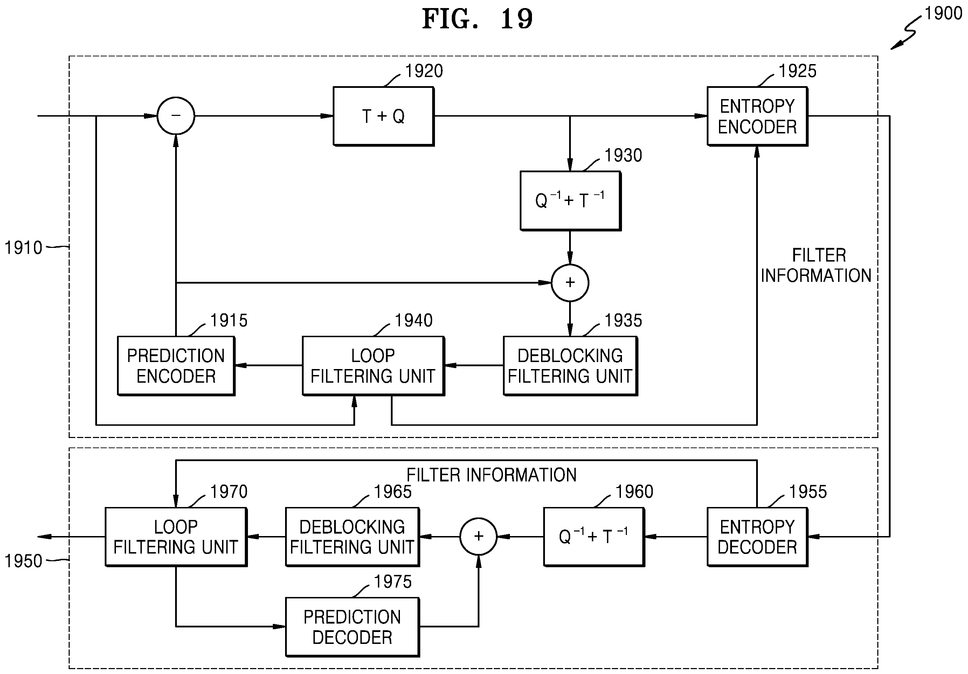

FIG. 19 is a diagram illustrating a block diagram of an image encoding and decoding system that performs loop filtering.

An encoding side 1910 of an image encoding and decoding system 1900 may transmit an encoded bitstream of an image, and a decoding side 1950 may receive and decode the bitstream and output a reconstructed image. Here, the encoding side 1910 may be a similar element to the image encoding apparatus 200 described below, and the decoding side 1950 may be a similar element to the image decoding apparatus 100.

In the encoding side 1910, a prediction encoder 1915 outputs prediction data through inter prediction and intra prediction, and a transform and quantization unit 1920 outputs quantized transform coefficients of residual data between the prediction data and a current input image. An entropy encoder 1925 encodes and transforms the quantized transform coefficients and output it as a bitstream. The quantized transform coefficients are reconstructed to data of as spatial domain via an inverse quantization and inverse transform unit 1930, and the reconstructed spatial domain data is output a reconstructed image via a deblocking filtering unit 1935 and a loop filtering unit 1940. The reconstructed image may be used as a reference image for a next input image via the prediction encoder 1915.

Encoded image data among the bitstream received by the decoding side 1950 is reconstructed to residual data of the spatial domain via the entropy decoder 1955 and the inverse quantization and inverse transform unit 1960. Prediction data output from a prediction decoder 1975 and residual data may be combined to constitute image data in the spatial domain, and a deblocking filtering unit 1965 and a loop filtering unit 1970 may perform filtering on the image data of the spatial domain and output a reconstructed image for a current original image. The reconstructed image may be used as a reference image for the next original image by the prediction decoder 1975.

The loop filtering unit 1940 of the encoding side 1910 performs loop filtering by using filter information input according to a user input or system settings. The filter information used by the loop filtering unit 1940 is output to the entropy encoder 1925 and transmitted to the decoding side 1950 together with the encoded image data. The loop filtering unit 1970 of the decoding side 1950 may perform loop filtering based on the filter information input from the decoding side 1950.

The various embodiments described above describe operations related to an image decoding method performed by the image decoding apparatus 100. Hereinafter, operations of the image encoding apparatus 200 that performs an image encoding method corresponding to a reverse process of such image decoding method are described through various embodiments.

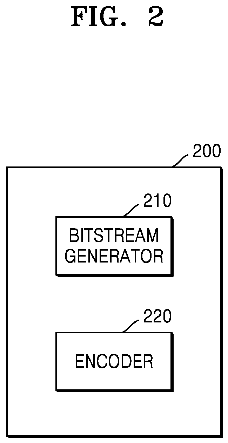

FIG. 2 shows a block diagram of the image encoding apparatus 200 that may encode an image based on at least one of block shape information and split shape mode information.

The image encoding apparatus 200 may include an encoder 220 and a bitstream generator 210. The encoder 220 may receive an input image and encode the input image. The encoder 220 may obtain at least one syntax element by encoding the input image. The syntax element may include at least one of a skip flag, a prediction mode, a motion vector difference, a motion vector prediction method (or index), a transform quantized coefficient, a coded block pattern, a coded block flag, an intra prediction mode, a direct flag, a merge flag, a delta QP, a reference index, a prediction direction, and a transform index. The encoder 220 may determine a context model based on block shape information including at least one of a shape, direction, width-and-height ratio, or size of a CU.

The bitstream generator 210 may generate a bitstream based on the encoded input image. For example, the bitstream generator 210 may generate a bitstream by entropy encoding the syntax element based on a context model. In addition, the image encoding apparatus 200 may transmit the bitstream to the image decoding apparatus 100.

According to an embodiment, the encoder 220 of the image encoding apparatus 200 may determine a shape of a CU. For example, the CU may have a square or non-square shape, and information indicating such shape may be included in the block shape information.

According to an embodiment, the encoder 220 may determine into which shape the CU is to be split. The encoder 220 may determine a shape of at least one CU included in the CU, and the bitstream generator 210 may generate a bitstream including split shape mode information including information about such shape of the CU.

According to an embodiment, the encoder 220 may determine whether the CU is split or not. When the encoder 220 determines that only one CU is included in the CU or that the CU is not to be split, the bitstream generator 210 may generate a bitstream including split shape mode information indicating that the CU is not split. In addition, the encoder 220 may split it into a plurality of CUs included in a CU, and the bitstream generator 210 may generate a bitstream including split shape mode information indicating that the CU is split into the plurality of CUs.

According to an embodiment, the split shape mode information may include information indicating how many numbers of CUs into which the CU is to be split, or in which direction the CU is to be split. For example, the split shape mode information may indicate splitting in at least one direction among the vertical direction and the horizontal direction, or may indicate no splitting.

The image encoding apparatus 200 may determine information about a split shape mode based on the split shape mode of the CU. The image encoding apparatus 200 may determine a context model based on at least one of the shape, direction, width-and-height ratio, or size of the CU. In addition, the image encoding apparatus 200 may generate, as a bitstream, information about a split shape mode for splitting the CU, based on the context model.

In order to determine the context model, the image encoding apparatus 200 may obtain an array for corresponding at least one of the shape, direction, width-and-height ratio, or size of the CU to a PID for the context model. The image encoding apparatus 200 may obtain, from the array, a PID for a context model based on at least one of the shape, direction, width-and-height ratio, or size of the CU. The image encoding apparatus 200 may determine the context model based on a PID for the context model.

In order to determine the context model, the image encoding apparatus 200 may determine the context model based further on block shape information including at least one of a shape, direction, width-and-height ratio, or size of a peripheral CU adjacent to the CU. In addition, the peripheral CU may include at least one of CUs located on the lower left, left, upper left, top, upper right, right, or lower right of the CU.

In addition, to determine the context model, the image encoding apparatus 200 may compare the length of the width of an upper peripheral CU and the length of the width of the CU. In addition, the image encoding apparatus 200 may compare the lengths of the heights of left and right peripheral CUs and the length of the height of the CU. In addition, the image encoding apparatus 200 may determine the context model based on the comparison results.

Operations of the image encoding apparatus 200 include similar contents to those of the video decoding apparatus 100 described with reference to FIGS. 3 to 19, and thus detailed descriptions thereof are omitted.

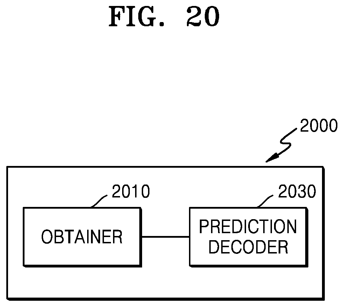

FIG. 20 is a block diagram illustrating a configuration of an image decoding apparatus 2000.

Referring to FIG. 20, the image decoding apparatus 2000 may include an obtainer 2010 and a prediction decoder 2030.

The obtainer 2010 and the prediction decoder 2030 may be implemented as at least one processor. The at least one processor may include various processing circuitry.

The obtainer 2010 and the prediction decoder 2030 may operate according to at least one instruction stored in at least one memory.

In an embodiment, the image decoding apparatus 2000 may include at least one memory storing input/output data of the obtainer 2010 and the prediction decoder 2030. The image decoding apparatus 2000 may include a memory control unit configured to control data input/output of the at least one memory.

In an embodiment, the obtainer 2010 may correspond to the entropy decoder 1955 shown in FIG. 19, the prediction decoder 2030 may correspond to the prediction decoder 1975 shown in FIG. 19.

The obtainer 2010 may obtain a bitstream generated as a result of encoding a picture. The bitstream may include an encoding result for the current block.

The current block may be a maximum coding unit, a coding unit, a transform unit, or a prediction unit which are split from a current picture to be decoded. In an embodiment, the current block may be a sub-block split from the maximum coding unit, the coding unit, the transform unit, or the prediction unit. In this case, the maximum coding unit, the coding unit, the transform unit, or the prediction unit including a plurality of sub-blocks may be referred to as an upper block.

In an embodiment, the obtainer 2010 may receive a bitstream from an image encoding apparatus through a network.

In an embodiment, the obtainer 2010 may obtain the bitstream from a data storage medium, including a magnetic medium (for example, a hard disk, a floppy disk, or a magnetic tape), an optical recording medium (for example, CD-ROM or DVD), and a magneto-optical medium (for example, a floptical disk).

The obtainer 2010 may obtain, from the bitstream, syntax elements for decoding a picture. Values corresponding to the syntax elements may be included in the bitstream according to a syntax structure.

The obtainer 2010 may obtain the syntax elements by entropy decoding bins constituting the bitstream.

The bitstream may include information about a prediction mode of the current block within the current picture. The prediction mode of the current block may any one of a plurality of prediction modes including an intra mode and an inter mode.

The prediction decoder 2030 may generate a predicted block of the current block by performing intra prediction or inter prediction on the current block according to the prediction mode of the current block, and may reconstruct the current block by using the predicted block.

When the prediction mode of the current block is an intra mode, the obtainer 2010 may obtain, from the bitstream, information about an intra prediction mode of the current block.

The information about the intra prediction mode of the current block may include information indicating a method of determining the intra prediction mode. The method of determining the intra prediction mode may include a method of deriving an intra prediction mode on the decoder side and a method of determining the intra prediction mode indicated by the information included in the bitstream.

In an embodiment, the information indicating the method of determining the intra prediction mode may not be included in the bitstream, and the prediction decoder 2030 may determine an intra prediction mode of the current block according to a predetermined method.

In an embodiment, when the information indicating the intra prediction mode is included in the bitstream, the prediction decoder 2030 may determine, as the intra prediction mode of the current block, an intra prediction mode indicated by the information obtained from the bitstream among a plurality of intra prediction modes. The information indicating the intra prediction mode of the current block may include a flag or an index indicating any one intra prediction mode among the plurality of intra prediction modes.

When the method of determining the intra prediction mode is a method of deriving the intra prediction mode on the decoder side, the prediction decoder 2030 according to an embodiment may determine the intra prediction mode of the current block by using samples reconstructed before the current block.

The prediction decoder 2030 may determine, by using samples reconstructed before the current block, which intra prediction mode among a plurality of intra prediction modes that may be applied to the current block is suitable for the current block. The prediction decoder 2030 may determine the intra prediction mode suitable for the current block as the intra prediction mode of the current block.

A process of determining an intra prediction mode of the current block by using the samples reconstructed before the current block is described below.

When a predicted block is generated through intra prediction or inter prediction for the current block, the prediction decoder 2030 may obtain a reconstructed current block by using the predicted block.

In an embodiment, the prediction decoder 2030 may determine the predicted block as the reconstructed current block. In an embodiment, the prediction decoder 2030 may generate a reconstructed current block by combining residual data obtained from a bitstream by the obtainer 2010 and the predicted block. The reconstructed current block may be used to decode the next block.

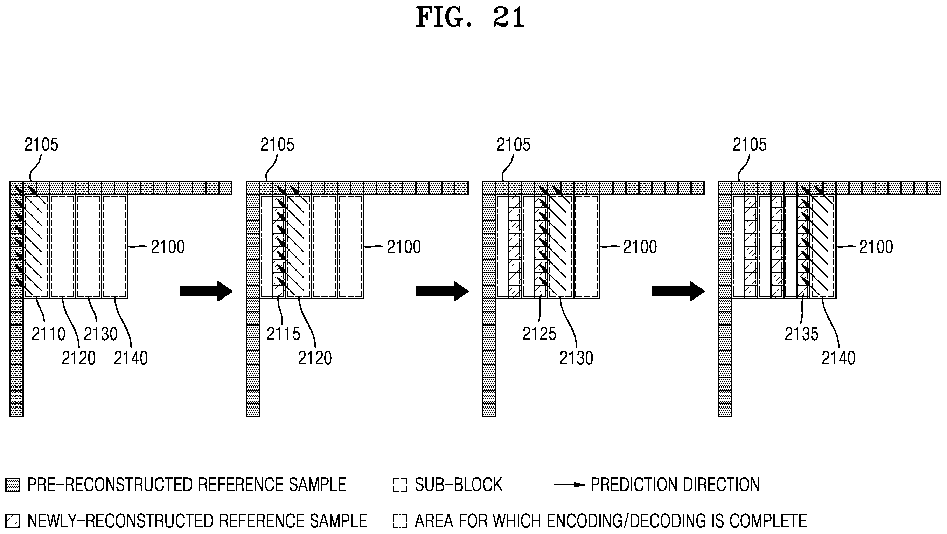

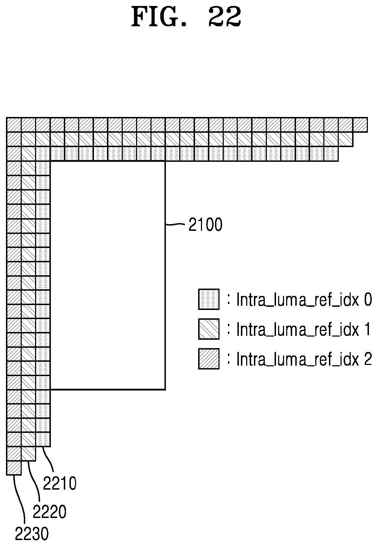

Hereinafter, tools available in the intra prediction process are described with reference to FIGS. 21 and 22.

FIG. 21 is a diagram for describing an intra sub-partition mode according to an embodiment.

In the intra sub-partition mode, a block (or an upper block) may be split into sub-blocks, and intra prediction may be independently performed on each of the sub-blocks. The upper block may be split horizontally and/or vertically. In an embodiment, the upper block may be a maximum coding unit, a coding unit, a transform unit, or a prediction unit split from a picture.

In the intra sub-partition mode, an intra prediction mode determined for the upper block may be applied to all of the sub-blocks. For example, when the intra prediction mode of the upper block is directional mode 34, the sub-blocks may be intra-predicted according to the directional mode 34.

According to an embodiment, first information indicating whether the intra sub-partition mode is applied, and second information indicating a split shape of the upper block may be included in the bitstream. A decoder may determine whether the intra sub-partition mode is applied to the upper block based on the first information obtained from the bitstream, and when the intra sub-partition mode is applied to the upper block, may determine a partition shape of the upper block into sub-blocks, based on the second information.

Referring to FIG. 21, as an upper block 2100 is vertically split into four, intra prediction may be sequentially performed on each of four sub-blocks 2110, 2120, 2130, and 2140.

When a decoding order of the first sub-block 2110 to the leftmost side among the four sub-blocks 2110, 2120, 2130, and 2140 is the fastest, the first sub-block 2110 may be intra-predicted from reference samples located in a prediction direction indicated by the intra prediction mode among pre-reconstructed reference samples 2105.

The pre-reconstructed reference samples 2105 may be samples included in a block encoded or decoded before the upper block 2100. The pre-reconstructed reference samples 2105 may include samples located to the left of the upper block 2100 and samples located on the top of the upper block 2100.

When the reconstruction of the first sub-block 2110 is completed through intra prediction for the first sub-block 2110, a second sub-block 2120 may be intra-predicted according to an intra prediction mode. Because the reconstruction of the first sub-block 2110 is completed, for intra prediction for the second sub-block 2120, a newly-reconstructed reference sample 2115 located to the left of the second sub-block 2120 and a reference sample located on the top of the second sub-block 2120 among the pre-reconstructed reference samples 2105 may be used. The newly-reconstructed reference sample 2115 located to the left of the second sub-block 2120 may be included in the first sub-block 2110.

When the reconstruction of the second sub-block 2120 is completed, a third sub-block 2130 may be intra-predicted according to the intra prediction mode. Similar to the second sub-block 2120, for intra prediction for the third sub-block 2130, a newly-reconstructed reference sample 2125 located to the left of the third sub-block 2130 and a reference sample located on the top of the third sub-block 2130 among the pre-reconstructed reference samples 2105 may be used. The newly-reconstructed reference sample 2125 located to the left of the third sub-block 2130 may be included in the second sub-block 2120.

Similarly, for intra prediction for a fourth sub-block 2140, a newly-reconstructed reference sample 2135 located to the left of the fourth sub-block 2140 and a reference sample located on the top of the fourth sub-block 2140 among the pre-reconstructed reference samples 2105 may be used. The newly-reconstructed reference sample 2135 located to the left of the fourth sub-block 2140 may be included in the third sub-block 2130.

FIG. 21 shows a case in which the upper block 2100 is vertically split. Even when the upper block 2100 is horizontally split, a first sub-block (for example, an uppermost sub-block) among sub-blocks may be intra-predicted from the pre-reconstructed reference samples 2105 adjacent to the upper block 2100. In addition, sub-blocks other than the first sub-block among sub-blocks into which the upper block 2100 is split may be intra-predicted by using samples included in a previously-reconstructed sub-block as a reference sample.

In an embodiment, when the intra sub-partition mode is applied to a very small block, encoding/decoding efficiency may be deteriorated, and thus the application of the intra-sub-partition mode may be limited based on a size of the upper block 2100. For example, when a size of the upper block 2100 is less than or equal to a predetermined size, the intra sub-partition mode may not be applied to the upper block 2100, and information indicating whether the intra sub-partition mode is applied may be omitted from the bitstream.

FIG. 21 shows the rectangular sub-blocks 2110, 2120, 2130, and 2140. In an embodiment, a plurality of sub-blocks may be obtained through splitting of the upper block 2100.

In an embodiment, a minimum size (for example, minimum width, minimum height, or minimum area) that a sub-block may have in the intra sub-partition mode may be preset. In this case, sizes of the sub-blocks 2110, 2120, 2130, and 2140 obtained through splitting of the upper block 2100 may be the same as or greater than the minimum size.

FIG. 22 is a diagram for describing a multiple reference line mode according to an embodiment.

In the multiple reference line mode, samples of a reference line selected among a plurality of reference lines may be used as reference samples for intra prediction of a block 2100.

In an embodiment, information indicating a reference line used for intra prediction of the block 2100 may be included in a bitstream. A decoder may determine a reference line used for intra prediction of the block 2100 based on the information included in the bitstream, and perform intra prediction on the block 2100 by using samples included in the determined reference line.

In an embodiment, when information intra_luma_ref_idx indicating the reference line indicates 0, samples at a left boundary within the block 2100 and samples of a line 2210 spaced apart by an offset (or sample distance) of 1 in the x-axis direction and/or the y-axis direction from samples at an upper boundary within the block 2100 may be used for intra prediction of the block 2100.

In an embodiment, when information intra_luma_ref_idx indicating the reference line indicates 1, samples at a left boundary within the block 2100 and samples of a line 2220 spaced apart by an offset of 2 in the x-axis direction and/or the y-axis direction from samples at an upper boundary within the block 2100 may be used for intra prediction of the block 2100.

In an embodiment, when information intra_luma_ref_idx indicating the reference line indicates 2, samples at a left boundary within the block 2100 and samples of a line 2230 spaced apart by an offset of 3 in the x-axis direction and/or the y-axis direction from samples at an upper boundary within the block 2100 may be used for intra prediction of the block 2100.

In the multiple reference line mode, not only samples immediately adjacent to the block 2100, but also samples spaced apart from the boundary of the block 2100 by an offset greater than 1 may be used as reference samples, and thus, the accuracy of prediction may be enhanced.

The number and locations of the reference lines 2210, 2220, and 2230 shown in FIG. 22 may be variously changed.

Hereinafter, a method of determining an intra prediction mode of a current block is described.

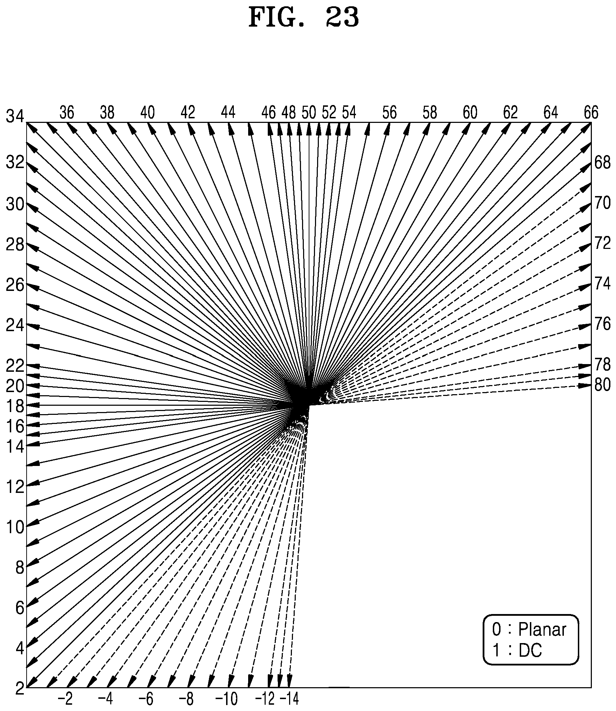

FIG. 23 is a diagram illustrating types of intra prediction modes according to an embodiment.

To perform intra prediction on the current block, the prediction decoder 2030 may determine an intra prediction mode of the current block.

The intra prediction mode of the current block may be any one of a plurality of intra prediction modes.

In an embodiment, the plurality of intra prediction modes may include directional intra prediction modes and non-directional intra prediction modes. Hereinafter, the directional intra prediction mode may be referred to as a directional mode, and the non-directional intra prediction mode may be referred to as a non-directional mode.

Referring to FIG. 23, in an embodiment, the plurality of intra prediction modes may include a non-directional planar mode of 0, a non-directional DC mode of 1, and directional angular modes of 2 to 66.

As wide angle intra prediction is adopted in the VVC standard, directional modes of -14 to -1 and directional modes of 67 to 80 may be used for rectangular blocks.

In the angular modes, locations of reference samples for generating prediction samples of a current block may be identified based on a prediction direction indicated by the angular modes. For example, in mode 34, reference samples located in a direction of -32 degrees relative to samples in the current block may be identified, and a predicted block of the current block may be generated from the identified reference samples.

The prediction direction indicated by the angular modes may be referred to as a prediction angle. For example, the prediction angle indicated by the angular modes may be expressed a variable intraPredAngle.

The intra prediction modes shown in FIG. 23 are only examples, and the number and types of the intra prediction modes available in intra prediction may be variously set.

In standards such as High Efficiency Video Coding (HEVC) and Versatile video coding (VVC), an intra prediction mode indicated y information obtained from a bitstream may be determined as the intra prediction mode of the current block. In standards such as HEVC and VVC or the like supporting dozens of intra prediction modes, a PID or flag for indicating any one intra prediction mode among a plurality of intra prediction modes may be a factor that increases bitrate.

In an embodiment, the prediction decoder 2030 may determine an intra prediction mode of the current block by using samples reconstructed before the current block. In this case, information indicating any one intra prediction mode among the plurality of intra prediction modes may be omitted from the bitstream, and thus the bitrate of the bitstream may be reduced.

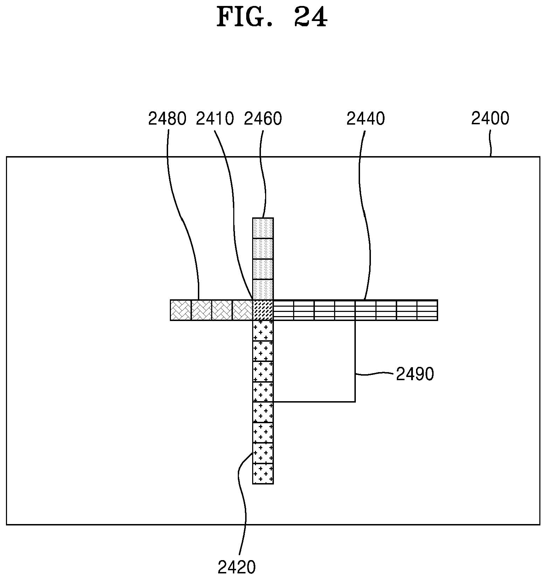

Hereinafter, with reference to FIGS. 24 to 29, a method of deriving an intra prediction mode of the current block by using samples reconstructed before the current block is described.

FIG. 24 is a diagram illustrating sample sets required for deriving the intra prediction mode, according to an embodiment.

To determine an intra prediction mode of a current block 2490, the prediction decoder 2030 may identify sample sets reconstructed before the current block 2490.

Referring to FIG. 24, the sample sets may include at least one of a first sample set 2420 located below an upper left sample 2410 reconstructed before the current block 2490 within a current image 2400, a second sample set 2440 located to the right of the upper left sample 2410, a third sample set 2460 located on the top of the upper left sample 2410, or a fourth sample set 2480 located to the left of the upper left sample 2410.

In an embodiment, samples included in the first sample set 2420 may be referred to as first samples, and samples included in the second sample set 2440 may be referred to as second samples. In addition, samples included in the third sample set 2460 may be referred to as third samples, and samples included in the fourth sample set 2480 may be referred to as fourth samples.

When the coordinates of the upper left sample inside the current block 2490 are (x, y), the coordinates of the upper left sample 2410 reconstructed before the current block 2490 may be (x-1, y-1).

In an embodiment, when the coordinates of the upper left sample 2410 are (x-1, y-1), the coordinates of samples included in the first sample set 2420 may be (x-1, y) to (x-1, y+a) (a+1 is the number of samples included in the first sample set 2420). In addition, the coordinates of samples included in the second sample set 2440 may be (x, y-1) to (x+b, y-1) (b+1 is the number of samples included in the second sample set 2440). In addition, the coordinates of samples included in the third sample set 2460 may be (x-1, y-c) to (x-1, y-2) (c-1 is the number of samples included in the third sample set 2460). In addition, the coordinates of samples included in the fourth sample set 2480 may be (x-d, y-1) to (x-2, y-1) (d-1 is the number of samples included in the fourth sample set 2480).

In an embodiment, the prediction decoder 2030 may derive an intra prediction mode of the current block 2490 by using two or more sample sets among four sample sets shown in FIG. 24.

The number of samples included in the first sample set 2420, the second sample set 2440, the third sample set 2460, and the fourth sample set 2480 may be variously determined.

In an embodiment, the number of samples included in the first sample set 2420 may be greater than or equal to the number of samples of the current block 2490 in the vertical direction (or the height of the current block 2490). For example, the number of samples included in the first sample set 2420 may be twice the number of samples of the current block 2490 in the vertical direction.

In an embodiment, the number of samples included in the second sample set 2440 may be greater than or equal to the number of samples of the current block 2490 in the horizontal direction (or the width of the current block 2490). For example, the number of samples included in the second sample set 2440 may be twice the number of samples of the current block 2490 in the horizontal direction.

In an embodiment, the number of samples included in the third sample set 2460 may be less than the number of samples included in the first sample set 2420, and the number of samples included in the fourth sample set 2480 may be less than the number of samples included in the second sample set 2440.

The reason for setting the number of samples included in the third sample set 2460 and the fourth sample set 2480 to be less than that of the first sample set 2420 and the second sample set 2440 is to ensure stable memory management. When the number of samples included in the third sample set 2460 and the fourth sample set 2480 increases, samples that have already been reconstructed must be stored in memory for a long time, and the load due to memory access increases, and thus a relatively small number of samples are stored as the third sample set 2460 and the fourth sample set 2480.

To test a plurality of directional modes, the prediction decoder 2030 may perform intra prediction using any one sample set as a reference sample set according to each of the plurality of directional modes, so as to generate a prediction sample set corresponding to another sample set. This may be understood as intra-predicting, from onesample set, another sample set according to each of the plurality of directional modes.

The prediction decoder 2030 may determine, by considering a prediction direction indicated by the plurality of directional modes, which sample set is to be used as a reference sample set, and which sample set's prediction sample set is to be generated.

The prediction decoder 2030 may determine which directional mode is suitable for the current block 2490 by considering prediction sample sets generated according to each of the plurality of directional modes. To select a directional mode suitable for the current block 2490, cost values corresponding to the prediction sample sets may be calculated.

The cost value may be a value indicating the accuracy of intra prediction. The higher the accuracy of intra prediction, the lower the cost value may be calculated, and conversely, the lower the accuracy of intra prediction, the higher the cost value may be calculated.

In an embodiment, before testing the plurality of directional modes, the prediction decoder 2030 may identify directional modes that may be applied to the current block 2490, and determine an intra prediction mode of the current block 2490 among the identified directional modes.

The prediction decoder 2030 may identify the directional modes that may be applied to the current block 2490, based on the size of the current block 2490. For example, when the size of the current block 2490 is a size to which wide angle intra prediction could be applied (for example, 8x4), the prediction decoder 2030 may identify that directional mode 8 to directional mode 72 are applicable to the current block 2490. In this case, the prediction decoder 2030 may determine the intra prediction mode of the current block 2490 by testing directional mode 8 to directional mode 72. In addition, for example, when the size of the current block 2490 is a size to which wide angle intra prediction cannot be applied, the prediction decoder 2030 may identify that directional mode 2 to directional mode 66 are applicable to the current block 2490. In this case, the prediction decoder 2030 may determine the intra prediction mode of the current block 2490 by testing directional mode 2 to directional mode 66.

In an embodiment, the prediction decoder 2030 may identify directional modes that may be applied to the current block 2490, based on a directional mode of a previous block reconstructed before the current block 2490. Because blocks in the current image may have similar directionality, a directional mode suitable for the current block 2490 may be promptly determined by referring to the directional mode of the previous block.

The previous block reconstructed before the current block 2490 may include a block located to the left of the current block 2490, a block located on the top of the current block 2490, or a block located on the upper left of the current block 2490.

When the previous block reconstructed before the current block 2490 is reconstructed through intra prediction, the prediction decoder 2030 may identify directional modes that may be applied to the current block 2490, based on the directional mode of the previous block.

The prediction decoder 2030 may determine that directional modes adjacent to the directional mode of the previous block may be applied to the current block 2490. The directional modes adjacent to the directional mode of the previous block may refer to directional modes having mode numbers that are identical/similar to a mode number of the directional mode of the previous block.

For example, when the intra prediction mode of the previous block is directional mode of k (k is an integer), the prediction decoder 2030 may determine that a directional mode of k-a (a is an integer) to a directional mode of k+a may be applied to the current block 2490.

When the directional modes that may be applied to the current block 2490 are identified, the prediction decoder 2030 may test which directional mode among the identified directional modes is suitable for the current block 2490.

In an embodiment, to test the plurality of directional modes, the prediction decoder 2030 may group the plurality of directional modes (for example, the plurality of directional modes determined to be applicable to the current block 2490) according to a prediction direction.

For example, the prediction decoder 2030 may classify directional modes in which the prediction direction points to the lower left into a first group, directional modes in which the prediction direction points to the upper left into a second group, and directional modes in which the prediction direction points to the upper right into a third group.

Referring to FIG. 23, the directional mode -14 to the directional mode 17 indicating the lower left may be classified into the first group, the directional mode 19 to the directional mode 49 indicating the upper left may be classified into the second group, and the directional mode 51 to the directional mode 80 indicating the upper right may be classified into the third group.

Horizontal mode 18 may be exist between the directional modes of the first group and the directional modes of the second group, and vertical mode 50 may be present between the directional modes of the second group and the directional modes of the third group. The horizontal mode may be referred to as the directional mode of the fourth group and the vertical mode may be referred to as the directional mode of the fifth group.

The reason why the plurality of directional modes are classified into a plurality of groups is that a sample set used as a reference sample set and a sample set to be predicted may vary depending on the prediction direction. For directional modes belonging to the same group, the same sample set is used as a reference sample set, and the sample set to be predicted may be the same.

The grouping of the directional modes according to prediction direction is for convenience of explanation, and the grouping operation may or may not be performed by the prediction decoder 2030. In other words, in an embodiment, the prediction decoder 2030 may determine to which group a specific directional mode belongs, determine which sample sets are necessary for the directional mode belonging to the corresponding group, and test a specific directional mode by using the determined sample sets. Alternatively, the prediction decoder 2030 may test, without a separate grouping operation, the specific directional mode by using predetermined sample sets.

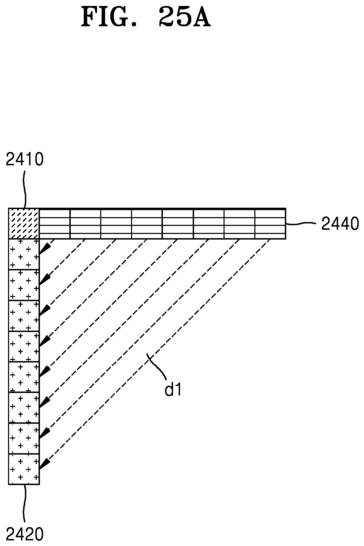

A method of calculating a cost value of each of a plurality of directional modes to determine an intra prediction mode of the current block 2490 is described with reference to FIGS. 25A to 29.

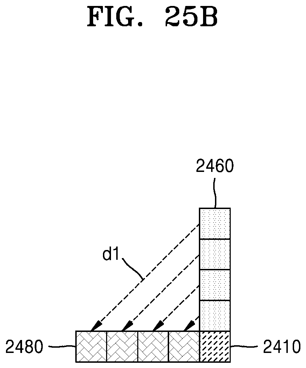

FIG. 25A and 25B are diagrams for describing a method of calculating a cost value corresponding a directional mode of the first group, according to an embodiment.

As shown in FIG. 25A, the first sample set 2420 and the second sample set 2440 may be used for a directional mode of the first group pointing in a lower left direction d1. The first sample set 2420 may be located below the upper left sample 2410 reconstructed before the current block 2490, and the second sample set 2440 may be located to the right of the upper left sample 2410 reconstructed before the current block 2490.

The prediction decoder 2030 may generate a prediction sample set corresponding to the second sample set 2440 by using, as a reference sample set, the first sample set 2420 indicated by the prediction direction d1 of the directional mode of the first group.

The number of samples included in the prediction sample set may be equal to the number of samples included in the second sample set 2440.

To generate a prediction sample of any one sample within the second sample set 2440, one or more samples within the first sample set 2420 located on the prediction direction d1 with respect to the corresponding sample may be used.

In an embodiment, when the prediction sample of any one sample within the second sample set 2440 is generated, an n-tap filter may be applied to a plurality of samples within the first sample set 2420 to consider a fractional position. Here, n may be an integer of 1 or more. In an embodiment, n may be adaptively determined according to at least one of an area, aspect ratio, width, height of the current block 2490, an edge strength of the first sample set 2420, or an edge strength of the second sample set 2440. A method of calculating an edge strength is described below.

In an embodiment, the prediction decoder 2030 may generate sub samples by interpolating integer samples included in the second sample set 2440, and generate prediction samples corresponding to the integer samples and the sub samples based on the first sample set 2420.

The prediction decoder 2030 may calculate a cost value corresponding to a directional mode of the first group by comparing the prediction sample set and the second sample set 2440. The cost value corresponding to the directional mode of the first group may be based on difference values between sample values within the prediction sample set and sample values within the second sample set 2440.

In an embodiment, the more similar the prediction sample set is to the second sample set 2440, the less the cost value may be calculated.

In an embodiment, a cost value corresponding to a result of the comparison between the prediction sample set and the second sample set 2440 may include a sum of absolute difference (SAD), a sum of squared error (SSE), a mean removed SAD (MR-SAD), or a mean of absolute difference (MAD) between the sample values within the prediction sample set and the sample values within the second sample set 2440.

Next, as shown in FIG. 25B, the third sample set 2460 and the fourth sample set 2480 may be used to test a directional mode of the first group. The third sample set 2460 may be located on the top of the upper left sample 2410 reconstructed before the current block 2490, and the fourth sample set 2480 may be located to the left of the upper left sample 2410 reconstructed before the current block 2490.

The prediction decoder 2030 may generate a prediction sample set corresponding to the third sample set 2460 by using, as a reference sample set, the fourth sample set 2480 indicated by the prediction direction d1 of the directional mode of the first group.

The number of samples included in the prediction sample set may be equal to the number of samples included in the third sample set 2460.

To test a prediction sample of any one sample within the third sample set 2460, one or more samples within the fourth sample set 2480 located in the prediction direction d1 based on the corresponding sample may be used.

In an embodiment, when the prediction sample of any one sample within the third sample set 2460 is generated, an n-tap filter may be applied to a plurality of samples within the fourth sample set 2480 to consider a fractional position. Here, n may be an integer of 1 or more. In an embodiment, n may be adaptively determined according to at least one of an area, aspect ratio, width, height of the current block 2490, an edge strength of the third sample set 2460, or an edge strength of the fourth sample set 2480.

In an embodiment, the prediction decoder 2030 may generate sub samples by interpolating integer samples included in the third sample set 2460, and generate prediction samples corresponding to the integer samples and the sub samples based on the fourth sample set 2480.

A cost value corresponding to a result of comparison between the prediction sample set and the third sample set 2460 may include a SAD, SSE, MR-SAD, or MAD between sample values within the prediction sample set and sample values within the third sample set 2460.

In an embodiment, a cost value calculated based on the first sample set 2420 and the second sample set 2440 shown in FIG. 25A may be referred to as a first preliminary cost value, and a cost value calculated based on the third sample set 2460 and the fourth sample set 2480 shown in FIG. 25B may be referred to as a second preliminary cost value.

The prediction decoder 2030 may determine a cost value of a directional mode of the first group by using at least one of the first preliminary cost value of the directional mode of the first group or the second preliminary cost value of the directional mode of the first group. The cost value of the directional mode of the first group may be used for comparison with cost values of other directional modes.

In an embodiment, the first preliminary cost value may be determined as the cost value of the directional mode of the first group.

In addition, in an embodiment, the second preliminary cost value may be determined as the cost value of the directional mode of the first group.

In addition, in an embodiment, a smaller value between the first preliminary cost value and the second preliminary cost value may be determined as the cost value of the directional mode of the first group.

In addition, in an embodiment, the average of the first preliminary cost value and the second preliminary cost value may be determined as the cost value of the directional mode of the first group.

When a plurality of directional modes classified into the first group, the prediction decoder 2030 may calculate cost values for each of the plurality of directional modes.

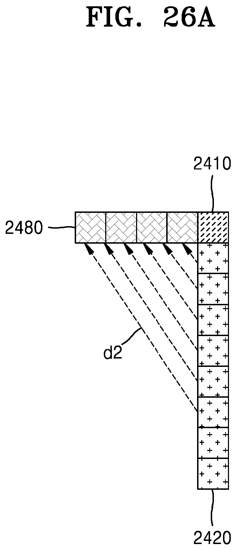

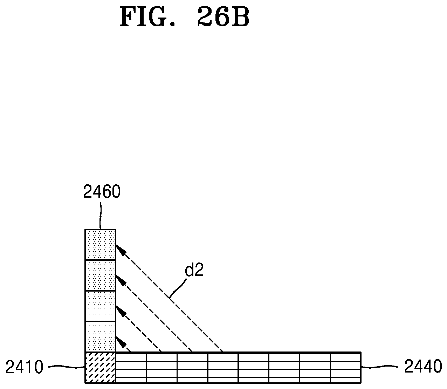

FIG. 26A and 26B are diagrams for describing a method of calculating a cost value corresponding a directional mode of the second group, according to an embodiment.

As shown in FIG. 26A, the first sample set 2420 and the fourth sample set 2480 may be used for testing the directional mode of the second group pointing to an upper left direction d2.

The prediction decoder 2030 may generate a prediction sample set corresponding to the first sample set 2420 by using, as a reference sample set, the fourth sample set 2480 indicated by the prediction direction d2 of the directional mode of the second group.

The number of prediction samples included in the prediction sample set may be equal to the number of samples included in the first sample set 2420.

To test a prediction sample of any one sample within the first sample set 2420, one or more samples within the fourth sample set 2480 located in the prediction direction d2 based on the corresponding sample may be used.

In an embodiment, an n-tap filter may be applied to a plurality of samples within the fourth sample set 2480 to generate a prediction sample of any one sample within the first sample set 2420. Here, n may be an integer of 1 or more. In an embodiment, n may be adaptively determined according to at least one of an area, aspect ratio, width, height of the current block 2490, an edge strength of the first sample set 2420, or an edge strength of the fourth sample set 2480.

In an embodiment, the prediction decoder 2030 may generate sub samples by interpolating integer samples included in the first sample set 2420, and generate prediction samples corresponding to the integer samples and the sub samples based on the fourth sample set 2480.

A cost value corresponding to a result of comparison between the prediction sample set and the first sample set 2420 may include a SAD, SSE, MR-SAD, or MAD between sample values within the prediction sample set and sample values within the first sample set 2420.

Next, as shown in FIG. 26B, the second sample set 2440 and the third sample set 2460 may be used to test the directional mode of the second group.

The prediction decoder 2030 may generate a prediction sample set corresponding to the second sample set 2440 by using, as a reference sample set, the third sample set 2460 indicated by the prediction direction d2 of the directional mode of the second group.

The number of prediction samples included in the prediction sample set may be equal to the number of samples included in the second sample set 2440.

To test a prediction sample of any one sample within the second sample set 2440, one or more samples within the third sample set 2460 located in the prediction direction d2 based on the corresponding sample may be used.

In an embodiment, an n-tap filter may be applied to a plurality of samples within the third sample set 2460 to generate a prediction sample of any one sample within the second sample set 2440. Here, n may be an integer of 1 or more. In an embodiment, n may be adaptively determined according to at least one of an area, aspect ratio, width, height of the current block 2490, an edge strength of the second sample set 2440, or an edge strength of the third sample set 2460.

In an embodiment, the prediction decoder 2030 may generate sub samples by interpolating integer samples included in the second sample set 2440, and generate prediction samples corresponding to the integer samples and the sub samples based on the third sample set 2460.

A cost value corresponding to a result of comparison between the prediction sample set and the second sample set 2440 may include a SAD, SSE, MR-SAD, or MAD between sample values within the prediction sample set and sample values within the second sample set 2440.

A cost value calculated based on the first sample set 2420 and the fourth sample set 2480 shown in FIG. 26A may be referred to as a first preliminary cost value, and a cost value calculated based on the second sample set 2440 and the third sample set 2460 shown in FIG. 26B may be referred to as a second preliminary cost value.

The prediction decoder 2030 may determine a cost value of the directional mode of the second group by using at least one of the first preliminary cost value of the directional mode of the second group calculated based on the first sample set 2420 and the fourth sample set 2480 or the second preliminary cost value of the directional mode of the second group calculated based on the second sample set 2440 and the third sample set 2460. The cost value of the directional mode of the second group may be used for comparison with cost values of other directional modes.

In an embodiment, the first preliminary cost value of the directional mode of the second group may be determined as the cost value of the directional mode of the second group.

In addition, in an embodiment, the second preliminary cost value of the directional mode of the second group may be determined as the cost value of the directional mode of the second group.

In addition, in an embodiment, a smaller value among the first preliminary cost value of the directional mode of the second group and the second preliminary cost value of the directional mode of the second group may be determined as the cost value of the directional mode of the second group.

In addition, in an embodiment, the average of the first preliminary cost value of the directional mode of the second group and the second preliminary cost value of the directional mode of the second group may be determined as the cost value of the directional mode of the second group.

When a plurality of directional modes classified into the second group, the prediction decoder 2030 may calculate cost values for each of the plurality of directional modes.

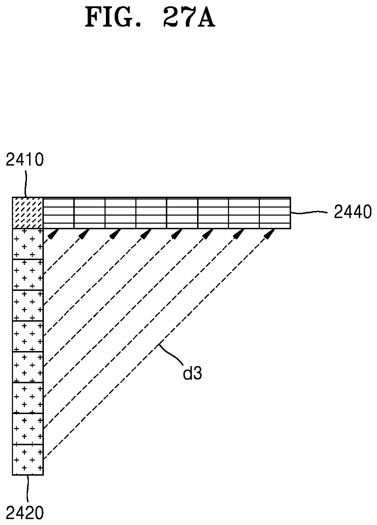

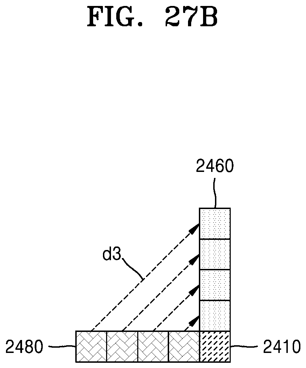

FIG. 27A and 27B are diagrams for describing a method of calculating a cost value corresponding a directional mode of the third group, according to an embodiment.

As shown in FIG. 27A, the first sample set 2420 and the second sample set 2440 may be used for a directional mode of the third group pointing in an upper right direction.

The prediction decoder 2030 may generate a prediction sample set corresponding to the first sample set 2420 by using, as a reference sample set, the second sample set 2440 indicated by a prediction direction d3 of the directional mode of the third group.

The number of prediction samples included in the prediction sample set may be equal to the number of samples included in the first sample set 2420.

To test a prediction sample of any one sample within the first sample set 2420, one or more samples within the second sample set 2440 located in the prediction direction d3 based on the corresponding sample may be used.

In an embodiment, an n-tap filter may be applied to a plurality of samples within the second sample set 2440 to generate a prediction sample of any one sample within the first sample set 2420. Here, n may be an integer of 1 or more. In an embodiment, n may be adaptively determined according to at least one of an area, aspect ratio, width, height of the current block 2490, an edge strength of the first sample set 2420, or an edge strength of the second sample set 2440.

In an embodiment, the prediction decoder 2030 may generate sub samples by interpolating integer samples included in the first sample set 2420, and generate prediction samples corresponding to the integer samples and the sub samples based on the second sample set 2440.

A cost value corresponding to a result of comparison between the prediction sample set and the first sample set 2420 may include a SAD, SSE, MR-SAD, or MAD between sample values within the prediction sample set and sample values within the first sample set 2420.

Next, as shown in FIG. 27B, the third sample set 2460 and the fourth sample set 2480 may be used to test a directional mode of the third group.

The prediction decoder 2030 may generate a prediction sample set corresponding to the fourth sample set 2480 by using, as a reference sample set, the third sample set 2460 indicated by the prediction direction d3 of the directional mode of the third group.

The number of prediction samples included in the prediction sample set may be equal to the number of samples included in the fourth sample set 2480.

To test a prediction sample of any one sample within the fourth sample set 2480, one or more samples within the third sample set 2460 located in the prediction direction d3 based on the corresponding sample may be used.

In an embodiment, an n-tap filter may be applied to a plurality of samples within the third sample set 2460 to generate a prediction sample of any one sample within the fourth sample set 2480. Here, n may be an integer of 1 or more. In an embodiment, n may be adaptively determined according to at least one of an area, aspect ratio, width, height of the current block 2490, an edge strength of the third sample set 2460, or an edge strength of the fourth sample set 2480.

In an embodiment, the prediction decoder 2030 may generate sub samples by interpolating integer samples included in the fourth sample set 2480, and generate prediction samples corresponding to the integer samples and the sub samples based on the third sample set 2460.

A cost value corresponding to a result of comparison between the prediction sample set and the fourth sample set 2480 may include a SAD, SSE, MR-SAD, or MAD between sample values within the prediction sample set and sample values within the fourth sample set 2480.

A cost value calculated based on the first sample set 2420 and the second sample set 2440 shown in FIG. 27A may be referred to as a first preliminary cost value, and a cost value calculated based on the third sample set 2460 and the fourth sample set 2480 shown in FIG. 27B may be referred to as a second preliminary cost value.

The prediction decoder 2030 may determine a cost value of a directional mode of the third group by using at least one of the first preliminary cost value of the directional mode of the third group or the second preliminary cost value of the directional mode of the third group. The cost value of the directional mode of the third group may be used for comparison with cost values of other directional modes.

In an embodiment, the first preliminary cost value of the directional mode of the third group may be determined as the cost value of the directional mode of the third group.

In addition, in an embodiment, the second preliminary cost value of the directional mode of the third group may be determined as the cost value of the directional mode of the third group.

In addition, in an embodiment, a smaller value among the first preliminary cost value of the directional mode of the third group and the second preliminary cost value of the directional mode of the third group may be determined as the cost value of the directional mode of the third group.

In addition, in an embodiment, the average of the first preliminary cost value of the directional mode of the third group and the second preliminary cost value of the directional mode of the third group may be determined as the cost value of the directional mode of the third group.

When a plurality of directional modes classified into the third group, the prediction decoder 2030 may calculate cost values for each of the plurality of directional modes.

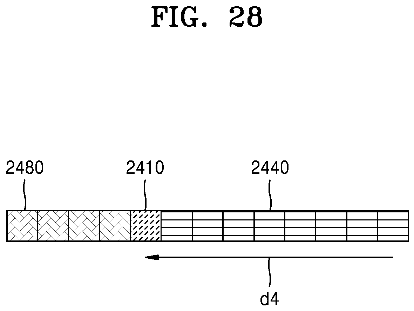

FIG. 28 is a diagram for describing a method of calculating a cost value corresponding a horizontal mode, according to an embodiment.

To calculate the cost value corresponding to the horizontal mode, the upper left sample 2410 and the second sample set 2440 reconstructed before the current block 2490 may be used.

The prediction decoder 2030 may generate a prediction sample set corresponding to the second sample set 2440 by using, as a reference sample, the upper left sample 2410 indicated by a prediction direction d4 of the horizontal mode. In an embodiment, sample values of prediction samples may be determined to be equal to a sample value of the upper left sample 2410.

The number of prediction samples included in the prediction sample set may be equal to the number of samples included in the second sample set 2440.

A cost value corresponding to a result of comparison between the prediction sample set and the second sample set 2440 may include a SAD, SSE, MR-SAD, or MAD between sample values within the prediction sample set and sample values within the second sample set 2440.

In an embodiment, to calculate the cost value corresponding to the horizontal mode, the upper left sample 2410 and the fourth sample set 2480 reconstructed before the current block 2490 may be used.

The prediction decoder 2030 may generate a prediction sample corresponding to the upper left sample 2410 by using, as a reference sample set, the fourth sample set 2480 indicated by the prediction direction d4 of the horizontal mode. In an embodiment, a sample value of the prediction sample may be determined by applying sample values of samples included in the fourth sample set 2480 to a certain formula.

A cost value corresponding to a result of comparison between the prediction sample and the upper left sample 2410 may include a SAD, SSE, MR-SAD, or MAD between the sample value of the prediction sample and the sample value of the upper left sample 2410.

With respect to the horizontal mode, a cost value calculated based on the second sample set 2440 and the upper left sample 2410 may be referred to as a first preliminary cost value, and a cost value calculated based on the upper left sample 2410 and the fourth sample set 2480 may be referred to as a second preliminary cost value.

The prediction decoder 2030 may determine a cost value of the horizontal mode by using at least one of the first preliminary cost value of the horizontal mode or the second preliminary cost value of the horizontal mode. The cost value of the horizontal mode may be used for comparison with cost values of other directional modes.

In an embodiment, the first preliminary cost value of the horizontal mode may be determined as the cost value of the horizontal mode.

In addition, in an embodiment, the second preliminary cost value of the horizontal mode may be determined as the cost value of the horizontal mode.

In addition, in an embodiment, a less value among the first preliminary cost value of the horizontal mode and the second preliminary cost value of the horizontal mode may be determined as the cost value of the horizontal mode.

In addition, in an embodiment, the average of the first preliminary cost value of the horizontal mode and the second preliminary cost value of the horizontal mode may be determined as the cost value of the horizontal mode.

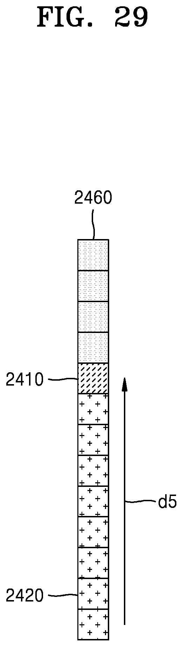

FIG. 29 is a diagram for describing a method of calculating a cost value corresponding a vertical mode, according to an embodiment.

To calculate the cost value corresponding to the vertical mode, the upper left sample 2410 and the first sample set 2420 reconstructed before the current block 2490 may be used.

The prediction decoder 2030 may generate a prediction sample set corresponding to the first sample set 2420 by using, as a reference sample, the upper left sample 2410 indicated by a prediction direction d5 of the vertical mode. In an embodiment, sample values of prediction samples may be determined to be equal to a sample value of the upper left sample 2410.

The number of prediction samples included in the prediction sample set may be equal to the number of samples included in the first sample set 2420.

A cost value corresponding to a result of comparison between the prediction sample set and the first sample set 2420 may include a SAD, SSE, MR-SAD, or MAD between sample values within the prediction sample set and sample values within the first sample set 2420.

In an embodiment, to calculate the cost value corresponding to the vertical mode, the upper left sample 2410 and the third sample set 2460 reconstructed before the current block 2490 may be used.

The prediction decoder 2030 may generate a prediction sample corresponding to the upper left sample 2410 by using, as a reference sample set, the third sample set 2460 indicated by the prediction direction d5 of the vertical mode. In an embodiment, a sample value of the prediction sample may be determined by applying sample values of samples included in the third sample set 2460 to a certain formula.

A cost value corresponding to a result of comparison between the prediction sample and the upper left sample 2410 may include a SAD, SSE, MR-SAD, or MAD between the sample value of the prediction sample and the sample value of the upper left sample 2410.

With respect to the vertical mode, a cost value calculated based on the first sample set 2420 and the upper left sample 2410 may be referred to as a first preliminary cost value, and a cost value calculated based on the upper left sample 2410 and the third sample set 2460 may be referred to as a second preliminary cost value.

The prediction decoder 2030 may determine a cost value of the vertical mode by using at least one of the first preliminary cost value of the vertical mode or the second preliminary cost value of the vertical mode. The cost value of the vertical mode may be used for comparison with cost values of other directional modes.

In an embodiment, the first preliminary cost value of the vertical mode may be determined as the cost value of the vertical mode.

In addition, in an embodiment, the second preliminary cost value of the vertical mode may be determined as the cost value of the vertical mode.

In addition, in an embodiment, a less value among the first preliminary cost value of the vertical mode and the second preliminary cost value of the vertical mode may be determined as the cost value of the vertical mode.

In addition, in an embodiment, the average of the first preliminary cost value of the vertical mode and the second preliminary cost value of the vertical mode may be determined as the cost value of the vertical mode.

In an embodiment, when cost values of the directional modes of the first group, cost values of the directional modes of the second group, cost values of the directional modes of the third group, a cost value of the horizontal mode, and a cost value of the vertical mode are calculated, the prediction decoder 2030 may determine, as an intra prediction mode of the current block 2490, a directional mode having the smallest cost value among the calculated cost values.

In an embodiment, when a test is performed on directional modes that may be applied to the current block 2490, cost values of directional modes that cannot be applied to the current block 2490 may not be calculated. For example, with respect to the current block 2490 in a square shape, cost values corresponding to directional modes -14 to -1 shown in FIG. 23 and directional modes 67 to 80 may not be calculated.

In an embodiment, the number of samples included in the respective first sample set 2420, the second sample set 2440, the third sample set 2460, and the fourth sample set 2480 may be different from each other, and thus the number of samples included in prediction sample sets thereof may also be different from each other. Accordingly, in an embodiment, to compare cost values of directional modes belonging to different groups, MAD may be calculated as the cost values. For example, MADs of the directional modes of the first group, MADs of the directional modes of the second group, MADs of the directional modes of the third group, a MAD of the horizontal mode, and a MAD of the vertical mode may be calculated, and the prediction decoder 2030 may determine a directional mode having the smallest MAD as an intra prediction mode of the current block 2490.

The MAD may correspond to the average of absolute values of difference values between sample values included in a sample set and sample values included in a prediction sample set. In other words, because a MAD may be calculated as a value obtained by dividing the sum of the absolute values of the difference values between the sample values included in the sample set and the sample values included in the prediction sample set by the number of samples, accurate cost comparison may be possible even when the number of samples included in the prediction sample sets are different from each other.

In an embodiment, when the number of samples of the prediction sample sets generated according to a plurality of directional modes are the same, a SAD, SSE, or MR-SAD may be calculated as cost values for the plurality of directional modes.

In an embodiment, the prediction decoder 2030 may select a representative directional mode among directional modes belonging to the respective groups, and compare cost values of the representative directional modes of the respective groups and determine an intra prediction mode of the current block 2490.

As described above, when the cost values of the directional modes of the first group are calculated through the embodiments described with reference to FIGS. 25A and 25B, the prediction decoder 2030 may determine a directional mode having the smallest cost value as a representative directional mode of the first group. The number of samples of the prediction sample sets generated based on the directional modes of the first group may be equal to each other, and thus a SAD, SSE, or MR-SAD may be used as a cost value when the representative directional mode is determined.

In addition, when the cost values of the directional modes of the second group and the cost values of the directional modes of the third group are calculated, the prediction decoder 2030 may determine a directional mode having the smallest cost value among the directional modes of the second group as a representative directional mode of the second group, and determine a directional mode having the smallest cost value among the directional modes of the third group as a representative directional mode of the third group.

The prediction decoder 2030 may compare the cost values of the representative directional mode of the first group, the representative directional mode of the second group, the representative directional mode of the third group, the vertical mode, and the vertical mode, and determine a directional mode having the smallest cost value as an intra prediction mode of the current block 2490. Here, the cost value used for determining the intra prediction mode of the current block 2490 may be MAD. The reason is that the number of samples of prediction sample sets generated according to representative directional modes of different groups may be different from each other.

According to the embodiment described above, a plurality of directional modes may be tested based on sample sets reconstructed before the current block 2490, and the intra prediction mode of the current block 2490 may be determined based on the test results. The reason why the plurality of directional modes are tested based on the sample sets is the assumption that the current block 2490 and sample sets adjacent to the current block 2490 share a certain directionality.

Accordingly, when a directionality (or edge) does not exist within the sample sets, it may be preferable to determine the intra prediction mode of the current block 2490 as non-directional mode.

The prediction decoder 2030 may determine whether an edge exists in at least one sample set among the first sample set 2420, the second sample set 2440, the third sample set 2460, or the fourth sample set 2480 shown in FIG. 24.

In an embodiment, an edge exists in at least one sample set, the prediction decoder 2030 may determine the intra prediction mode of the current block 2490 through a testing process of the directional modes described above.

In an embodiment, when an edge does not exist in at least one sample set, the prediction decoder 2030 may determine the prediction mode of the current block 2490 as non-directional mode.

For example, when an edge does not exist in the first sample set 2420 and the second sample set 2440, the prediction decoder 2030 may determine the intra prediction mode of the current block 2490 as non-directional planar mode 0 or non-directional DC mode 1. When an edge exists in at least one of the first sample set 2420 and the second sample set 2440, the prediction decoder 2030 may perform a test on the directional modes, and determine the intra prediction mode of the current block 2490 among the directional modes according to the test results.

The prediction decoder 2030 may calculate an edge strength of a sample set to determine whether an edge exists.

In an embodiment, the edge strength of the sample set may be determined through a second derivative (Laplacian) value.

In an embodiment, when coordinates of the upper left sample included in the current block 2490 are (0, 0), coordinates of samples included in the first sample set 2420 or the third sample set 2460 are (x, y), and a sample value of a sample of (x, y) is p[x][y], an edge strength of the first sample set 2420 or the third sample set 2460 may be calculated according to Mathematical Formula 1 shown below.$edge strength = {max}_{a \leq y \leq b} \left(\left|2p\left[x\right]\left[y\right]-p\left[x\right]\left[y-1\right]-p\left[x\right]\left[y+1\right]\right|\right)$

An x coordinate of samples within the first sample set 2420 or the third sample set 2460 may all be the same. When coordinates of an uppermost sample within the first sample set 2420 or the third sample set 2460 are (x, a) and coordinates of a lowermost sample within the first sample set 2420 or the third sample set 2460 are (x, b), y may have a value from a to b.

In an embodiment, when the coordinates of the upper left sample included in the current block 2490 are (0, 0), coordinates of samples included in the second sample set 2440 or the fourth sample set 2480 are (x, y), and a sample value of a sample of (x, y) is p[x][y], an edge strength of the second sample set 2440 or the fourth sample set 2480 may be calculated according to Mathematical Formula 2 shown below.$edge strength = {max}_{c \leq x \leq d} \left(\left|2p\left[x\right]\left[y\right]-p\left[x-1\right]\left[y\right]-p\left[x+1\right]\left[y\right]\right|\right)$

A y coordinate of samples within the second sample set 2440 or the fourth sample set 2480 may all be the same. When coordinates of a leftmost sample within the second sample set 2440 or the fourth sample set 2480 are (c, y) and coordinates of a rightmost sample within the second sample set 2440 or the fourth sample set 2480 are (d, y), x may have a value from c to d.

In an embodiment, the prediction decoder 2030 may calculate an edge strength for at least one of the first sample set 2420, the second sample set 2440, the third sample set 2460, or the fourth sample set 2480 according to Mathematical Formula 1 or 2, and when the calculated edge strength is less than a predetermined threshold value, determine that an edge does not exist in the sample set.

For example, the prediction decoder 2030 may calculate the edge strength for the first sample set 2420 according to Mathematical Formula 1, and calculate the edge strength for the second sample set 2440 according to Mathematical Formula 2. In addition, when the edge strength for the first sample set 2420 is less than the predetermined threshold value and the edge strength for the second sample set 2440 is less than the predetermined threshold value, the prediction decoder 2030 may determine the intra prediction mode of the current block 2490 as non-directional mode. When at least one of the edge strength for the first sample set 2420 or the edge strength for the second sample set 2440 is greater than or equal to the predetermined threshold value, the prediction decoder 2030 may perform a test on directional modes so as to determine the intra prediction mode of the current block 2490.

In an embodiment, the prediction decoder 2030 may calculate, as an edge of a sample set, an absolute value of a difference between the maximum sample value and the minimum sample value within the sample set. When the edge strength of the sample set is less than the predetermined threshold value, the prediction decoder 2030 may determine that an edge does not exist in the corresponding sample set. When the edge strength of the sample set is greater than or equal to the predetermined threshold value, the prediction decoder 2030 may determine that an edge exists in the corresponding sample set.

When an absolute value of a difference between a maximum sample value and a minimum sample value within the first sample set 2420 is less than the predetermined threshold value, and an absolute value of a difference between a maximum sample value and a minimum sample value within the second sample set 2440 is less than the predetermined threshold value, the prediction decoder 2030 may determine the intra prediction mode of the current block 2490 as non-directional mode. When at least one of the absolute value of the difference between the maximum sample value and the minimum sample value within the first sample set 2420 or the absolute value of the difference between the maximum sample value and the minimum sample value within the second sample set 2440 is greater than or equal to the predetermined threshold value, a test may be performed on directional modes to determine the intra prediction mode of the current block 2490.

In an embodiment, the prediction decoder 2030 may calculate an edge strength of a sample set as a value obtained by dividing an absolute value of a difference between a maximum sample value and a minimum sample value within the sample set by a width or height of the current block 2490.

For example, an edge strength of the first sample set 2420 or the third sample set 2460 may be calculated as a value obtained by dividing the absolute difference of the difference between the maximum sample value and the minimum sample value within the first sample set 2420 or the third sample set 2460 by the width of the current block 2490. In addition, for example, the edge strength of the second sample set 2440 or the fourth sample set 2480 may be calculated as the absolute value of the difference between the maximum sample value and the minimum sample value within the second sample set 2440 or the fourth sample set 2480.

The reason why the absolute value of the difference between the maximum sample value and the minimum sample value within the first sample set 2420 or the third sample set 2460 by the width of the current block 2490 is that even when an edge exists to the left of the current block 2490, the influence of the left edge on the current block 2490 varies depending on the width of the current block 2490. For example, even when a strong edge exists to the left of the current block 2490, when the width of the current block 2490 is large, the probability that the left edge exists inside the current block 2490 may be small. On the other hand, even when a weak edge exists to the left of the current block 2490, when the width of the current block 2490 is small, the probability that the left edge exists inside the current block 2490 may be large.

Similarly, even when an edge exists on the top of the current block 2490, the influence of the upper edge on the current block 2490 may vary depending on the height of the current block 2490, and thus the edge strength may be calculated as a value obtained by dividing the absolute value of the difference between the maximum sample value and the minimum sample value within the second sample set 2440 or the fourth sample set 2480 by the height of the current block 2490.

In an embodiment, a threshold value to be compared with an edge strength may be determined in various ways.

For example, the threshold value may have a value predetermined between an image encoding apparatus and the image decoding apparatus 2000.

In addition, for example, the threshold value may be adaptively determined according to a bit depth of an image. For example, the threshold value may be determined by Mathematical Formula 3 shown below.$threshold value = 1 ≪ \left(bitDepth-N\right)$

In Mathematical Formula 3, << may be a bitwise operator, bitDepth may be a bit depth, and N may be a predetermined constant.

In addition, for example, the threshold value may be adaptively determined according to a color component of the current block 2490. For example, any one of a plurality of values predetermined between the image encoding apparatus and the image decoding apparatus 2000 may be determined as a threshold value based on whether the color component of the current block 2490 is a luma component or a chroma component. In addition, for example, N of Mathematical Formula 3 may have different values according to whether the color component of the current block 2490 is a luma component or a chroma component.

Hereinafter, a method of determining, in various situations, samples used for deriving an intra prediction mode of a current block is described.

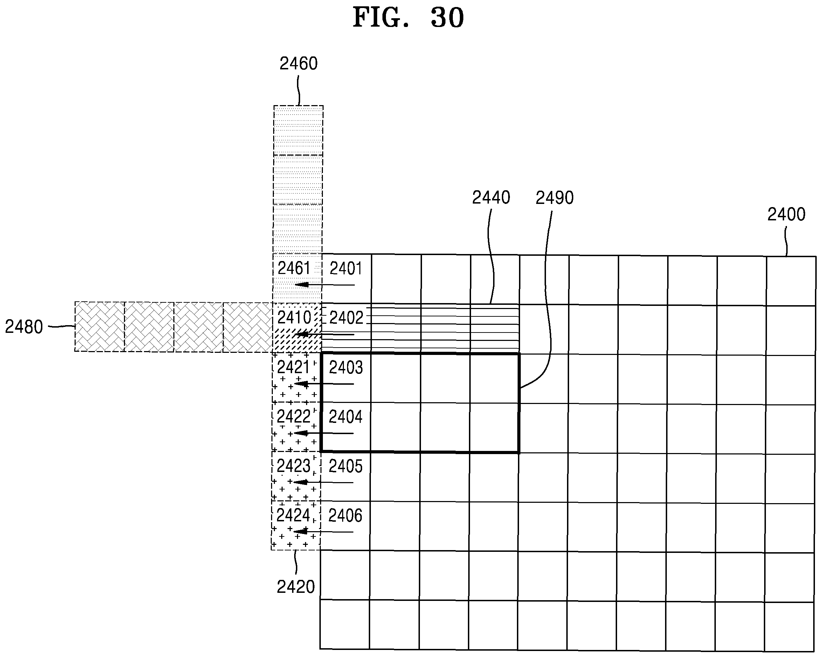

FIG. 30 is a diagram for describing a method of, when some samples required for deriving the intra prediction mode are unavailable, determining sample values of the unavailable samples, according to an embodiment.

To derive the intra prediction mode of the current block 2490, at least one of the upper left sample 2410 reconstructed before the current block 2490, the first sample set 2420 located below the upper left sample 2410, the second sample set 2440 located to the right of the upper left sample 2410, the third sample set 2460 located on the top of the upper left sample 2410, or the fourth sample set 2480 located to the left of the upper left sample 2410 may be used.

The prediction decoder 2030 may determine, according to a predetermined method, a sample value of a sample which is necessary for deriving the intra prediction mode of the current block 2490 but is unavailable among sample included in the first sample set 2420 to the fourth sample set 2480.

A case where a sample is unavailable may include at least one of a case where the sample is located outside the boundary of an image or a case where the sample is included in an upper block that is different from an upper block (for example, a tile) including the current block 2490.

In an embodiment, the prediction decoder 2030 may determine sample values of unavailable samples as a predetermined value (for example, 0). For example, the sample values of the unavailable samples may be predetermined between the image decoding apparatus 2000 and the image encoding apparatus, or may be determined from information included in a bitstream.

In an embodiment, the prediction decoder 2030 may determine the sample values of the unavailable samples by using sample values of available samples closest to the unavailable samples.

Referring to FIG. 30, when the left boundary of the current block 2490 corresponds to the left boundary of the current image 2400, the upper left sample 2410 of the current block 2490, samples included in the first sample set 2420, samples included in the third sample set 2460, and samples included in the fourth sample set 2480 may be located outside the current image 2400. Samples located outside the current image 2400 may be identified as unavailable samples.

Because samples 2401, 2402, 2403, 2404, 2405, and 2406 located at the left boundary of the current image 2400 are closest to a lowermost sample 2461 within the third sample set 2460, the upper left sample 2410, and samples 421, 2422, 2423, and 2424 included in the first sample set 2420, the prediction decoder 2030 may sample values of the respective samples 2401, 2402, 2403, 2404, 2405, and 2406 located at the left boundary of the current image 2400 as sample values of the respective unavailable samples 2461, 2410, 2421, 2422, 2423, and 2424. The arrows shown in FIG. 30 indicate directions in which sample values are copied.

Because an available sample closest to samples included in the fourth sample set 2480 is the sample 2404 located to the right of the upper left sample 2410, sample values of the samples included in the fourth sample set 2480 may be determined as a sample value of the right sample 2402 of the upper left sample 2410. In addition, because an available sample closest to samples included in the third sample set 2460 is the upper left sample 2401 within the current image 2400, sample values of the samples included in the third sample set 2460 may be determined as a sample value of the upper left sample 2401 within the current image 2400.

In an embodiment, the prediction decoder 2030 may identify samples (or sample set) necessary to test a certain directional mode, and when at least some of the identified samples are unavailable, determine sample values of the unavailable samples according to a predetermined method.

In an embodiment, when at least one of the upper left sample 2410 of the current block 2490, the first sample set 2420, the second sample set 2440, the third sample set 2460, or the fourth sample set 2480 is unavailable, the prediction decoder 2030 may determine non-directional mode as the intra prediction mode of the current block 2490. For example, when the first sample set 2420 or the second sample set 2440 is unavailable, the prediction decoder 2030 may determine a planar mode or a DC mode as the intra prediction mode of the current block 2490.

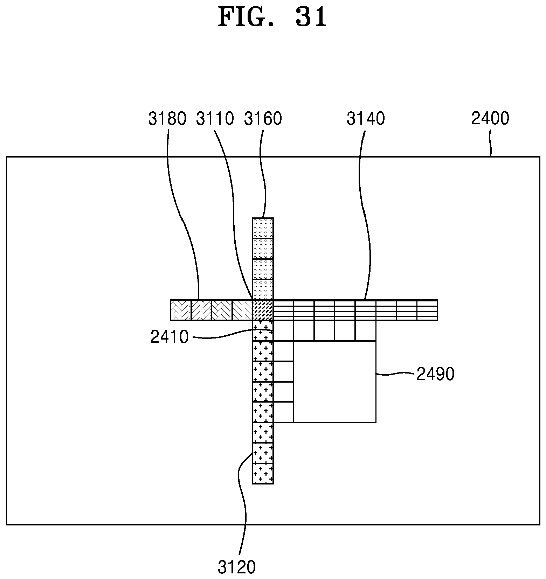

FIG. 31 is a diagram illustrating sample sets required for deriving the intra prediction mode, when a multiple reference line mode is applied to a current block, according to an embodiment.

As described above, in the multiple reference line mode, samples of a reference line selected among a plurality of reference lines may be used as reference samples for intra prediction of the current block 2490.

The prediction decoder 2030 may identify, based on sample sets that are used to derive the intra prediction mode of the current block 2490 based on a reference line selected from among a plurality of reference lines.

In an embodiment, the prediction decoder 2030 may identify sample sets that are used to derive the intra prediction mode from a reference line used for intra prediction. For example, when a reference line used for intra prediction is spaced apart from the current block 2490 by an offset of 2, sample sets may be identified at a location spaced apart from the current block 2490 by the offset of 2.

In an embodiment, the prediction decoder 2030 may identify sample sets for deriving the intra prediction mode based on a reference line at a predetermined location, independently of the reference line used for intra prediction.

FIG. 31 shows sample sets 3120, 3140, 3160, and 3180 that are identified based on a reference line spaced apart from samples of a lower boundary of the current block 2490 and samples of an upper boundary of the current block 2490 by an offset (or sample distance) of 2 in the x-axis direction and/or the y-axis direction. For example, the sample sets 3120, 3140, 3160, and 3180 shown in FIG. 31 may be sample sets when information intra_luma_ref_idx indicating a reference line indicates 1.

When coordinates of an upper left sample 3110 within the current block 2490 are (x, y), coordinates of an upper left sample 3110 reconstructed before the current block 2490 may be (x-2, y-2). The upper left sample 3110 used in multiple reference line mode may be located on the upper left of the upper left sample 2410 described above with reference to FIG. 24. A first sample set 3120, a second sample set 3140, a third sample set 3160, and a fourth sample set 3180 may be identified in the lower direction, right direction, upper direction, and left direction of the upper left sample 3110 at coordinates (x-2, y-2), respectively.

In an embodiment, when sample sets are identified based on a reference line that is spaced apart from samples of the left boundary of the current block 2490 and samples of the upper boundary of the current block 2490 by an offset (or sample distance) of 3 in the x-axis direction and/or y-axis direction, coordinates of the upper left sample may be (x-3, y-3). In addition, the first sample set, the second sample set, the third sample set, and the fourth sample set may be identified in the lower direction, right direction, upper direction, and left direction of the upper left sample at coordinates (x-3, y-3), respectively.

In an embodiment, when multiple reference line mode is applied to the current block 2490, the same reference line may be used when deriving the intra prediction mode of the current block 2490 and when generating prediction samples of the current block 2490, and thus the accuracy of prediction may be further enhanced.

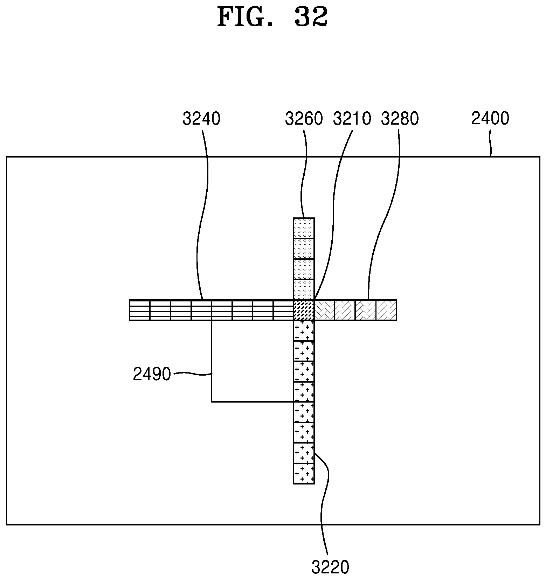

FIG. 32 is a diagram illustrating sample sets used for deriving the intra prediction mode, according to an embodiment, when a right block of the current block is reconstructed before the current block.

In an embodiment, a left block of the current block 2490 may be reconstructed before the current block 2490, or the right block of the current block 2490 may be reconstructed before the current block 2490.

When the left block of the current block 2490 is reconstructed before the current block 2490, as shown in FIG. 24, sample sets may be identified centered on the upper left sample 2410 reconstructed before the current block 2490.

In an embodiment, when the right block of the current block 2490 is reconstructed before the current block 2490, as shown in FIG. 32, sample sets may be identified centered on an upper right sample 3210, which is reconstructed before the current block 2490.

Specifically, a first sample set 3220 may be identified in the downward direction of the upper right sample 3210 reconstructed before the current block 2490, and a second sample set 3240 may be identified from the left direction of the upper right sample 3210. In addition, a third sample set 3260 may be identified in the upward direction of the upper right sample 3210, and a fourth sample set 3280 may be identified in the right direction of the upper right sample 3210.

In an embodiment, when the coordinates of the upper left sample inside the current block 2490 are (x, y), the coordinates of the upper right sample 3210 reconstructed before the current block 2490 may be (x+w, y-1). Here, w may be the width of the current block 2490.

In an embodiment, when coordinates of the upper right sample 3210 are (x+w, y-1), coordinates of samples included in the first sample set 3220 may be (x+2, y) to (x+w, y+a) (a+1 is the number of samples included in the first sample set 3220). In addition, coordinates of the samples included in the second sample set 3240 are (x+2-b, y-1) to (x+w-1, y-1) (b is the number of samples included in the second sample set 3240). In addition, the coordinates of samples included in the third sample set 3260 may be (x+w, y-c) to (x+w, y-2) (c-1 is the number of samples included in the third sample set 3260). In addition, coordinates of the samples included in the fourth sample set 3280 are (x+w+1, y-1) to (x+w+d, y-1) (d is the number of samples included in the fourth sample set 3280).

In an embodiment, to test the directional mode of the first group shown in FIGS. 25A and 25B, the first sample set 3220 or the second sample set 3240 may be used as a reference sample set, and a prediction sample set of the fourth sample set 3280 or the third sample set 3260 may be generated.

In an embodiment, to test the directional mode of the second group shown in FIGS. 26A and 26B, the second sample set 3240 or the third sample set 3260 may be used as a reference sample set, and a prediction sample set of the first sample set 3220 or the fourth sample set 3280 may be generated.

In an embodiment, to test the directional mode of the third group shown in FIGS. 27A and 27B, the fourth sample set 3280 or the third sample set 3260 may be used as a reference sample set, and a prediction sample set of the first sample set 3220 or the second sample set 3240 may be generated.

In an embodiment, to test the horizontal mode shown in FIG. 28, the second sample set 3240 may be used as a reference sample set, and a prediction sample of the upper right sample 3210 may be generated. Alternatively, the upper right sample 3210 may be used as a reference sample, and a prediction sample set of the fourth sample set 3280 may be generated.

In an embodiment, to test the vertical mode shown in FIG. 29, the third sample set 3260 may be used as a reference sample set, and a prediction sample of the upper right sample 3210 may be generated. Alternatively, the upper right sample 3210 may be used as a reference sample, and a prediction sample set of the first sample set 3220 may be generated.

In an embodiment, when the right block of the current block 2490 is reconstructed before the current block 2490, sample sets used for deriving the intra prediction mode of the current block 2490 may be identified based on a reference line spaced apart from samples of the right boundary of the current block 2490 and samples of the upper boundary of the current block 2490 by a certain offset (or sample distance) in the x-axis direction and/or the y-axis direction.

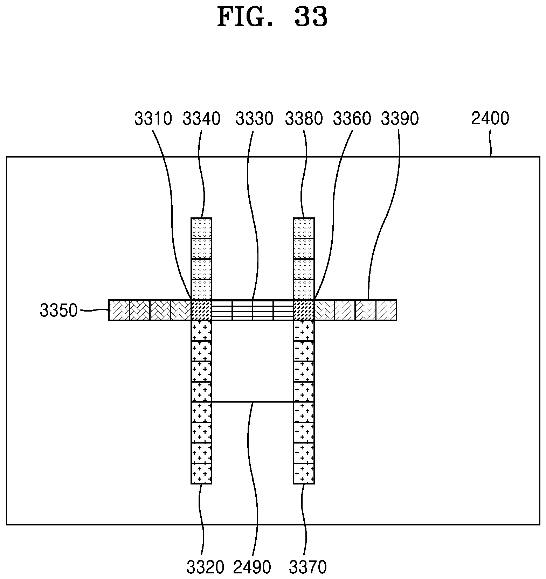

FIG. 33 is a diagram illustrating sample sets used for deriving the intra prediction mode, according to an embodiment, when left and right blocks of the current block are reconstructed before the current block.

In an embodiment, the left block and right block of the current block 2490 may be reconstructed before the current block 2490.

When both the left block and the right block of the current block 2490 are reconstructed before the current block 2490, sample sets may be identified centered on an upper left sample 3310 and upper right sample 3360 reconstructed before the current block 2490.

As shown in FIG. 33, a first sample set 3320 may be identified in the downward direction of the upper left sample 3310 reconstructed before the current block 2490, and a second sample set 3330 may be identified in the right direction of the upper left sample 3310. In addition, a third sample set 3340 may be identified in the upward direction of the upper left sample 3310, and a fourth sample set 3350 may be identified in the left direction of the upper left sample 3310. In addition, a fifth sample set 3370 may be identified in the downward direction of the upper right sample 3360 reconstructed before the current block 2490, a sixth sample set 3380 may be identified in the upward direction of the upper right sample 3360, and a seventh sample set 3390 may be identified in the right direction of the upper right sample 3360.

In an embodiment, the prediction decoder 2030 may test directional modes by using at least one of the upper left sample 3310, the upper right sample 3360, the first sample set 3320, the second sample set 3330, the third sample set 3340, the fourth sample set 3350, the fifth sample set 3370, the sixth sample set 3380, or the seventh sample set 3390.

For example, to test the directional mode of the first group, the first sample set 3320 may be used as a reference sample set, and a prediction sample set of the second sample set 3330 may be generated. Alternatively, the fourth sample set 3350 may be used as a reference sample set, and a prediction sample set of the third sample set 3340 may be generated. Alternatively, the fifth sample set 3370 may be used as a reference sample set, and a prediction sample set of the seventh sample set 3390 may be generated. Alternatively, the second sample set 3330 may be used as a reference sample set, and a prediction sample set of the sixth sample set 3380 may be generated.

In addition, for example, to test the directional mode of the second group, the fourth sample set 3350 may be used as a reference sample set, and a prediction sample set of the first sample set 3320 may be generated. Alternatively, the third sample set 3340 may be used as a reference sample set, and a prediction sample set of the second sample set 3330 may be generated. Alternatively, the second sample set 3330 may be used as a reference sample set, and a prediction sample set of the fifth sample set 3370 may be generated. Alternatively, the sixth sample set 3380 may be used as a reference sample set, and a prediction sample set of the seventh sample set 3390 may be generated.

In addition, for example, to test the directional mode of the third group, the second sample set 3330 may be used as a reference sample set, and a prediction sample set of the first sample set 3320 may be generated. Alternatively, the third sample set 3340 may be used as a reference sample set, and a prediction sample set of the fourth sample set 3350 may be generated. Alternatively, the seventh sample set 3390 may be used as a reference sample set, and a prediction sample set of the fifth sample set 3370 may be generated. Alternatively, the sixth sample set 3380 may be used as a reference sample set, and a prediction sample set of the second sample set 3330 may be generated.

In addition, for example, to test the horizontal mode, the fourth sample set 3350 may be used as a reference sample set, and a prediction sample of the upper left sample 3310 may be generated. Alternatively, the upper left sample 3310 may be used as a reference sample, and a prediction sample set of the second sample set 3330 may be generated. Alternatively, the second sample set 3330 may be used as a reference sample set, and a prediction sample of the upper right sample 3360 may be generated. Alternatively, the upper right sample 3360 may be used as a reference sample, and a prediction sample set of the seventh sample set 3390 may be generated.

In addition, for example, to test the vertical mode, the third sample set 3340 may be used as a reference sample set, and a prediction sample of the upper left sample 3310 may be generated. Alternatively, the upper left sample 3310 may be used as a reference sample, and a prediction sample set of the first sample set 3320 may be generated. Alternatively, the sixth sample set 3380 may be used as a reference sample set, and a prediction sample of the upper right sample 3360 may be generated. Alternatively, the upper right sample 3360 may be used as a reference sample, and a prediction sample set of the fifth sample set 3370 may be generated.

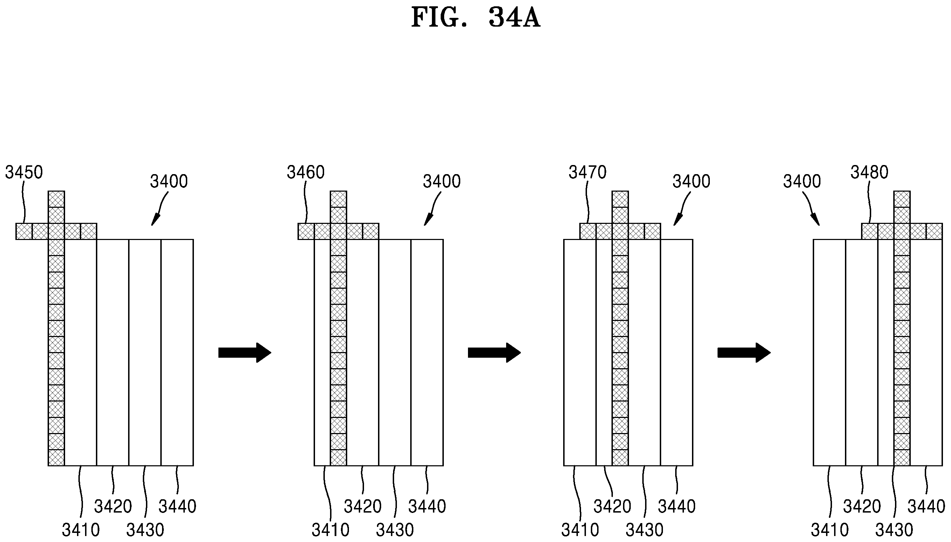

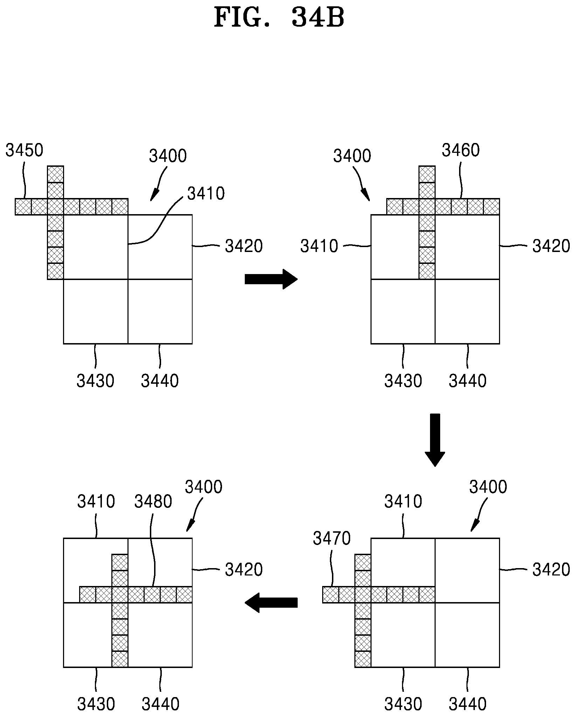

FIGS. 34A and 34B are diagrams for describing a process of, when the current block corresponds to sub-blocks into which an upper block is split, deriving intra prediction modes of each of the sub-blocks into which the upper block is split, according to an embodiment.

As described with reference to FIG. 21, intra sub-partition mode is applied to an upper block including sub-blocks, intra prediction may be independently performed on each of the sub-blocks. In this case, in decoding order, a first sub-block may use samples reconstructed before the upper block as reference samples, and each of sub-blocks decoded after the first sub-block may use samples within decoded sub-blocks as reference samples.

In an embodiment, when the intra sub-partition mode is applied to an upper block including sub-blocks, the prediction decoder 2030 may independently derive intra prediction mode of each of the sub-blocks.

As shown in FIG. 34A, when four sub-blocks 3410, 3420, 3430, and 3440 are determined as an upper block 3400 is vertically split, sample sets 3450, 3460, 3470, and 3480 adjacent to the respective four sub-blocks 3410, 3420, 3430, and 3440 may be used to derive an intra prediction mode of each of the four sub-blocks 3410, 3420, 3430, and 3440.

In an embodiment, the sample set 3450 reconstructed before the upper block 3400 may be used to derive an intra prediction mode of the first sub-block 3410. When the intra prediction mode of the first sub-block 3410 is determined, intra prediction using reference samples reconstructed before the upper block 3400 may be performed on the first sub-block 3410 according to the determined intra prediction mode. In an embodiment, at least a portion of the sample set 3450 reconstructed before the upper block 3400 may be used as a reference sample for intra prediction.

Next, the sample set 3460 reconstructed before the second sub-block 3420 may be used to derive an intra prediction mode of the second sub-block 3420, and at least a portion of the sample set 3460 reconstructed before the second sub-block 3420 may be included in the first sub-block 3410. When the intra prediction mode of the second sub-block 3420 is determined, intra prediction using reference samples reconstructed before the second sub-block 3420 may be performed on the second sub-block 3420 according to the determined intra prediction mode. In an embodiment, at least a portion (for example, a sample included in the first sub-block 3410) of the sample set 3460 reconstructed before the second sub-block 3420 may be used as a reference sample for intra prediction.

Similarly, a sample set 3470 reconstructed before the third sub-block 3430 may be used to derive intra prediction mode of the third sub-block 3430, and at least a portion of the sample set 3470 reconstructed before the third sub-block 3430 may be included in the second sub-block 3420. In addition, the sample set 3480 reconstructed before the fourth sub-block 3440 may be used to derive intra prediction mode of the fourth sub-block 3440, and at least a portion of the sample set 3480 reconstructed before the fourth sub-block 3440 may be included in the third sub-block 3430.

In an embodiment, when intra prediction modes of the second sub-block 3420, the third sub-block 3430, and the fourth sub-block 3440 among the plurality of sub-blocks 3410, 3420, 3430, and 3440 are derived, intra prediction mode of the previous sub-block may be considered. For example, the intra prediction mode of the first sub-block 3410 may be considered when deriving the intra prediction mode of the second sub-block 3420, and the intra prediction mode of the second sub-block 3420 may be considered when deriving the intra prediction mode of the third sub-block 3430. Considering the intra prediction mode of the previous sub-block may mean testing only directional modes that are adjacent to a directional mode of the previous sub-block so as to determine an intra prediction mode of the next sub-block. The directional modes adjacent to the directional mode of the previous sub-block may refer to directional modes having mode numbers that are identical/similar to the mode numbers of the directional mode of the previous sub-block.

For example, when the intra prediction mode of the first sub-block 3410 is directional mode k (k is an integer), the prediction decoder 2030 may test directional mode k-a (a is an integer) to directional mode k+a so as to determine the intra prediction mode of the second sub-block 3420.

FIG. 34A shows that the sub-blocks 3410, 3420, 3430, and 3440 have a rectangular shape, and as shown in FIG. 34B, the sub-blocks 3410, 3420, 3430, and 3440 split from the upper block 3400 may have a square shape.

When four square sub-blocks 3410, 3420, 3430, and 3440 are determined as an upper block 3400 is vertically and horizontally split, sample sets 3450, 3460, 3470, and 3480 adjacent to the respective four sub-blocks 3410, 3420, 3430, and 3440 may be used to derive an intra prediction mode of each of the four sub-blocks 3410, 3420, 3430, and 3440.

In an embodiment, when the first sub-block 3410 has the earliest decoding order in raster scan order, the sample set 3450 reconstructed before the upper block 3400 may be used to derive the intra prediction mode of the first sub-block 3410. When the intra prediction mode of the first sub-block 3410 is determined, intra prediction using reference samples reconstructed before the upper block 3400 may be performed on the first sub-block 3410 according to the determined intra prediction mode. In an embodiment, at least a portion of the sample set 3450 reconstructed before the upper block 3400 may be used as a reference sample for intra prediction.

Next, the sample set 3460 reconstructed before the second sub-block 3420 may be used to derive an intra prediction mode of the second sub-block 3420, and at least a portion of the sample set 3460 reconstructed before the second sub-block 3420 may be included in the first sub-block 3410. When the intra prediction mode of the second sub-block 3420 is determined, intra prediction using reference samples reconstructed before the second sub-block 3420 may be performed on the second sub-block 3420 according to the determined intra prediction mode. In an embodiment, at least a portion (for example, a sample included in the first sub-block 3410) of the sample set 3460 reconstructed before the second sub-block 3420 may be used as a reference sample for intra prediction.

The sample set 3470 reconstructed before the third sub-block 3430 may be used to derive intra prediction mode of the third sub-block 3430, and at least a portion of the sample set 3470 reconstructed before the third sub-block 3430 may be included in the first sub-block 3410.

The sample set 3480 reconstructed before the fourth sub-block 3440 may be used to derive the intra prediction mode of the fourth sub-block 3440, and a portion of the sample set 3480 reconstructed before the fourth sub-block 3440 may be included in the first sub-block 3410, another portion may be included in the second sub-block 3420, and another portion may be included in the third sub-block 3430.

In an embodiment, as described with reference to FIG. 34A, when deriving the intra prediction modes of the second sub-block 3420, the third sub-block 3430, and the fourth sub-block 3440 among the plurality of sub-blocks 3410, 3420, 3430, and 3440, the intra prediction mode of the previous sub-block may be considered. For example, the intra prediction mode of the first sub-block 3410 may be considered when deriving the intra prediction mode of the second sub-block 3420, and the intra prediction mode of at least one of the first sub-block 3410 or the second sub-block 3420 may be considered when deriving the intra prediction mode of the third sub-block 3430. In addition, for example, when deriving the intra prediction mode of the fourth sub-block 3440, the intra prediction mode of at least one of the first sub-block 3410, the second sub-block 3420, or the third sub-block 3430 may be considered.

In an embodiment, when a size (for example, a width, a height, or an area) of the upper block 3400 is greater than or equal to a predetermined minimum size, the upper block 3400 may be split into the sub-blocks 3410, 3420, 3430, and 3440. In other words, the size of the upper block 3400 is greater than or equal to the predetermined minimum size, the intra sub-partition mode may be applied to the upper block 3400.

In an embodiment, the sizes of the sub-blocks 3410, 3420, 3430, and 3440 may be equal to or greater than the predetermined minimum size.

In an embodiment, the minimum size of an upper block that may be split to sub-blocks and/or the minimum size the sub-blocks may have may be predetermined between the image encoding apparatus and the image decoding apparatus 2000.

In an embodiment, information about the minimum size of the upper block that may be split to sub-blocks and/or information about the minimum size that the sub-blocks may have may be transferred from the image encoding apparatus to the image decoding apparatus 2000.

In an embodiment, when the current block 2490 described above corresponds to a sub-block into which the upper block is split, and a sub-block reconstructed before the current block 2490 exists, a sample included in the sub-block reconstructed before the current block 2490 may be included in a sample set for deriving the intra prediction mode of the current block 2490. In an embodiment, an intra prediction mode of a sub-block reconstructed before the current block 2490 may be considered to derive the intra prediction mode of the current block 2490.

In an embodiment, when the current block 2490 described above corresponds to a sub-block into which the upper block is split, and a sub-block reconstructed before the current block 2490 does not exist, a sample outside the upper block that is reconstructed before the current block 2490 may be included in a sample set for deriving the intra prediction mode of the current block 2490.

According to an embodiment, in the intra sub-partition mode, a sample included in the previous sub-block may be used both to derive the intra prediction mode of the next sub-block and to generate prediction samples of the next sub-block, thereby enhancing the prediction accuracy of the sub-blocks.

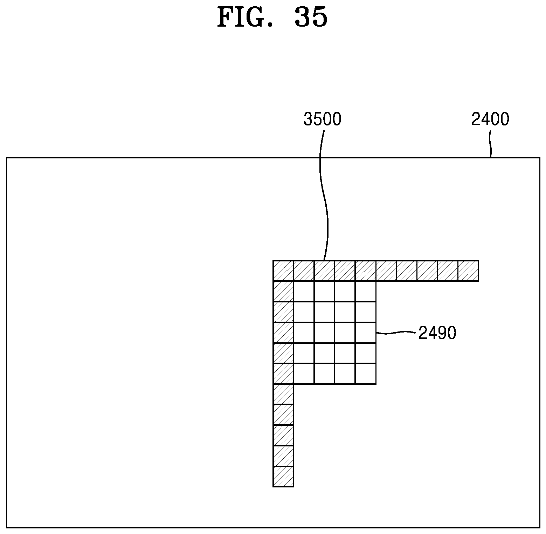

FIG. 35 is a diagram for describing a method of reconstructing the current block through intra prediction using reference samples adjacent to the current block, according to an embodiment.

When the intra prediction mode of the current block 2490 is determined, the prediction decoder 2030 may generate prediction samples of the current block 2490 by using reference samples 3500 adjacent to the current block 2490. In an embodiment, the size of a predicted block including prediction samples may be the same as the size of the current block 2490. In an embodiment, filtering according to the intra prediction mode may be applied to the reference samples 3500.

As shown in FIG. 35, the reference samples 3500 adjacent to the current block 2490 may include samples located to the left of the current block 2490 and samples located to the right of the current block 2490. In an embodiment, at least some of the reference samples 3500 adjacent to the current block 2490 may be included in a sample set that is used to derive the intra prediction mode of the current block 2490.

The prediction decoder 2030 may obtain a reconstructed current block by using a predicted block of the current block 2490.

In an embodiment, the prediction decoder 2030 may determine the predicted block as the reconstructed current block. In an embodiment, the prediction decoder 2030 may generate a reconstructed current block by combining residual data obtained from a bitstream and the predicted block.

Hereinafter, a method of generating a predicted block that is used to determine a reconstructed current block is described.

In an embodiment, when any one directional mode is determined as the intra prediction mode of the current block 2490 through testing a plurality of directional modes, the predicted block of the current block 2490 may be obtained by using reference samples located on a prediction direction indicated by the intra prediction mode.

In an embodiment, when an edge is not included in the sample sets, non-directional mode may be determined as the intra prediction mode of the current block 2490, and the prediction decoder 2030 may obtain the predicted block of the current block 2490 according to the non-directional mode.

In an embodiment, when any one directional mode is selected through testing the plurality of directional modes, the prediction decoder 2030 may generate a first preliminary predicted block through intra prediction according to the selected directional mode. In addition, the prediction decoder 2030 may generate a second preliminary predicted block through intra prediction according to predetermined non-directional mode (for example, a planar mode or a DC mode), and combine the first preliminary predicted block with the second preliminary predicted block to generate a final predicted block. In an embodiment, the final predicted block may be generated through a weighted sum of samples within the first preliminary predicted block and samples within the second preliminary predicted block.

In an embodiment, a directional mode suitable for the current block 2490 may be selected based on cost values corresponding to the respective plurality of directional modes. The prediction decoder 2030 may generate the first preliminary predicted block through intra prediction according to a directional mode corresponding to the smallest cost value, and generate the second preliminary predicted block through intra prediction according to a directional mode corresponding to the next smallest cost value. The prediction decoder 2030 may generate a final predicted block by combining (for example, weighted sum) the first preliminary predicted block with the second preliminary predicted block.

In an embodiment, the prediction decoder 2030 may select two or more directional modes based on cost values corresponding to a plurality of directional modes, and generate two or more preliminary predicted blocks through intra prediction according to the two or more directional modes. In addition, the prediction decoder 2030 may generate a final predicted block by combining (for example, weighted sum) a plurality of preliminary predicted blocks.

In an embodiment, the prediction decoder 2030 may generate two or more preliminary predicted blocks according to two or more directional modes selected based on the cost values corresponding to the plurality of directional modes. The prediction decoder 2030 may generate a final predicted block by combining (for example, weighted sum) two or more preliminary predicted blocks corresponding to two or more directional modes with a preliminary predicted block generated according to non-directional mode.

In an embodiment, the final predicted block may be determined as a reconstructed current block, or a reconstructed current block may be generated from a combination of the final predicted block and residual data.

Hereinafter, a process of obtaining syntax elements related to intra prediction mode of a current block is described.

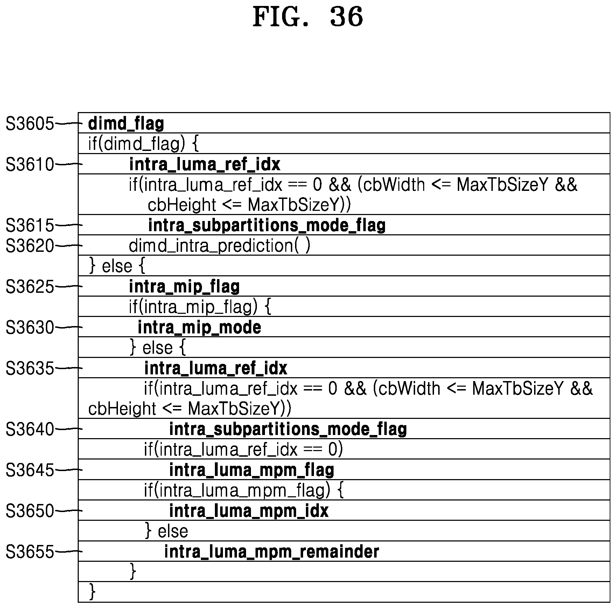

FIGS. 36, 37, 38, 39, and 40 show a syntax structure related to intra prediction mode in a case in which the current block is a luma block.

First, referring to FIG. 36, in S3605, dimd_flag may be obtained from a bitstream. dimd_flag may indicate whether a decoder-side intra prediction mode derivation (dimd) tool is applied to the current block.

The dmid tool may mean a technique for deriving the intra prediction mode of the current block by using sample sets adjacent to the current block.

In the embodiment described above, a directional mode suitable for the current block may be selected through testing directional modes, and thus the dimd tool may be referred to as a cross line prediction (clp) tool.

When dimd_flag indicates that the dimd tool is applied to the current block (for example, when the dimd_flag has a value of 1), intra_luma_ref_idx may be obtained from the bitstream, in S3610. The intra_luma_ref_idx may indicate one of a plurality of reference lines in the multiple reference line mode. As described above with reference to FIG. 22, when intra_luma_ref_idx indicates 0, samples of a line spaced apart from the current block by an offset (or sample distance) of 1 may be used for intra prediction of the current block. In addition, when intra_luma_ref_idx indicates 1, samples of a line spaced apart from the current block by an offset of 2 may be used for intra prediction of the current block. In addition, when intra_luma_ref_idx indicates 2, samples of a line spaced apart from the current block by an offset of 3 may be used for intra prediction of the current block.

When intra_luma_ref_idx indicates 0 and the width (cbWidth) and height (cbHeight) of the current block are equal to or less than a predetermined size (MaxTbSizeY), intra_subpartitions_mode_flag may be obtained from the bitstream, in S3615.

The intra_subpartitions_mode_flag may indicate whether the intra sub-partition mode is applied to the current block. In an embodiment, when the intra_subpartitions_mode_flag indicates that the intra sub-partition mode is applied to the current block, information indicating the split shape of the current block may be further obtained from the bitstream.

Because the intra_subpartitions_mode_flag is obtained when intra_luma_ref_idx indicates 0, it can be seen that the intra sub-partition mode may be applied to the current block only when a line spaced apart from the current block by an offset (or sample distance) of 1 is used for intra prediction of the current block.

When the intra_subpartitions_mode_flag indicates 1, as described with reference to FIG. 21, intra prediction for each of the sub-blocks may be performed independently.

In S3620, dimd_intr_prediction() may be executed. As dimd_intra_prediction() is executed, the intra prediction mode of the current block may be derived based on the sample sets described above.

In an embodiment, when the intra prediction mode of the current block is derived as dimd_intra_prediction() is executed, sample sets necessary for deriving the intra prediction mode of the current block may be identified based on the value indicated by intra_luma_ref_idx, as described with reference to FIG. 31.

In an embodiment, when the intra prediction mode of the current block is derived as dimd_intra_prediction() is executed, the intra prediction mode of each of the sub-blocks split from the current block may be independently determined according to the intra sub-partition mode, as described with reference to FIGS. 34A and 34B. In an embodiment, in deriving the intra prediction mode of the first sub-block in decoding order, samples reconstructed before the current block may be used. To derive an intra prediction mode of a sub-block after the first sub-block, samples adjacent to the corresponding sub-block may be used, and in this case, some of the samples adjacent to the sub-block may be included in a previously-reconstructed sub-block.

When the dimd tool is not applied to the current block (for example, when dimd_flag has a value of 0), intra_mip_flag may be obtained from the bitstream, in step S3625.

The intra_mip_flag may indicate whether the matrix-based intra prediction (mip) tool is applied to the current block, and in the mip tool, prediction samples may be generated through multiplication of a preset matrix and reference samples.

When the mip tool is applied to the current block, in other words, when intra_mip_flag has a value of 1, intra_mip_mode may be obtained from the bitstream in S3630. The intra_mip_mode may indicate the type of matrix used in the mip tool.

When the mip tool is not applied to the current block, in other words, when intra_mip_flag has a value of 0, intra_luma_ref_idx may be obtained from the bitstream in S3635.

When intra_luma_ref_idx indicates 0 and the width (cbWidth) and height (cbHeight) of the current block are equal to or less than a predetermined size (MaxTbSizeY), intra_subpartitions_mode_flag may be obtained from the bitstream, in S3640. In an embodiment, when intra_subpartitions_mode_flag indicates that the intra sub-partition mode is applied to the current block, information indicating the split shape of the current block may be further obtained from the bitstream.

When intra_luma_ref_idx indicates 0, intra_luma_mpm_flag may be obtained in S3645. The intra_luma_mpm_flag may indicate whether the intra prediction mode of the current block is determined from most probable mode (mpm) derived based on the intra prediction mode of peripheral blocks adjacent to the current block.

In an embodiment, when the intra prediction mode of a peripheral block adjacent to the current block is determined according to the dimd tool, the intra prediction mode determined according to the dimd tool may be determined as mpm.

When intra_luma_mpm_flag indicates that the intra prediction mode of the current block is determined from mpm, intra_luma_mpm_idx may be obtained from the bitstream in S3650. The intra_luma_mpm_idx may indicate the intra prediction mode of the current block among the intra prediction modes corresponding to mpm.

When intra_luma_mpm_flag indicates that the intra prediction mode of the current block is not determined from mpm, intra_luma_mpm_remainder may be obtained from the bitstream in S3655. The intra_luma_mpm_remainder may indicate the intra prediction mode of the current block among the intra prediction modes excluding the intra prediction modes corresponding to mpm.

In an embodiment, dimd_flag indicating whether the dimd tool is applied may be included in the bitstream for each block split from an image. For example, dimd_flags for each of the CUs to which the intra mode is applied may be included in the bitstream.

In an embodiment, information indicating whether the dimd tool may be used may be included in the bitstream for an upper block (for example, a slice, tile, or CTU) including the current block, and when the information indicates that the dimd tool may be used, dimd_flag for the current block (for example, the current CU) may be included in the bitstream. When the information indicating whether the DIMD tool can be used indicates that the dimd tool cannot be used, dimd_flags for lower blocks included in the upper block may be omitted from the bitstream.

In an embodiment, information indicating whether the dimd tool may be used may be included in a sequence parameter set, picture parameter set, or slice header of the bitstream. In an embodiment, dimd_flag may be included in slice data of the bitstream.

In an embodiment, when dimd_flag is 1, information indicating whether combining a plurality of preliminary predicted blocks is required to generate the predicted block of the current block may be further included in the bitstream. For example, when combining a plurality of preliminary predicted blocks is required, the prediction decoder 2030 may generate the predicted block of the current block by combining a plurality of preliminary predicted blocks as described with reference to FIG. 35.

In an embodiment, when dimd_flag is 1, it may be determined that the intra sub-partition mode and/or the multiple reference line mode are not applied to the current block. In this case, information related to the intra sub-partition mode (for example, intra_subpartitions_mode_flag) and/or information related to the multiple reference line mode (for example, intra_luma_ref_idx) may be omitted from the bitstream.

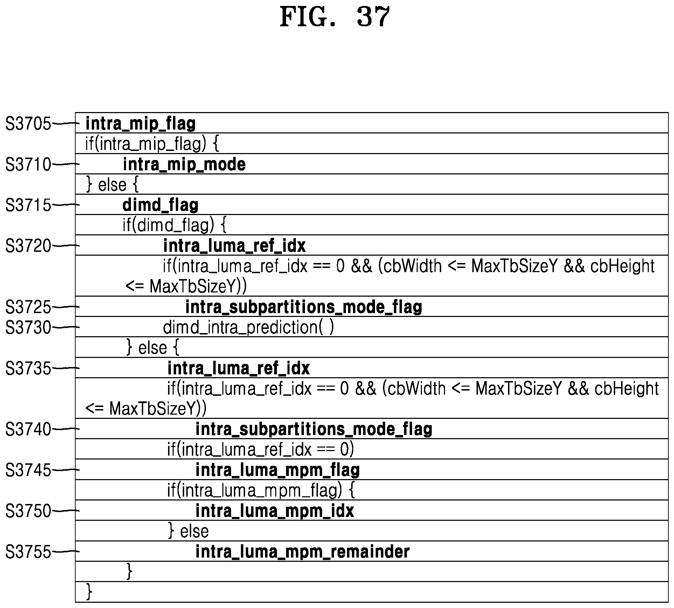

Next, referring to FIG. 37, intra_mip_flag may be obtained from the bitstream in S3705.

When intra_mip_flag indicates that the mip tool is applied to the current block, intra_mip_mode may be obtained from the bitstream in S3710.

When intra_mip_flag indicates that the mip tool is not applied to the current block, dimd_flag may be obtained from the bitstream in S3715.

When dimd_flag indicates that the dimd tool is applied to the current block (for example, when dimd_flag has a value of 1), intra_luma_ref_idx may be obtained from the bitstream in S3720.

When intra_luma_ref_idx indicates 0 and the width (cbWidth) and height (cbHeight) of the current block are equal to or less than a predetermined size (MaxTbSizeY), intra_subpartitions_mode_flag may be obtained from the bitstream in S3725. In an embodiment, when intra_subpartitions_mode_flag indicates that the intra sub-partition mode is applied to the current block, information indicating the split shape of the current block may be further obtained from the bitstream.

In S3730, dimd_intra_prediction() may be executed. As dimd_intra_prediction() is executed, the intra prediction mode of the current block may be derived based on the sample sets described above.

In an embodiment, when the intra prediction mode of the current block is derived as dimd_intra_prediction() is executed, sample sets necessary for deriving the intra prediction mode of the current block may be identified based on the value indicated by intra_luma_ref_idx, as described with reference to FIG. 31.

In an embodiment, when the intra prediction mode of the current block is derived as dimd_intra_prediction() is executed, the intra prediction mode of each of the sub-blocks split from the current block may be independently determined according to the intra sub-partition mode, as described with reference to FIGS. 34A and 34B.

When the dimd tool is not applied to the current block (for example, when dimd_flag has a value of 0), intra_luma_ref_idx may be obtained from the bitstream in S3735.

When intra_luma_ref_idx indicates 0 and the width (cbWidth) and height (cbHeight) of the current block are equal to or less than a predetermined size (MaxTbSizeY), intra_subpartitions_mode_flag may be obtained from the bitstream in S3740.

When intra_luma_ref_idx indicates 0, intra_luma_mpm_flag may be obtained in S3745.

When intra_luma_mpm_flag indicates that the intra prediction mode of the current block is determined from mpm, intra_luma_mpm_idx may be obtained from the bitstream in S3750.

When intra_luma_mpm_flag indicates that the intra prediction mode of the current block is not determined from mpm, intra_luma_mpm_remainder may be obtained from the bitstream in S3755.

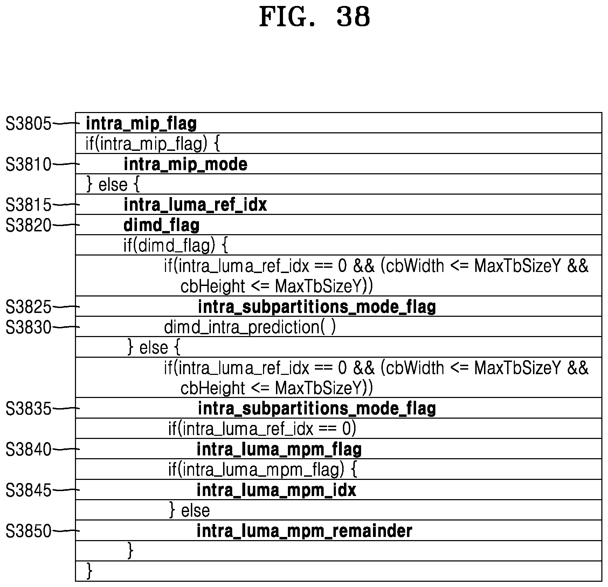

Next, referring to FIG. 38, intra_mip_flag may be obtained from the bitstream in S3805.

When intra_mip_flag indicates that the mip tool is applied to the current block, intra_mip_mode may be obtained from the bitstream in S3810.

When intra_mip_flag indicates that the mip tool is not applied to the current block, intra_luma_ref_idx may be obtained from the bitstream in S3815, and dimd_flag may be obtained from the bitstream in S3820.

When dimd_flag indicates that the dimd tool is applied to the current block (for example, when dimd_flag has a value of 1), if intra_luma_ref_idx indicates 0 and the width (cbWidth) and height (cbHeight) of the current block are equal to or less than a predetermined size (MaxTbSizeY), intra_subpartitions_mode_flag may be obtained from the bitstream in S3825. In an embodiment, when intra_subpartitions_mode_flag indicates that the intra sub-partition mode is applied to the current block, information indicating the split shape of the current block may be further obtained from the bitstream.

In S3830, dimd_intra_prediction() may be executed. As dimd_intra_prediction() is executed, the intra prediction mode of the current block may be derived based on the sample sets described above.

In an embodiment, when the intra prediction mode of the current block is derived as dimd_intra_prediction() is executed, sample sets necessary for deriving the intra prediction mode of the current block may be identified based on the value indicated by intra_luma_ref_idx, as described with reference to FIG. 31.

In an embodiment, when the intra prediction mode of the current block is derived as dimd_intra_prediction() is executed, the intra prediction mode of each of the sub-blocks split from the current block may be independently determined according to the intra sub-partition mode, as described with reference to FIGS. 34A and 34B.

When the dimd tool is not applied to the current block (for example, when dimd_flag has a value of 0), if intra_luma_ref_idx indicates 0 and the width (cbWidth) and height (cbHeight) of the current block are equal to or less than a predetermined size (MaxTbSizeY), intra_subpartitions_mode_flag may be obtained from the bitstream in S3835.

When intra_luma_ref_idx indicates 0, intra_luma_mpm_flag may be obtained in S3840.

When intra_luma_mpm_flag indicates that the intra prediction mode of the current block is determined from mpm, intra_luma_mpm_idx may be obtained from the bitstream in S3845.

When intra_luma_mpm_flag indicates that the intra prediction mode of the current block is not determined from mpm, intra_luma_mpm_remainder may be obtained from the bitstream in S3850.

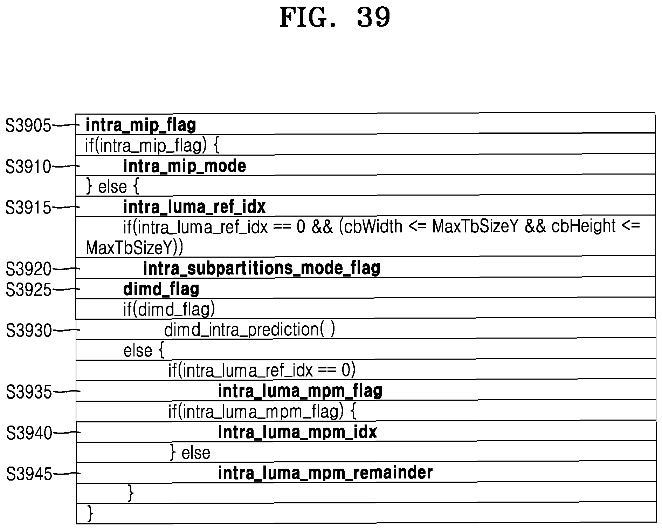

Next, referring to FIG. 39, intra_mip_flag may be obtained from the bitstream in S3905.

When intra_mip_flag indicates that the mip tool is applied to the current block, intra_mip_mode may be obtained from the bitstream in S3910.

When intra_mip_flag indicates that the mip tool is not applied to the current block, intra_luma_ref_idx may be obtained from the bitstream in S3915.

When intra_luma_ref_idx indicates 0 and the width (cbWidth) and height (cbHeight) of the current block are equal to or less than a predetermined size (MaxTbSizeY), intra_subpartitions_mode_flag may be obtained from the bitstream in S3920. In an embodiment, when intra_subpartitions_mode_flag indicates that the intra sub-partition mode is applied to the current block, information indicating the split shape of the current block may be further obtained from the bitstream.

When intra_mip_flag indicates that the mip tool is not applied to the current block, dimd_flag may be obtained from the bitstream in S3925.

When dimd_flag indicates that the dimd tool is applied to the current block (for example, when dimd_flag has a value of 1), dimd_intra_prediction() may be executed in S3930. As dimd_intra_prediction() is executed, the intra prediction mode of the current block may be derived based on the sample sets described above.

In an embodiment, when the intra prediction mode of the current block is derived as dimd_intra_prediction() is executed, sample sets necessary for deriving the intra prediction mode of the current block may be identified based on the value indicated by intra_luma_ref_idx, as described with reference to FIG. 31.

In an embodiment, when the intra prediction mode of the current block is derived as dimd_intra_prediction() is executed, the intra prediction mode of each of the sub-blocks split from the current block may be independently determined according to the intra sub-partition mode, as described with reference to FIGS. 34A and 34B.

When the dimd tool is not applied to the current block (for example, when dimd_flag has a value of 0), if intra_luma_ref_idx indicates 0, intra_luma_mpm_flag may be obtained in S3935.

When intra_luma_mpm_flag indicates that the intra prediction mode of the current block is determined from mpm, intra_luma_mpm_idx may be obtained from the bitstream in S3940.

When intra_luma_mpm_flag indicates that the intra prediction mode of the current block is not determined from mpm, intra_luma_mpm_remainder may be obtained from the bitstream in S3945.

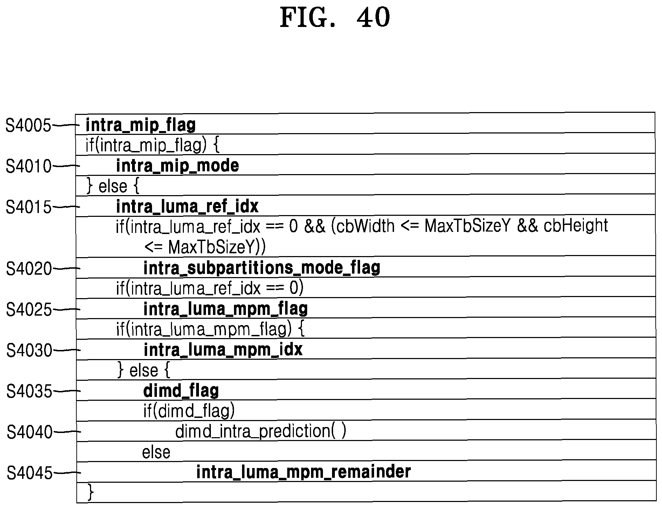

Next, referring to FIG. 40, intra_mip_flag may be obtained from the bitstream in S4005.

When intra_mip_flag indicates that the mip tool is applied to the current block, intra_mip_mode may be obtained from the bitstream in S4010.

When intra_mip_flag indicates that the mip tool is not applied to the current block, intra_luma_ref_idx may be obtained from the bitstream in S4015.

When intra_luma_ref_idx indicates 0 and the width (cbWidth) and height (cbHeight) of the current block are equal to or less than a predetermined size (MaxTbSizeY), intra_subpartitions_mode_flag may be obtained from the bitstream in S4020. In an embodiment, when intra_subpartitions_mode_flag indicates that the intra sub-partition mode is applied to the current block, information indicating the split shape of the current block may be further obtained from the bitstream.

When intra_luma_ref_idx indicates 0, intra_luma_mpm_flag may be obtained in S4025.

When intra_luma_mpm_flag indicates that the intra prediction mode of the current block is determined from mpm, intra_luma_mpm_idx may be obtained from the bitstream in S4030.

When intra_luma_mpm_flag indicates that the intra prediction mode of the current block is not determined from mpm, dimd_flag may be obtained from the bitstream in S4035.

When dimd_flag indicates that the dimd tool is applied to the current block (for example, when dimd_flag has a value of 1), dimd_intra_prediction() may be executed in S4040. As dimd_intra_prediction() is executed, the intra prediction mode of the current block may be derived based on the aforementioned sample sets.

In an embodiment, when the intra prediction mode of the current block is derived as dimd_intra_prediction() is executed, sample sets necessary for deriving the intra prediction mode of the current block may be identified based on the value indicated by intra_luma_ref_idx, as described with reference to FIG. 31.

In an embodiment, when the intra prediction mode of the current block is derived as dimd_intra_prediction() is executed, the intra prediction mode of each of the sub-blocks split from the current block may be independently determined according to the intra sub-partition mode, as described with reference to FIGS. 34A and 34B.

When the dimd tool is not applied to the current block (for example, when dimd_flag has a value of 0), intra_luma_mpm_remainder may be obtained from the bitstream in S4045.

When comparing the syntax structures shown in FIGS. 36 to 40, in FIG. 36, dimd_flag may be obtained first, and in FIG. 37, after intra_mip_flag is obtained, dimd_flag may be obtained when intra_mip_flag indicates 0. In FIG. 38, after intra_mip_flag is obtained, when intra_mip_flag indicates 0, dimd_flag may be obtained following intra_luma_ref_idx. In FIG. 39, after intra_mip_flag is obtained, when intra_mip_flag indicates 0, dimd_flag may be obtained following intra_luma_ref_idx and intra_subpartitions_mode_flag. In FIG. 40, it can be seen that after intra_luma_mpm_flag is obtained, dimd_flag is obtained when intra_luma_mpm_flag indicates 0.

That is, when referring to the syntax structures shown in FIGS. 36 to 40, the dimd_flag according to an embodiment may be included in the bitstream in various orders together with other syntax elements.

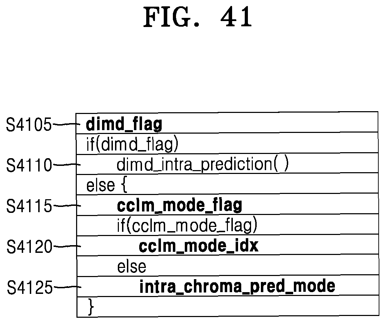

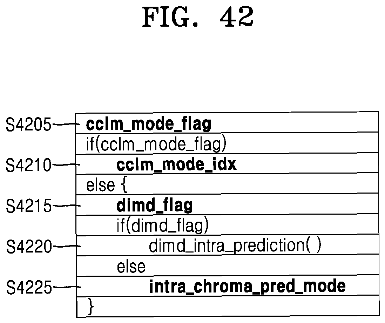

FIGS. 41 and 42 illustrate syntax structures related to intra prediction mode when the current block is a chroma block.

Referring to FIG. 41, dimd_flag may be obtained from the bitstream in S4105. In an embodiment, dimd_flag for the luma block and dimd_flag for the chroma block may be separately included in the bitstream.

When dimd_flag indicates that the dimd tool is applied to the current block (for example, when dimd_flag has a value of 1), dimd_intra_prediction() may be executed in S4110. As dimd_intra_prediction() is executed, the intra prediction mode of the current block may be derived based on the aforementioned sample sets.

When the dimd tool is not applied to the current block (for example, when dimd_flag has a value of 0), cclm_mode_flag may be obtained from the bitstream in S4115. The cclm_mode_flag may indicate whether the cross-component linear model (CCLM) tool is applied to the current block.

The CCLM tool is a technique for determining prediction sample values of a chroma block from sample values of a reconstructed luma block, and may be based on the characteristic of high correlation between the luma block and the chroma block. In the CCLM tool, the sample values of the chroma block may be predicted by applying the sample values of the reconstructed luma block to a linear model.

When the CCLM tool is applied to the current block, cclm_mode_idx may be obtained from the bitstream in S4120. The cclm_mode_idx may indicate any one mode among a plurality of CCLM modes. The position of the sample within the luma block applied to the linear model may vary depending on the CCLM mode.

When the CCLM tool is not applied to the current block, intra_chroma_pred_mode may be obtained from the bitstream in S4125.

The intra_chroma_pred_mode may indicate the intra prediction mode of the current block among a plurality of intra prediction modes. The plurality of intra prediction modes may be predetermined between the image decoding apparatus 2000 and the image encoding apparatus.

In an embodiment, the plurality of intra prediction modes may include a direct mode. When intra_chroma_pred_mode indicates the direct mode, the intra prediction mode of the luma block may be determined as the intra prediction mode of the chroma block.

In the syntax structure shown in FIG. 41, since dimd_flag is obtained for the chroma block separately from the luma block, when the intra prediction mode of the luma block is determined through the dimd tool, the direct mode may be omitted from among the plurality of intra prediction modes that intra_chroma_pred_mode may indicate. This is because, when the dimd_flag of the luma block has a value of 1 and the dimd_flag of the chroma block has a value of 0, if intra_chroma_pred_mode indicates the direct mode, a contradiction may occur where the intra prediction mode of the chroma block is determined according to the dimd tool despite dimd_flag having a value of 0. In summary, in an embodiment, when the intra prediction mode of the luma block is not determined through the dimd tool, intra_chroma_pred_mode may indicate any one of n (n is a natural number greater than 1) intra prediction modes including the direct mode, and when the intra prediction mode of the luma block is determined through the dimd tool, intra_chroma_pred_mode may indicate any one of n-1 intra prediction modes not including the direct mode.

Next, referring to FIG. 42, cclm_mode_flag may be obtained from the bitstream in S4205.

When the CCLM tool is applied to the current block, cclm_mode_idx may be obtained from the bitstream in S4210.

When the CCLM tool is not applied to the current block, dimd_flag may be obtained from the bitstream in S4215. In an embodiment, dimd_flag for the luma block and dimd_flag for the chroma block may be separately included in the bitstream.

When dimd_flag indicates that the dimd tool is applied to the current block (for example, when dimd_flag has a value of 1), dimd_intra_prediction() may be executed in S4220. As dimd_intra_prediction() is executed, the intra prediction mode of the current block may be derived based on the sample sets described above.

When the dimd tool is not applied to the current block (for example, when dimd_flag has a value of 0), intra_chroma_pred_mode may be obtained from the bitstream in S4225.

The intra_chroma_pred_mode may indicate the intra prediction mode of the current block among a plurality of intra prediction modes. The plurality of intra prediction modes may be predetermined, and in an embodiment, the plurality of intra prediction modes may include a direct mode. When intra_chroma_pred_mode indicates the direct mode, the intra prediction mode of the luma block may be determined as the intra prediction mode of the chroma block.

As described with reference to FIG. 41, when the intra prediction mode of the luma block is determined through the dimd tool, the direct mode may be omitted from among the plurality of intra prediction modes that intra_chroma_pred_mode can indicate. In other words, when the intra prediction mode of the luma block is not determined through the dimd tool, intra_chroma_pred_mode may indicate any one of n (n is a natural number greater than 1) intra prediction modes including the direct mode, and when the intra prediction mode of the luma block is determined through the dimd tool, intra_chroma_pred_mode may indicate any one of n-1 intra prediction modes not including the direct mode.

In an embodiment, in the syntax structure shown in FIG. 42, dimd_flag may not be included in the bitstream. Instead, the dimd tool may be included among the plurality of intra prediction modes that intra_chroma_pred_mode may indicate. Therefore, when intra_chroma_pred_mode indicates the dimd tool, the intra prediction mode of the current block may be determined according to the dimd tool.

In an embodiment, values of 0 to k-1 may be assigned to k (k is a natural number greater than 1) intra prediction modes, and the intra prediction mode of the current block may be determined from among the intra prediction modes having values of 0 to k-1 from the bin string corresponding to intra_chroma_pred_mode.

The correspondence relationship between the bin string corresponding to intra_chroma_pred_mode and the value indicated by the bin string may be shown as an example as follows. In the example below, (a, b) may mean that the value a and the bin string b correspond to each other. For example, the bin string of 100 may indicate the value 0.

(0, 100), (1, 101), (2, 110), (3, 111), (4, 00), (5, 01)

The example above represents a case where the number of intra prediction modes that intra_chroma_pred_mode may indicate is 6. The number of intra prediction modes that intra_chroma_pred_mode may indicate is not limited to 6.

In an embodiment, when the dimd tool and the direct mode are included among the intra prediction modes that intra_chroma_pred_mode may indicate, values corresponding to the shortest length bin string, for example, 4 and 5 in the above example, may be assigned to the dimd tool and the direct mode. This is because, when the dimd tool and the direct mode have a high probability of being used in the chroma block, the number of bits included in the bitstream may be reduced by using short length bin strings to indicate values corresponding to the dimd tool and the direct mode.

In an embodiment, when intra_chroma_pred_mode indicates the direct mode and the intra prediction mode of the luma block is determined according to the dimd tool, the intra prediction mode of the luma block determined according to the dimd tool may be determined as the intra prediction mode of the chroma block.

In an embodiment, when intra_chroma_pred_mode indicates the direct mode and the intra prediction mode of the luma block is determined according to the dimd tool, the intra prediction mode of the chroma block may be determined according to the dimd tool.

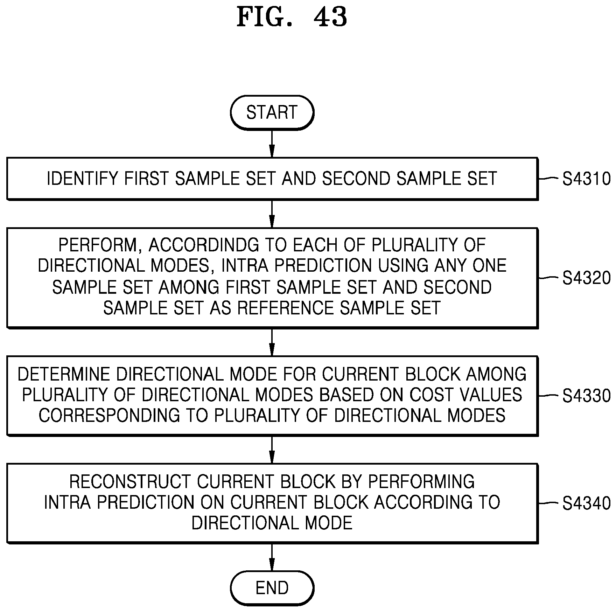

FIG. 43 is a flowchart of an image decoding method according to an embodiment.

In step S4310, the image decoding apparatus 2000 may identify a first sample set and a second sample set reconstructed before the current block.

In an embodiment, the first sample set may be located below the upper left sample reconstructed before the current block, and the second sample set may be located to the right of the upper left sample.

The image decoding apparatus 2000 may identify a third sample set located above the upper left sample and a fourth sample set located to the left of the upper left sample together with the first sample set and the second sample set.

In an embodiment, the image decoding apparatus 2000 may identify sample sets based on a sample spaced apart by a predetermined offset in the x-axis direction and the y-axis direction from the upper-right sample within the current block.

In an embodiment, the image decoding apparatus 2000 may identify sample sets based on a sample spaced apart by a predetermined offset in the x-axis direction and the y-axis direction from the upper left sample within the current block.

In an embodiment, when the upper left sample and some of the samples constituting the sample sets are unavailable, the image decoding apparatus 2000 may determine the sample values of the unavailable samples according to a predetermined method.

In step S4320, the image decoding apparatus 2000 may perform intra prediction using any one of the first sample set and the second sample set as a reference sample set according to each of a plurality of directional modes to obtain a plurality of prediction sample sets corresponding to the other sample set.

In an embodiment, for a directional mode belonging to one group, the first sample set may be used as the reference sample set, and a prediction sample set corresponding to the second sample set may be generated. In addition, for a directional mode belonging to another group, the second sample set may be used as the reference sample set, and a prediction sample set corresponding to the first sample set may be generated.

In an embodiment, for the vertical mode, the upper left sample reconstructed before the current block may be used as the reference sample, and a prediction sample set corresponding to the first sample set may be generated. In addition, for the horizontal mode, the upper left sample reconstructed before the current block may be used as the reference sample, and a prediction sample set corresponding to the second sample set may be generated.

Because the method for generating prediction sample sets based on a plurality of directional modes is described with reference to FIGS. 25A to 29, detailed descriptions thereof are omitted.

In step S4330, the image decoding apparatus 2000 may determine a directional mode for the current block among the plurality of directional modes based on cost values corresponding to the plurality of directional modes.

In an embodiment, the cost values corresponding to the plurality of directional modes may be calculated from comparison results between the plurality of prediction sample sets generated based on the plurality of directional modes and the sample sets to be predicted.

In an embodiment, the cost values may include SAD, SSE, MR-SAD, or MAD between the plurality of prediction sample sets and the sample sets.

In an embodiment, MAD may be used to compare cost values of directional modes belonging to different groups, and SAD, SSE, or MR-SAD may be used to compare cost values of directional modes belonging to the same group. In an embodiment, even for directional modes belonging to different groups, when the number of samples included in the prediction sample sets is the same, SAD, SSE, or MR-SAD may be used.

In an embodiment, when the plurality of directional modes are classified by group, the image decoding apparatus 2000 may select a representative directional mode in each group, compare the cost values of the representative directional modes of each group, and select any one representative directional mode as the directional mode for the current block.

In step S4340, the image decoding apparatus 2000 may reconstruct the current block by performing intra prediction on the current block according to the directional mode for the current block.

When the predicted block of the current block is generated, the image decoding apparatus 2000 may obtain the reconstructed current block from the predicted block.

In an embodiment, the image decoding apparatus 2000 may determine the predicted block as the reconstructed current block. In an embodiment, the image decoding apparatus 2000 may generate the reconstructed current block by combining residual data obtained from the bitstream with the predicted block.

In an embodiment, when no edge is included in the sample sets, the image decoding apparatus 2000 may obtain the predicted block of the current block according to a non-directional mode.

In an embodiment, the image decoding apparatus 2000 may generate a first preliminary predicted block according to the directional mode for the current block, and generate a second preliminary predicted block according to a predetermined non-directional mode (for example, planar mode or DC mode). The image decoding apparatus 2000 may generate a final predicted block by combining the first preliminary predicted block and the second preliminary predicted block.

In an embodiment, the image decoding apparatus 2000 may generate a first preliminary predicted block according to the directional mode corresponding to the smallest cost value among the cost values corresponding to each of the plurality of directional modes, and generate a second preliminary predicted block according to the directional mode corresponding to the next smallest cost value. The image decoding apparatus 2000 may generate a third predicted block by combining (for example, weighted sum) the first preliminary predicted block and the second preliminary predicted block.

In an embodiment, the image decoding apparatus 2000 may select two or more directional modes based on the cost values corresponding to each of the plurality of directional modes, and generate two or more preliminary predicted blocks according to each of the two or more directional modes. In addition, the image decoding apparatus 2000 may generate a final predicted block by combining (for example, weighted sum) the plurality of preliminary predicted blocks.

In an embodiment, the image decoding apparatus 2000 may generate a preliminary predicted block through intra prediction according to a predetermined non-directional mode. The image decoding apparatus 2000 may generate a final predicted block by combining (for example, weighted sum) two or more preliminary predicted blocks generated according to each of the two or more directional modes and the preliminary predicted block generated according to the non-directional mode.

In an embodiment, the final predicted block may be determined as the reconstructed current block, or the reconstructed current block may be generated from a combination of the final predicted block and residual data.

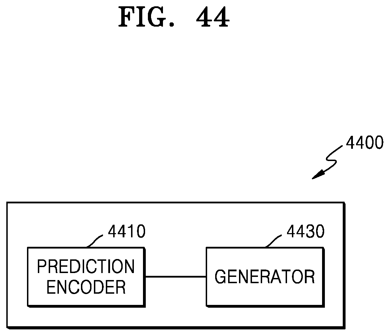

FIG. 44 is a block diagram illustrating a configuration of an image encoding apparatus according to an embodiment.

Referring to FIG. 44, an image encoding apparatus 4400 may include a prediction encoder 4410 and a generator 4430.

The prediction encoder 4410 and the generator 4430 according to an embodiment may be implemented by at least one processor. The at least one processor may include various processing circuitry.

In an embodiment, the prediction encoder 4410 and the generator 4430 may operate according to at least one instruction stored in at least one memory.

The image encoding apparatus 4400 may include at least one memory storing input/output data of the prediction encoder 4410 and the generator 4430. In addition, the image encoding apparatus 4400 may include a memory control unit configured to control data input/output of the memory.

In an embodiment, the prediction encoder 4410 may correspond to the prediction encoder 1915 shown in FIG. 19, and the generator 4430 may correspond to the entropy encoder 1925 shown in FIG. 19.

The prediction encoder 4410 may determine the prediction mode of the current block. The current block may be a CTU, a CU, a transform unit, or a prediction unit split from a current picture to be encoded.

In an embodiment, the current block may be a sub-block split from a CTU, a CU, a transform unit, or a prediction unit. At this time, the CTU, CU, transform unit, or prediction unit including a plurality of sub-blocks may be referred to as an upper block.

In an embodiment, the prediction mode of the current block may be determined as any one of a plurality of prediction modes including intra mode and inter mode.

In an embodiment, when the prediction mode of the current block is intra mode, the prediction encoder 4410 may determine the intra prediction mode of the current block.

The intra prediction mode of the current block may be selected from among a plurality of intra prediction modes. As described with reference to FIG. 23, the plurality of intra prediction modes may include non-directional intra prediction modes and directional intra prediction modes.

In an embodiment, the prediction encoder 4410 performs intra prediction or inter prediction on the current block according to the prediction mode of the current block, and may encode the current block by using a prediction block generated as a result of performing intra prediction or inter prediction.

In an embodiment, encoding of the current block may mean a process of generating information (or syntax elements) necessary for an image decoding apparatus 2000 to reconstruct the current block. Information generated through encoding may be included in a bitstream.

In an embodiment, the prediction encoder 4410 may generate residual data corresponding to a difference between the prediction block and the current block. When the prediction block is determined as the current block, residual data may not be generated. Information on residual data may be transmitted to the image decoding apparatus 2000 through a bitstream.

When the prediction mode of the current block is intra mode, the prediction encoder 4410 according to an embodiment may determine a determination method of an intra prediction mode. Information indicating the determination method of the intra mode may be included in the bitstream.

In an embodiment, the determination method of an intra prediction mode may include a method of deriving an intra prediction mode using a sample set encoded before the current block or a method of selecting an intra prediction mode from among a plurality of intra prediction modes based on cost.

The method of selecting an intra prediction mode based on cost may mean a method of selecting an intra prediction mode that causes the smallest cost when intra prediction is performed on the current block according to a plurality of intra prediction modes.

In an embodiment, information indicating the determination method of an intra prediction mode may be included in a sequence parameter set, a picture parameter set, a slice header, or slice data of the bitstream.

In an embodiment, the prediction encoder 4410 may determine the intra prediction mode of the current block according to a predetermined method between the image decoding apparatus 2000 and an image encoding apparatus 4400.

In an embodiment, when the determination method of an intra prediction mode is a method of selecting any one intra prediction mode from among a plurality of intra prediction modes based on cost, the prediction encoder 4410 may select an intra prediction mode that causes the smallest cost for encoding the current block among the plurality of intra prediction modes. Information indicating the selected intra prediction mode may be included in the bitstream. For example, information indicating the intra prediction mode of the current block may include a flag or an index indicating any one intra prediction mode among a plurality of intra prediction modes.

When the determination method of an intra prediction mode is a method of deriving an intra prediction mode using a sample set encoded before the current block, the prediction encoder 4410 according to an embodiment may derive an intra prediction mode in the same manner as a prediction decoder 2030 according to the embodiment described above with reference to FIGS. 24 to 34.

Because the process of deriving an intra prediction mode by using a sample set is described above, detailed descriptions thereof are omitted here.

When a prediction block is generated through intra prediction on the current block, the prediction encoder 4410 may encode the current block using the prediction block.

The generator 4430 may generate a bitstream including an encoding result of a picture. The bitstream may include an encoding result of the current block.

In an embodiment, the generator 4430 may transmit the bitstream to the image decoding apparatus 2000 through a network.

In an embodiment, the generator 4430 may store the bitstream in a data storage medium including a magnetic medium (for example, a hard disk, a floppy disk, or a magnetic tape), an optical recording medium (for example, CD-ROM or DVD), and a magneto-optical medium (for example, a floptical disk).

The generator 4430 may generate a bitstream including syntax elements generated through encoding of a picture. Values corresponding to the syntax elements may be included in the bitstream according to a syntax structure.

The generator 4430 may obtain bins included in the bitstream by entropy encoding syntax elements.

In an embodiment, the bitstream may include information about a prediction mode of a current block within a current picture.

In an embodiment, when the prediction mode of the current block is intra mode, the bitstream may include information indicating an intra prediction mode of the current block.

In an embodiment, information related to an intra prediction mode may be included in the bitstream according to the syntax structure described with reference to FIGS. 36 to 42.

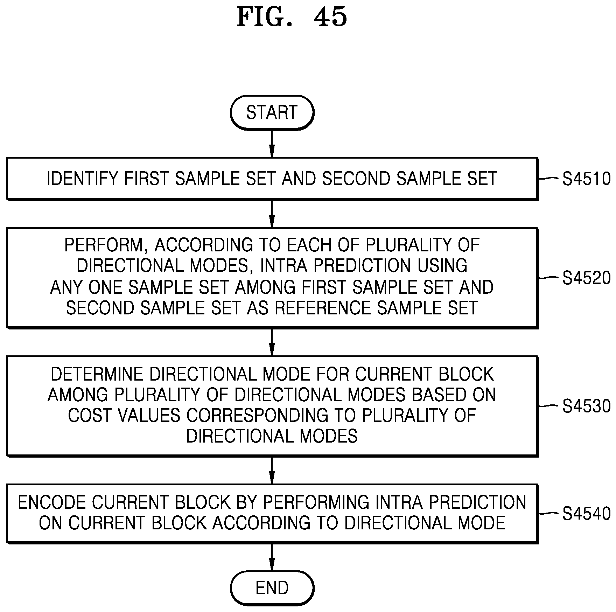

FIG. 45 is a flowchart of an image encoding method according to an embodiment.

In step S4510, the image encoding apparatus 4400 may identify a first sample set and a second sample set encoded before the current block.

In an embodiment, the first sample set may be located below an upper left sample encoded before the current block, and the second sample set may be located to the right of the upper left sample.

The image encoding apparatus 4400 may identify a third sample set located above the upper left sample and a fourth sample set located to the left of the upper left sample together with the first sample set and the second sample set.

In an embodiment, when a right block of the current block is encoded before the current block, the image encoding apparatus 4400 may identify sample sets based on an upper right sample encoded before the current block.

In an embodiment, the image encoding apparatus 4400 may identify sample sets based on a sample spaced apart by a predetermined offset in the x-axis direction and the y-axis direction from an upper left sample within the current block.

In an embodiment, when the upper left sample and some of the samples included in the sample sets are unavailable, the image encoding apparatus 4400 may determine sample values of the unavailable samples according to a predetermined method.

In step S4520, the image encoding apparatus 4400 may perform intra prediction using any one of the first sample set and the second sample set as a reference sample set according to each of a plurality of directional modes to obtain a plurality of prediction sample sets corresponding to the other sample set.

In an embodiment, for a directional mode belonging to one group, the first sample set may be used as the reference sample set, and a prediction sample set corresponding to the second sample set may be generated. In addition, for a directional mode belonging to another group, the second sample set may be used as the reference sample set, and a prediction sample set corresponding to the first sample set may be generated.

In an embodiment, for the vertical mode, an upper left sample encoded before the current block may be used as a reference sample, and a prediction sample set corresponding to the first sample set may be generated. In addition, for the horizontal mode, an upper left sample encoded before the current block may be used as a reference sample, and a prediction sample set corresponding to the second sample set may be generated.

Because the method for generating prediction sample sets based on a plurality of directional modes is described with reference to FIGS. 25A to 29, detailed descriptions thereof are omitted.

In step S4530, the image encoding apparatus 4400 may determine a directional mode for the current block among the plurality of directional modes based on cost values corresponding to the plurality of directional modes.

In an embodiment, cost values corresponding to the plurality of directional modes may be calculated from comparison results between a plurality of prediction sample sets generated based on the plurality of directional modes and sample sets to be predicted

In an embodiment, the cost values may include SAD, SSE, MR-SAD, or MAD between the plurality of prediction sample sets and the sample sets.

In an embodiment, MAD may be used to compare cost values of directional modes belonging to different groups, and SAD, SSE, or MR-SAD may be used to compare cost values of directional modes belonging to the same group. In an embodiment, even for directional modes belonging to different groups, when the number of samples included in the prediction sample sets is the same, SAD, SSE, or MR-SAD may be used.

In an embodiment, when the plurality of directional modes are classified by group, the image encoding apparatus 4400 may select a representative directional mode in each group, compare cost values of the representative directional modes of each group, and select any one representative directional mode as the directional mode for the current block.

In step S4540, the image encoding apparatus 4400 may encode the current block by performing intra prediction on the current block according to the directional mode for the current block. A bitstream may be generated as an encoding result of the current block.

In an embodiment, the image encoding apparatus 4400 may generate residual data by using the current block and the prediction block. Information about the residual data may be included in the bitstream.

In an embodiment, the prediction block may be determined to correspond to the current block. In this case, residual data may not be generated.

In an embodiment, when no edge is included in the sample sets, the image encoding apparatus 4400 may obtain a prediction block of the current block according to a non-directional mode.

In an embodiment, the image encoding apparatus 4400 may generate a first preliminary prediction block according to the directional mode for the current block, and generate a second preliminary prediction block according to a predetermined non-directional mode (for example, planar mode or DC mode). The image encoding apparatus 4400 may generate a final prediction block by combining the first preliminary prediction block and the second preliminary prediction block.

In an embodiment, the image encoding apparatus 4400 may generate a first preliminary prediction block according to a directional mode corresponding to a smallest cost value among cost values corresponding to each of the plurality of directional modes, and may generate a second preliminary prediction block according to a directional mode corresponding to a next smallest cost value. The image encoding apparatus 4400 may generate a final prediction block by combining (for example, weighted sum) the first preliminary prediction block and the second preliminary prediction block.

In an embodiment, the image encoding apparatus 4400 may select two or more directional modes based on cost values corresponding to each of the plurality of directional modes, and may generate two or more preliminary prediction blocks according to each of the two or more directional modes. In addition, the image encoding apparatus 4400 may generate a final prediction block by combining (for example, weighted sum) a plurality of preliminary prediction blocks.

In an embodiment, the image encoding apparatus 4400 may generate a preliminary prediction block through intra prediction according to a predetermined non-directional mode. The image encoding apparatus 4400 may generate a final prediction block by combining (for example, weighted sum) two or more preliminary prediction blocks generated according to each of two or more directional modes and a preliminary prediction block generated according to a non-directional mode.

In an embodiment, residual data between the final prediction block and the current block may be obtained, and information about the residual data may be included in a bitstream.

In an embodiment, the final prediction block may be determined to correspond to the current block. In this case, residual data may not be obtained.

An embodiment aims to accurately derive an intra prediction mode on a decoder side.

An embodiment aims to reduce the number of bits required for signaling an intra prediction mode.

An embodiment aims to reduce a bitrate of a bitstream.

Technical problems to be achieved through the present disclosure are not limited to the technical problems mentioned above, and other technical problems not mentioned will be clearly understood by those having ordinary skill in the technical field to which the present disclosure belongs from the description below.

An image decoding method according to an embodiment may include identifying S4310 a first sample set and a second sample set reconstructed before a current block.

The image decoding method according to an embodiment may include performing S4320 intra prediction by using any one of the first sample set and the second sample set as a reference sample set according to each of a plurality of directional modes to obtain a plurality of prediction sample sets corresponding to the other sample set.

The image decoding method according to an embodiment may include determining S4330 a directional mode for the current block among the plurality of directional modes based on cost values corresponding to comparison results between each of the plurality of prediction sample sets and the other sample set.

The image decoding method according to an embodiment may include reconstructing S4340 the current block by performing intra prediction on the current block according to the determined directional mode.

According to an embodiment, because an intra prediction mode suitable for the current block may be determined by using neighboring sample sets, a bitrate of a bitstream may be reduced.

In an embodiment, the obtaining of the plurality of prediction sample sets may include: obtaining a prediction sample set corresponding to the second sample set by performing intra prediction by using the first sample set as a reference sample set according to a directional mode of a first group; and obtaining a prediction sample set corresponding to the first sample set by performing intra prediction by using the second sample set as a reference sample set according to a directional mode of a second group, and the determining of the directional mode for the current block may include determining a directional mode for the current block among the plurality of directional modes based on a cost value corresponding to the directional mode of the first group and a cost value corresponding to the directional mode of the second group.

According to an embodiment, because directional modes are classified into a plurality of groups for testing thereof, a directional mode suitable for the current block may be determined more accurately.

In an embodiment, the determining of the directional mode for the current block may include: selecting a first representative directional mode among directional modes of the first group based on cost values corresponding to the directional modes of the first group, and selecting a second representative directional mode among directional modes of the second group based on cost values corresponding to the directional modes of the second group; and determining a directional mode for the current block by comparing a cost value corresponding to the first representative directional mode and a cost value corresponding to the second representative directional mode.

According to an embodiment, a directional mode suitable for the current block may be determined more accurately through a comparison process of directional modes of a same group and a comparison process of directional modes of different groups.

In an embodiment, the cost values corresponding to the directional modes of the first group and the cost values corresponding to the directional modes of the second group may include sum of absolute difference (SAD), sum of squared error (SSE), or mean removed SAD (MR-SAD), and the cost value corresponding to the first representative directional mode and the cost value corresponding to the second representative directional mode may include mean of absolute difference (MAD).

According to an embodiment, cost comparison may be performed accurately regardless of the number of samples included in a prediction sample set.

In an embodiment, the first sample set may be located below an upper left sample reconstructed before the current block, and the second sample set may be located to the right of the upper left sample.

According to an embodiment, a directional mode suitable for the current block may be more accurately determined by using sample sets adjacent to the left and right of the current block.

In an embodiment, the identifying may include identifying a third sample set reconstructed before the current block, wherein the third sample set is located above the upper left sample or to the left of the upper left sample, and the obtaining of the plurality of prediction sample sets may include: performing intra prediction by using the third sample set as a reference sample set according to a directional mode of a third group to obtain a prediction sample set corresponding to the first sample set or the second sample set, and the determining of the directional mode for the current block may include determining a directional mode for the current block by further considering a cost value corresponding to the directional mode of the third group.

According to an embodiment, a directional mode suitable for the current block may be more accurately determined by using not only sample sets adjacent to the left and right of the current block but also a sample set located at an upper left of the current block.

In an embodiment, a horizontal mode may exist between the directional mode of the first group and the directional mode of the third group, and a vertical mode may exist between the directional mode of the second group and the directional mode of the third group.

According to an embodiment, by classifying directional modes into various groups, efficient testing of directional modes may be enabled.

In an embodiment, the plurality of directional modes may include a vertical mode and a horizontal mode, and the obtaining of the plurality of prediction sample sets may include: obtaining a prediction sample set of the first sample set by performing intra prediction by using an upper left sample of the current block reconstructed before the current block as a reference sample according to the vertical mode; and obtaining a prediction sample set of the second sample set by performing intra prediction by using the upper left sample of the current block as a reference sample according to the horizontal mode.

According to an embodiment, a directional mode suitable for the current block may be accurately determined among a plurality of directional modes including the vertical mode and the horizontal mode.

In an embodiment, a sample value of an unavailable sample among samples included in the first sample set and the second sample set may be generated based on an available sample closest to the unavailable sample.

According to an embodiment, an intra prediction mode of the current block may be stably derived even when the current block is located around a boundary of an image.

In an embodiment, the identifying of the first sample set and the second sample set includes: determining whether an edge is included in the first sample set and the second sample set; and determining a non-directional mode as an intra prediction mode of the current block when an edge is not included in the first sample set and the second sample set.

According to an embodiment, when a directional mode is not suitable for the current block, accurate intra prediction may be performed by determining a non-directional mode as an intra prediction mode of the current block.

In an embodiment, when the current block corresponds to any one of a plurality of sub-blocks split from a parent block, an intra prediction mode may be independently determined for each of the plurality of sub-blocks.

According to an embodiment, prediction accuracy may be improved by independently determining an intra prediction mode for each sub-block.

In an embodiment, the reconstructing of the current block may include: obtaining a third prediction block by combining a first prediction block generated through intra prediction according to the determined directional mode and a second prediction block generated through intra prediction according to a predetermined non-directional mode; and reconstructing the current block based on the third prediction block.

According to an embodiment, prediction accuracy for the current block may be improved by combining prediction blocks generated according to a plurality of intra prediction modes.

In an embodiment, the image decoding method may include: obtaining first information indicating a determination method of an intra prediction mode from a bitstream; obtaining second information indicating an intra prediction mode of the current block from the bitstream when the determination method of the intra prediction mode is not a method of deriving an intra prediction mode on a decoder side; and reconstructing the current block by performing intra prediction on the current block according to the intra prediction mode indicated by the second information.

According to an embodiment, when it is not appropriate to derive an intra prediction mode of the current block by using a sample set, prediction accuracy of the current block may be improved by including information indicating the intra prediction mode of the current block in the bitstream.

An image encoding method according to an embodiment may include identifying S4510 a first sample set and a second sample set encoded before a current block.

The image encoding method according to an embodiment may include performing S4520 intra prediction by using any one of the first sample set and the second sample set as a reference sample set according to each of a plurality of directional modes to obtain a plurality of prediction sample sets corresponding to the other sample set.

The image encoding method according to an embodiment may include determining S4530 a directional mode for the current block among the plurality of directional modes based on cost values corresponding to comparison results between each of the plurality of prediction sample sets and the other sample set.

The image encoding method according to an embodiment may include encoding S4540 the current block by performing intra prediction on the current block according to the determined directional mode.

According to an embodiment, because an intra prediction mode suitable for the current block may be determined by using neighboring sample sets, a bitrate of a bitstream may be reduced.

A computer-readable recording medium according to an embodiment may record a bitstream including an encoding result of a current block.

In an embodiment, the encoding result of the current block may be generated by identifying a first sample set and a second sample set encoded before the current block.

In an embodiment, the encoding result of the current block may be generated by performing intra prediction by using any one of the first sample set and the second sample set as a reference sample set according to each of a plurality of directional modes to obtain a plurality of prediction sample sets corresponding to the other sample set.

In an embodiment, the encoding result of the current block may be generated by determining a directional mode for the current block among the plurality of directional modes based on cost values corresponding to comparison results between each of the plurality of prediction sample sets and the other sample set.

In an embodiment, the encoding result of the current block may be generated by performing intra prediction on the current block according to the determined directional mode.

According to an embodiment, because an intra prediction mode suitable for the current block may be determined by using neighboring sample sets, a bitrate of a bitstream may be reduced.

An image decoding apparatus 2000 according to an embodiment may include at least one memory storing at least one instruction; and at least one processor.

In an embodiment, the at least one processor may be configured to identify a first sample set and a second sample set reconstructed before the current block.

In an embodiment, the at least one processor may be configured to perform intra prediction by using any one of the first sample set and the second sample set as a reference sample set according to each of a plurality of directional modes to obtain a plurality of prediction sample sets corresponding to the other sample set.

In an embodiment, the at least one processor may be configured to determine a directional mode for the current block among the plurality of directional modes based on cost values corresponding to comparison results between each of the plurality of prediction sample sets and the other sample set.

In an embodiment, the at least one processor may be configured to reconstruct the current block by performing intra prediction on the current block according to the determined directional mode.

According to an embodiment, because an intra prediction mode suitable for the current block may be determined by using neighboring sample sets, a bitrate of a bitstream may be reduced.

An image encoding apparatus 4400 according to an embodiment may include at least one memory storing at least one instruction; and at least one processor.

In an embodiment, the at least one processor may be configured to identify a first sample set and a second sample set encoded before the current block.

In an embodiment, the at least one processor may be configured to perform intra prediction by using any one of the first sample set and the second sample set as a reference sample set according to each of a plurality of directional modes to obtain a plurality of prediction sample sets corresponding to the other sample set.

In an embodiment, the at least one processor may be configured to determine a directional mode for the current block among the plurality of directional modes based on cost values corresponding to comparison results between each of the plurality of prediction sample sets and the other sample set.

In an embodiment, the at least one processor may be configured to encode the current block by performing intra prediction on the current block according to the determined directional mode.

In an embodiment, an intra prediction mode may be accurately derived on a decoder side.

In an embodiment, the number of bits required for signaling an intra prediction mode may be reduced.

In an embodiment, a bitrate of a bitstream may be reduced.

Effects obtainable from the present disclosure are not limited to the effects mentioned above, and other effects not mentioned will be clearly understood by those having ordinary skill in the technical field to which the present disclosure belongs from the description below.

Meanwhile, the embodiments of the present disclosure described above may be written as programs executable on a computer, and the written programs may be stored in a machine-readable storage medium.

The machine-readable storage medium may be provided in a form of a non-transitory storage medium. Here, 'non-transitory storage medium' merely means a tangible device and does not include a signal (for example, an electromagnetic wave), and this term does not distinguish between cases where data is semi-permanently stored in a storage medium and cases where data is temporarily stored. For example, 'non-transitory storage medium' may include a buffer where data is temporarily stored.

According to an embodiment, methods according to various embodiments disclosed in the present document may be provided by being included in a computer program product. A computer program product may be traded between a seller and a buyer as a commodity. The computer program product may be distributed in a form of a machine-readable storage medium (for example, compact disc read only memory (CD-ROM)), or may be distributed online through an application store or directly between two user devices (for example, smartphones) (for example, download or upload). In a case of online distribution, at least a portion of the computer program product (for example, a downloadable app) may be at least temporarily stored or temporarily generated in a machine-readable storage medium such as a memory of a manufacturer's server, an application store server, or a relay server.

While the technical idea of the present disclosure is described in detail above with reference to preferred embodiments, the technical idea of the present disclosure is not limited to the embodiments, and various modifications and changes may be made by those having ordinary skill in the art within the scope of the technical idea of the present disclosure.

## Claims

1. An image decoding method comprising:
identifying a first sample set and a second sample set reconstructed before a current block (S4310);
performing intra prediction by using any one of the first sample set and the second sample set as a reference sample set according to each of a plurality of directional modes to obtain a plurality of prediction sample sets corresponding to the other one of the first sample set and the second sample set (S4320);
determining a directional mode for the current block among the plurality of directional modes based on cost values corresponding to comparison results between each of the plurality of prediction sample sets and the other one of the first sample set and the second sample set (S4330); and
reconstructing the current block by performing intra prediction on the current block according to the determined directional mode (S4340).

2. The image decoding method of claim 1, wherein the obtaining of the plurality of prediction sample sets comprises:
obtaining a prediction sample set corresponding to the second sample set by performing intra prediction by using the first sample set as the reference sample set according to a directional mode of a first group; and
obtaining a prediction sample set corresponding to the first sample set by performing intra prediction by using the second sample set as the reference sample set according to a directional mode of a second group, and
the determining of the directional mode for the current block comprises
determining the directional mode for the current block among the plurality of directional modes based on a cost value corresponding to the directional mode of the first group and a cost value corresponding to the directional mode of the second group.

3. The image decoding method of any one of claims 1 to 2, wherein the determining of the directional mode for the current block comprises:
selecting a first representative directional mode among directional modes of the first group based on cost values corresponding to the directional modes of the first group, and selecting a second representative directional mode among directional modes of the second group based on cost values corresponding to the directional modes of the second group; and
determining the directional mode for the current block by comparing a cost value corresponding to the first representative directional mode and a cost value corresponding to the second representative directional mode.

4. The image decoding method of any one of claims 1 to 3, wherein the cost values corresponding to directional modes of a first group and the cost values corresponding to directional modes of a second group include sum of absolute difference (SAD), sum of squared error (SSE), or mean removed SAD (MR-SAD), and
a cost value corresponding to the first representative directional mode and a cost value corresponding to the second representative directional mode include mean of absolute difference (MAD).

5. The image decoding method of any one of claims 1 to 4, wherein the first sample set is located below an upper left sample reconstructed before the current block, and
the second sample set is located to a right of the upper left sample.

6. The image decoding method of any one of claims 1 to 5, wherein the identifying comprises:
identifying a third sample set reconstructed before the current block, wherein the third sample set is located above the upper left sample or to a left of the upper left sample,
the obtaining of the plurality of prediction sample sets comprises:
obtaining a prediction sample set corresponding to the first sample set or the second sample set by performing intra prediction by using the third sample set as a reference sample set according to a directional mode of a third group, and
the determining of the directional mode for the current block comprises:
determining the directional mode for the current block by further considering a cost value corresponding to the directional mode of the third group.

7. The image decoding method of any one of claims 1 to 6, wherein a horizontal mode exists between a directional mode of the first group and a directional mode of the third group, and
a vertical mode exists between a directional mode of the second group and the directional mode of the third group.

8. The image decoding method of any one of claims 1 to 7, wherein the plurality of directional modes include a vertical mode and a horizontal mode, and
the obtaining of the plurality of prediction sample sets comprises:
obtaining a prediction sample set of the first sample set by performing intra prediction by using an upper left sample of the current block reconstructed before the current block as a reference sample according to the vertical mode; and
obtaining a prediction sample set of the second sample set by performing intra prediction by using the upper left sample of the current block as a reference sample according to the horizontal mode.

9. The image decoding method of any one of claims 1 to 8, wherein a sample value of an unavailable sample among samples included in the first sample set and the second sample set is generated based on an available sample closest to the unavailable sample.

10. The image decoding method of any one of claims 1 to 9, wherein the identifying of the first sample set and the second sample set comprises:
determining whether an edge is included in the first sample set and the second sample set; and
determining a non-directional mode as an intra prediction mode of the current block when the edge is not included in the first sample set and the second sample set.

11. The image decoding method of any one of claims 1 to 10, wherein, when the current block corresponds to any one of a plurality of sub-blocks partitioned from a parent block, an intra prediction mode is independently determined for each of the plurality of sub-blocks.

12. The image decoding method of any one of claims 1 to 11, wherein the reconstructing of the current block comprises:
obtaining a third prediction block by combining a first prediction block generated through intra prediction according to the determined directional mode and a second prediction block generated through intra prediction according to a predetermined non-directional mode; and
reconstructing the current block based on the third prediction block.

13. The image decoding method of any one of claims 1 to 12, wherein the image decoding method further comprises:
obtaining, from a bitstream, first information indicating a determination method of an intra prediction mode;
obtaining, from the bitstream, second information indicating an intra prediction mode of the current block when the determination method of the intra prediction mode is not a method of deriving an intra prediction mode on a decoder side; and
reconstructing the current block by performing intra prediction on the current block according to the intra prediction mode indicated by the second information.

14. An image encoding method comprising:
identifying a first sample set and a second sample set encoded before a current block (S4510);
performing intra prediction by using any one of the first sample set and the second sample set as a reference sample set according to each of a plurality of directional modes to obtain a plurality of prediction sample sets corresponding to the other one of the first sample set and the second sample set (S4520);
determining a directional mode for the current block among the plurality of directional modes based on cost values corresponding to comparison results between each of the plurality of prediction sample sets and the other one of the first sample set and the second sample set (S4530); and
encoding the current block by performing intra prediction on the current block according to the determined directional mode (S4540).

15. A method of transmitting a bitstream generated by the image encoding method of claim 14.
